(19) Europäisches Patentamt
European Patent Office
Office européen des brevets

(11) **EP 3 148 196 A1**

(12) **EUROPEAN PATENT APPLICATION**
published in accordance with Art. 153(4) EPC

(43) Date of publication:
**29.03.2017 Bulletin 2017/13**

(51) Int Cl.:
*H04N 21/234* (2011.01)  *H04N 21/236* (2011.01)

(21) Application number: **15796735.7**

(86) International application number:
**PCT/KR2015/005085**

(22) Date of filing: **21.05.2015**

(87) International publication number:
**WO 2015/178690 (26.11.2015 Gazette 2015/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **21.05.2014 US 201462001613 P**

(71) Applicant: **LG Electronics Inc.**
**Yeongdeungpo-gu**
**Seoul 07336 (KR)**

(72) Inventors:
• **LEE, Jangwon**
**Seoul 137-893 (KR)**
• **OH, Sejin**
**Seoul 137-893 (KR)**
• **KO, Woosuk**
**Seoul 137-893 (KR)**
• **HONG, Sungryong**
**Seoul 137-893 (KR)**
• **MOON, Kyoungsoo**
**Seoul 137-893 (KR)**

(74) Representative: **Cabinet Plasseraud**
**66 rue de la Chaussée d'Antin**
**75440 Paris Cedex 09 (FR)**

(54) **BROADCAST SIGNAL TRANSMITTING/RECEIVING METHOD AND DEVICE**

(57)    A broadcast signal receiving device comprises: a signaling parser for extracting signaling information enabling discovery and obtainment of at least one content component of a service; a delivery object processor for restoring at least one delivery object on the basis of the signaling information; and a media decoder for decoding the at least one delivery object.

FIG. 55

**Description**

[Technical Field]

The present invention relates to a method and apparatus for transmitting and receiving a media signal, and more particularly, to a method and apparatus for processing data of media transmitted in a broadband and broadcast in a broadcast system with a combination of a broadband and broadcast.

[Background Art]

In a digital broadcast system, transmission and reception of IP-based broadcast signals have been extended. In particular, in mobile digital broadcast such as DVB-NGH of European broadcast standards or ATSC-MH of North American standards, importance of an environment for transmission and reception of IP-based broadcast signals has been emphasized. In addition, in a next-generation broadcast system, it is predicted that a service with interaction between a broadcast network and the Internet, that is, a so-called hybrid broadcast system will be established.
A hybrid broadcast system uses both a method of transmitting data through a typical broadcast network and a method of transmitting data through a broadband network and, thus, there is a problem in that a method for processing these data is different from a typical broadcast receiver.
In addition, the hybrid broadcast system generates one media using both the data transmitted through the broadcast network and the data transmitted through the broadband network. In this procedure, there is a problem in that the data transmitted through the broadcast network and the data transmitted through the broadband network may have different timings and may not be synchronized with each other.

[Disclosure]

[Technical Problem]

An object of the present invention devised to solve the problem lies in a method and apparatus for appropriately processing data because a hybrid broadcast system uses a both a method of transmitting data through a typical broadcast network and a method of transmitting data through a broadband network.
An object of the present invention devised to solve the problem lies in a method and apparatus for appropriately matching timing and synchronization between data transmitted through a broadcast network and data transmitted through a broadband network while a hybrid broadcast system generates one media using both the data transmitted through the broadcast network and the data transmitted through the broadband network.
An object of the present invention devised to solve the problem lies in a session starting and terminating method using segment URL information including a segment number.
An object of the present invention devised to solve the problem lies in a session starting and terminating method using representation ID information and transaction information.

[Technical Solution]

The object of the present invention can be achieved by providing a broadcast signal receiving apparatus including a signaling parser configured to extract signaling information for providing discovery and acquisition of at least one content component of a service, a delivery object processor configured to recover at least one delivery object based on the signaling information, and a media decoder configured to decode the at least one delivery object.
The signaling information may include at least one of first information on a transport session for transmitting the at least one content component of the service and at least one delivery object transmitted through the transport session, and second information including description of DASH media presentation corresponding to the service, the delivery object may be included in the at least one content component of the service and is recovered individually, and the delivery object may be one of a file, a part of the file, a group of the file, hyper text transfer protocol (HTTP) entity, and a group of the HTTP entity.
The delivery object processor may further include a DASH client configured to determine representation to be present and to request a segment related to the delivery object, a DTV control engine configured to map the representation of the signaling information and a transport session identifier (TSI) of the content component, and a ALC/LCT+ client configured to recover at least one delivery object from the transport session based on the TSI.
The second information may include segment uniform resource locator (URL) information indicating URL for access to the segment.
The segment URL information may include at least one of representation ID for identifying the Representation and a segment number for identifying a number of the segment.

The representation may include first representation and second representation, and the ALC/LCT+ client may switch representation to second representation from first representation at a predetermined time point.

When segment URL information related to the first representation a segment URL information related to the second representation are different, the DASH client may determine second representation to be present, and the DTV control engine may map the second representation of the signaling information and the TSI of the content component.

The second information may include at least one of representation ID for identifying the representation and transaction information indicating whether to join a transport session for transmitting the representation.

The transaction information may include at least one of start transaction indicating participation in the transport session and stop transaction indicating termination of the transport session.

Representation may include first representation and second representation, and the ALC/LCT+ client may switch representation to second representation from first representation at a predetermined time point

When the representation ID information for identifying the first representation and the representation ID information for identifying the second representation, the DASH client may determine second representation to be present, and the DTV control engine may map the second representation of the signaling information and the TSI of the content component.

In another aspect of the present invention, provided herein is a broadcast signal transmitting apparatus including a delivery object generator configured to generate at least one delivery object included in at least one content component of a service, a signaling encoder configured to generate signaling information for providing discovery and acquisition of the at least one content component of the service, and a transmitter configured to transmit the at least one delivery object and the signaling information through a unidirectional channel.

The signaling information may include at least one of first information on a transport session for transmitting the at least one content component of the service and at least one delivery object transmitted through the transport session, and second information including description of DASH media presentation corresponding to the service, the delivery object may be recovered individually, and the delivery object may be one of a file, a part of the file, a group of the file, hyper text transfer protocol (HTTP) entity, and a group of the HTTP entity.

The second information may include at least one of segment uniform resource locator (URL) information indicating URL for access to the segment, representation ID information for identifying the representation, and transaction information indicating whether to join a transport session for transmitting the representation.

The segment URL information may include at least one of representation ID for identifying the representation and a segment number for identifying a number of the segment.

[Advantageous Effects]

According to the present invention, in a hybrid broadcast system, data transmitted through an existing broadcast network and data transmitted through a broadband network may be effectively processed together.

According to the present invention, timing or synchronization between data transmitted through an existing broadcast network and data transmitted through a broadband network may be effectively matched.

According to the present invention, effective participation in and/or termination of a transport session may be achieved.

According to the present invention, a transport session may be effectively switched.

[Description of Drawings]

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a structure of an apparatus for transmitting broadcast signals for future broadcast services according to an embodiment of the present invention.

FIG. 2 illustrates an input formatting block according to one embodiment of the present invention.

FIG. 3 illustrates an input formatting block according to another embodiment of the present invention.

FIG. 4 illustrates a BICM block according to an embodiment of the present invention.

FIG. 5 illustrates a BICM block according to another embodiment of the present invention.

FIG. 6 illustrates a frame building block according to one embodiment of the present invention.

FIG. 7 illustrates an OFDM generation block according to an embodiment of the present invention.

FIG. 8 illustrates a structure of an apparatus for receiving broadcast signals for future broadcast services according to an embodiment of the present invention.

FIG. 9 illustrates a frame structure according to an embodiment of the present invention.

FIG. 10 illustrates a signaling hierarchy structure of the frame according to an embodiment of the present invention.

FIG. 11 illustrates preamble signaling data according to an embodiment of the present invention.

FIG. 12 illustrates PLS1 data according to an embodiment of the present invention.

FIG. 13 illustrates PLS2 data according to an embodiment of the present invention.

FIG. 14 illustrates PLS2 data according to another embodiment of the present invention.

FIG. 15 illustrates a logical structure of a frame according to an embodiment of the present invention.

FIG. 16 illustrates PLS mapping according to an embodiment of the present invention.

FIG. 17 illustrates EAC mapping according to an embodiment of the present invention.

FIG. 18 illustrates FIC mapping according to an embodiment of the present invention.

FIG. 19 illustrates an FEC structure according to an embodiment of the present invention.

FIG. 20 illustrates a time interleaving according to an embodiment of the present invention.

FIG. 21 illustrates the basic operation of a twisted row-column block interleaver according to an embodiment of the present invention.

FIG. 22 illustrates an operation of a twisted row-column block interleaver according to another embodiment of the present invention.

FIG. 23 illustrates a diagonal-wise reading pattern of a twisted row-column block interleaver according to an embodiment of the present invention.

FIG. 24 illustrates interlaved XFECBLOCKs from each interleaving array according to an embodiment of the present invention.

FIG. 25 is a diagram illustrating a hybrid broadcast receiver according to an embodiment of the present invention.

FIG. 26 is a diagram illustrating an operation of service scanning by a hybrid broadcast receiver according to an embodiment of the present invention.

FIG. 27 is a diagram illustrating a service selection operation by a hybrid broadcast receiver according to an embodiment of the present invention.

FIG. 28 is a diagram illustrating a service selection operation by a hybrid broadcast receiver according to an embodiment of the present invention.

FIG. 29 is a diagram illustrating a service selection operation by a hybrid broadcast receiver according to another embodiment of the present invention.

FIG. 30 is a block diagram of a hybrid broadcast receiver according to an embodiment of the present invention.

FIG. 31 is a diagram illustrating a service selection operation by a hybrid broadcast receiver according to another embodiment of the present invention.

FIG. 32 is a diagram illustrating a service selection operation by a hybrid broadcast receiver according to another embodiment of the present invention.

FIG. 33 is a diagram illustrating an operation of service selection operation by a hybrid broadcast receiver according to another embodiment of the present invention.

FIG. 34 is a diagram illustrating a service selection operation by a hybrid broadcast receiver according to another embodiment of the present invention.

FIG. 35 illustrates a diagram illustrating an operation of an ALC/LCT+ client according to an embodiment of the present invention.

FIG. 36 is a diagram illustrating an ISO BMFF file according to an embodiment of the present invention.

FIG. 37 is a diagram illustrating an application layer transmission protocol packet according to an embodiment of the present invention.

FIG. 38 is a diagram illustrating an application layer transmission protocol packet when a TSI is mapped to one track and a TOI is mapped to one chunk, according to an embodiment of the present invention.

FIG. 39 is a diagram illustrating setting of characteristics of boxes in an ISO BMFF file in an application layer transmission protocol packet when a TSI is mapped to one track and a TOI is mapped to one chunk, according to an embodiment of the present invention.

FIG. 40 is a diagram illustrating transmission and reception of an application layer transmission protocol packet according to an embodiment of the present invention.

FIG. 41 is a diagram illustrating a structure of an application layer transmission protocol packet according to an embodiment of the present invention.

FIG. 42 is a diagram illustrating processing of an application layer transmission protocol packet according to an embodiment of the present invention.

FIG. 43 is a diagram illustrating a broadcast system according to an embodiment of the present invention.

FIG. 44 is a diagram illustrating timing of processing of a segment in a broadcast system according to an embodiment of the present invention.

FIG. 45 is a diagram illustrating an operation of a broadcast system when MPD is used both in a broadband and broadcast according to an embodiment of the present invention.

FIG. 46 is a timing diagram of processing of a segment in a broadcast system according to another embodiment of the present invention.

FIG. 47 is a diagram illustrating a broadcast system when MPD is used only in a broadband according to another embodiment of the present invention.

FIG. 48 is a diagram illustrating timing of processing of a segment in a broadcast system according to another embodiment of the present invention.

FIG. 49 is a diagram illustrating a broadcast system when MPD is used only in a broadband according to another embodiment of the present invention.

FIG. 50 is a diagram illustrating timing of processing of a segment in a broadcast system according to another embodiment of the present invention.

FIG. 51 is a flowchart illustrating a sequence for transmitting and processing a broadcast signal and a sequence for receiving and processing a broadcast signal according to an embodiment of the present invention.

FIG. 52 is a diagram illustrating a transmitter and a receiver according to an embodiment of the present invention.

FIG. 53 is a diagram illustrating a ROUTE protocol stack according to an embodiment of the present invention.

FIG. 54 is a diagram illustrating a structure of a broadcast signal transmitting apparatus according to an embodiment of the present invention.

FIG. 55 is a diagram illustrating a structure of a broadcast signal receiving apparatus according to an embodiment of the present invention.

FIG. 56 is a diagram illustrating a structure of a delivery object processor according to an embodiment of the present invention.

FIG. 57 is a diagram illustrating a structure of a delivery object processor according to an embodiment of the present invention.

FIG. 58 is a flowchart of a broadcast signal transmitting method according to an embodiment of the present invention.

FIG. 59 is a flowchart of a broadcast signal receiving method according to an embodiment of the present invention.

FIG. 60 is a flowchart of recovery of a delivery object according to an embodiment of the present invention.

[Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention.

Although most terms of elements in this specification have been selected from general ones widely used in the art taking into consideration functions thereof in this specification, the terms may be changed depending on the intention or convention of those skilled in the art or the introduction of new technology. Some terms have been arbitrarily selected by the applicant and their meanings are explained in the following description as needed. Thus, the terms used in this specification should be construed based on the overall content of this specification together with the actual meanings of the terms rather than their simple names or meanings.

The term "signaling" in the present invention may indicate that service information (SI) that is transmitted and received from a broadcast system, an Internet system, and/or a broadcast/Internet convergence system. The service information (SI) may include broadcast service information (e.g., ATSC-SI and/or DVB-SI) received from the existing broadcast systems.

The term "broadcast signal" may conceptually include not only signals and/or data received from a terrestrial broadcast, a cable broadcast, a satellite broadcast, and/or a mobile broadcast, but also signals and/or data received from bidirectional broadcast systems such as an Internet broadcast, a broadband broadcast, a communication broadcast, a data broadcast, and/or VOD (Video On Demand).

The term "PLP" may indicate a predetermined unit for transmitting data contained in a physical layer. Therefore, the term "PLP" may also be replaced with the terms 'data unit' or 'data pipe' as necessary.

A hybrid broadcast service configured to interwork with the broadcast network and/or the Internet network may be used as a representative application to be used in a digital television (DTV) service. The hybrid broadcast service transmits, in real time, enhancement data related to broadcast A/V (Audio/Video) contents transmitted through the terrestrial broadcast network over the Internet, or transmits, in real time, some parts of the broadcast A/V contents over the Internet, such that users can experience a variety of contents.

The present invention provides apparatuses and methods for transmitting and receiving broadcast signals for future broadcast services. Future broadcast services according to an embodiment of the present invention include a terrestrial broadcast service, a mobile broadcast service, a UHDTV service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

While MISO or MIMO uses two antennas in the following for convenience of description, the present invention is applicable to systems using two or more antennas. The present invention may defines three physical layer (PL) profiles - base, handheld and advanced profiles-each optimized to minimize receiver complexity while attaining the performance required for a particular use case. The physical layer (PHY) profiles are subsets of all configurations that a corresponding receiver should implement.

The three PHY profiles share most of the functional blocks but differ slightly in specific blocks and/or parameters. Additional PHY profiles can be defined in the future. For the system evolution, future profiles can also be multiplexed with the existing profiles in a single RF channel through a future extension frame (FEF). The details of each PHY profile are described below.

## 1. Base profile

The base profile represents a main use case for fixed receiving devices that are usually connected to a rooftop antenna. The base profile also includes portable devices that could be transported to a place but belong to a relatively stationary reception category. Use of the base profile could be extended to handheld devices or even vehicular by some improved implementations, but those use cases are not expected for the base profile receiver operation.

Target SNR range of reception is from approximately 10 to 20dB, which includes the 15dB SNR reception capability of the existing broadcast system (e.g. ATSC A/53). The receiver complexity and power consumption is not as critical as in the battery-operated handheld devices, which will use the handheld profile. Key system parameters for the base profile are listed in below table 1.

[Table 1]

| | |
|---|---|
| LDPC codeword length | 16K, 64K bits |
| Constellation size | 4~10 bpcu (bits per channel use) |
| Time de-interleaving memory size | $\leq 2^{19}$ data cells |
| Pilot patterns | Pilot pattern for fixed reception |
| FFT size | 16K, 32K points |

## 2. Handheld profile

The handheld profile is designed for use in handheld and vehicular devices that operate with battery power. The devices can be moving with pedestrian or vehicle speed. The power consumption as well as the receiver complexity is very important for the implementation of the devices of the handheld profile. The target SNR range of the handheld profile is approximately 0 to 10dB, but can be configured to reach below 0dB when intended for deeper indoor reception.

In addition to low SNR capability, resilience to the Doppler Effect caused by receiver mobility is the most important performance attribute of the handheld profile. Key system parameters for the handheld profile are listed in the below table 2.

[Table 2]

| | |
|---|---|
| LDPC codeword length | 16K bits |
| Constellation size | 2~8 bpcu |
| Time de-interleaving memory size | $\leq 2^{18}$ data cells |
| Pilot patterns | Pilot patterns for mobile and indoor reception |
| FFT size | 8K, 16K points |

## 3. Advanced profile

The advanced profile provides highest channel capacity at the cost of more implementation complexity. This profile requires using MIMO transmission and reception, and UHDTV service is a target use case for which this profile is specifically designed. The increased capacity can also be used to allow an increased number of services in a given bandwidth, e.g., multiple SDTV or HDTV services.

The target SNR range of the advanced profile is approximately 20 to 30dB. MIMO transmission may initially use existing elliptically-polarized transmission equipment, with extension to full-power cross-polarized transmission in the future. Key system parameters for the advanced profile are listed in below table 3.

[Table 3]

| LDPC codeword length | 16K, 64K bits |
|---|---|
| Constellation size | 8~12 bpcu |
| Time de-interleaving memory size | $\leq 2^{19}$ data cells |
| Pilot patterns | Pilot pattern for fixed reception |
| FFT size | 16K, 32K points |

In this case, the base profile can be used as a profile for both the terrestrial broadcast service and the mobile broadcast service. That is, the base profile can be used to define a concept of a profile which includes the mobile profile. Also, the advanced profile can be divided advanced profile for a base profile with MIMO and advanced profile for a handheld profile with MIMO. Moreover, the three profiles can be changed according to intention of the designer.

The following terms and definitions may apply to the present invention. The following terms and definitions can be changed according to design.

auxiliary stream: sequence of cells carrying data of as yet undefined modulation and coding, which may be used for future extensions or as required by broadcasters or network operators

base data pipe: data pipe that carries service signaling data

baseband frame (or BBFRAME): set of Kbch bits which form the input to one FEC encoding process (BCH and LDPC encoding)

cell: modulation value that is carried by one carrier of the OFDM transmission

coded block: LDPC-encoded block of PLS1 data or one of the LDPC-encoded blocks of PLS2 data

data pipe: logical channel in the physical layer that carries service data or related metadata, which may carry one or multiple service(s) or service component(s).

data pipe unit: a basic unit for allocating data cells to a DP in a frame.

data symbol: OFDM symbol in a frame which is not a preamble symbol (the frame signaling symbol and frame edge symbol is included in the data symbol)

DP_ID: this 8-bit field identifies uniquely a DP within the system identified by the SYSTEM_ID

dummy cell: cell carrying a pseudo-random value used to fill the remaining capacity not used for PLS signaling, DPs or auxiliary streams

emergency alert channel: part of a frame that carries EAS information data

frame: physical layer time slot that starts with a preamble and ends with a frame edge symbol

frame repetition unit: a set of frames belonging to same or different physical layer profile including a FEF, which is repeated eight times in a super-frame

fast information channel: a logical channel in a frame that carries the mapping information between a service and the corresponding base DP

FECBLOCK: set of LDPC-encoded bits of a DP data

FFT size: nominal FFT size used for a particular mode, equal to the active symbol period Ts expressed in cycles of the elementary period T

frame signaling symbol: OFDM symbol with higher pilot density used at the start of a frame in certain combinations of FFT size, guard interval and scattered pilot pattern, which carries a part of the PLS data

frame edge symbol: OFDM symbol with higher pilot density used at the end of a frame in certain combinations of FFT size, guard interval and scattered pilot pattern

frame-group: the set of all the frames having the same PHY profile type in a super-frame.

future extension frame: physical layer time slot within the super-frame that could be used for future extension, which starts with a preamble

Futurecast UTB system: proposed physical layer broadcasting system, of which the input is one or more MPEG2-TS or IP or general stream(s) and of which the output is an RF signal

input stream: A stream of data for an ensemble of services delivered to the end users by the system.

normal data symbol: data symbol excluding the frame signaling symbol and the frame edge symbol

PHY profile: subset of all configurations that a corresponding receiver should implement

PLS: physical layer signaling data consisting of PLS1 and PLS2

PLS1: a first set of PLS data carried in the FSS symbols having a fixed size, coding and modulation, which carries basic information about the system as well as the parameters needed to decode the PLS2

NOTE: PLS1 data remains constant for the duration of a frame-group.

PLS2: a second set of PLS data transmitted in the FSS symbol, which carries more detailed PLS data about the system and the DPs

PLS2 dynamic data: PLS2 data that may dynamically change frame-by-frame

PLS2 static data: PLS2 data that remains static for the duration of a frame-group

preamble signaling data: signaling data carried by the preamble symbol and used to identify the basic mode of the system

preamble symbol: fixed-length pilot symbol that carries basic PLS data and is located in the beginning of a frame

NOTE: The preamble symbol is mainly used for fast initial band scan to detect the system signal, its timing, frequency offset, and FFT-size.

reserved for future use: not defined by the present document but may be defined in future

super-frame: set of eight frame repetition units

time interleaving block (TI block): set of cells within which time interleaving is carried out, corresponding to one use of the time interleaver memory

TI group: unit over which dynamic capacity allocation for a particular DP is carried out, made up of an integer, dynamically varying number of XFECBLOCKs

NOTE: The TI group may be mapped directly to one frame or may be mapped to multiple frames. It may contain one or more TI blocks.

Type 1 DP: DP of a frame where all DPs are mapped into the frame in TDM fashion

Type 2 DP: DP of a frame where all DPs are mapped into the frame in FDM fashion

XFECBLOCK: set of Ncells cells carrying all the bits of one LDPC FECBLOCK

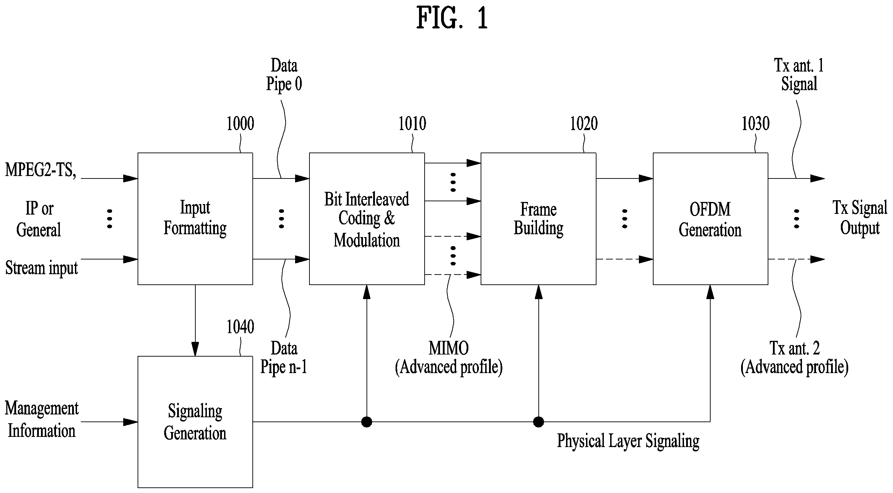

FIG. 1 illustrates a structure of an apparatus for transmitting broadcast signals for future broadcast services according to an embodiment of the present invention.

The apparatus for transmitting broadcast signals for future broadcast services according to an embodiment of the present invention can include an input formatting block 1000, a BICM (Bit interleaved coding & modulation) block 1010, a frame building block 1020, an OFDM (Orthogonal Frequency Division Multiplexing) generation block 1030 and a signaling generation block 1040. A description will be given of the operation of each module of the apparatus for transmitting broadcast signals.

IP stream/packets and MPEG2-TS are the main input formats, other stream types are handled as General Streams. In addition to these data inputs, Management Information is input to control the scheduling and allocation of the corresponding bandwidth for each input stream. One or multiple TS stream(s), IP stream(s) and/or General Stream(s) inputs are simultaneously allowed.

The input formatting block 1000 can demultiplex each input stream into one or multiple data pipe(s), to each of which an independent coding and modulation is applied. The data pipe (DP) is the basic unit for robustness control, thereby affecting quality-of-service (QoS). One or multiple service(s) or service component(s) can be carried by a single DP. Details of operations of the input formatting block 1000 will be described later.

The data pipe is a logical channel in the physical layer that carries service data or related metadata, which may carry one or multiple service(s) or service component(s).

Also, the data pipe unit: a basic unit for allocating data cells to a DP in a frame.

In the BICM block 1010, parity data is added for error correction and the encoded bit streams are mapped to complex-value constellation symbols. The symbols are interleaved across a specific interleaving depth that is used for the corresponding DP. For the advanced profile, MIMO encoding is performed in the BICM block 1010 and the additional data path is added at the output for MIMO transmission. Details of operations of the BICM block 1010 will be described later.

The Frame Building block 1020 can map the data cells of the input DPs into the OFDM symbols within a frame. After mapping, the frequency interleaving is used for frequency-domain diversity, especially to combat frequency-selective fading channels. Details of operations of the Frame Building block 1020 will be described later.

After inserting a preamble at the beginning of each frame, the OFDM Generation block 1030 can apply conventional OFDM modulation having a cyclic prefix as guard interval. For antenna space diversity, a distributed MISO scheme is applied across the transmitters. In addition, a Peak-to-Average Power Reduction (PAPR) scheme is performed in the time domain. For flexible network planning, this proposal provides a set of various FFT sizes, guard interval lengths and corresponding pilot patterns. Details of operations of the OFDM Generation block 1030 will be described later.

The Signaling Generation block 1040 can create physical layer signaling information used for the operation of each functional block. This signaling information is also transmitted so that the services of interest are properly recovered at the receiver side. Details of operations of the Signaling Generation block 1040 will be described later.

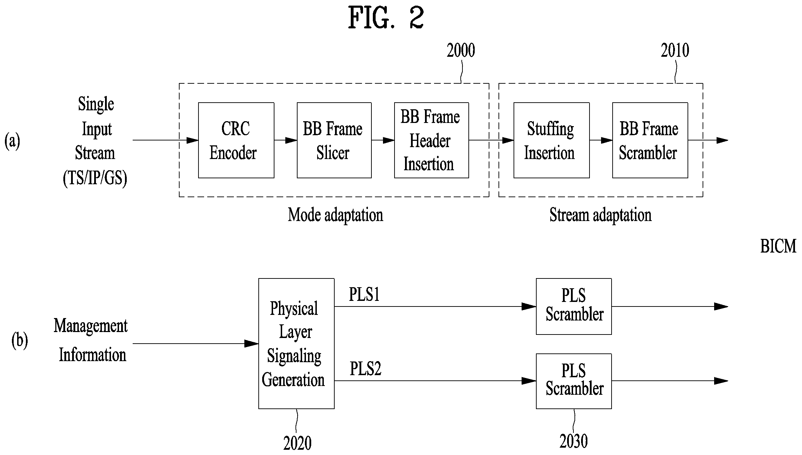

FIGS. 2, 3 and 4 illustrate the input formatting block 1000 according to embodiments of the present invention. A description will be given of each figure.

FIG. 2 illustrates an input formatting block according to one embodiment of the present invention. FIG. 2 shows an input formatting module when the input signal is a single input stream.

The input formatting block illustrated in FIG. 2 corresponds to an embodiment of the input formatting block 1000 described with reference to FIG. 1.

The input to the physical layer may be composed of one or multiple data streams. Each data stream is carried by one DP. The mode adaptation modules slice the incoming data stream into data fields of the baseband frame (BBF). The system supports three types of input data streams: MPEG2-TS, Internet protocol (IP) and Generic stream (GS). MPEG2-TS is characterized by fixed length (188 byte) packets with the first byte being a sync-byte (0x47). An IP stream is composed of variable length IP datagram packets, as signaled within IP packet headers. The system supports both IPv4 and IPv6 for the IP stream. GS may be composed of variable length packets or constant length packets, signaled within encapsulation packet headers.

(a) shows a mode adaptation block 2000 and a stream adaptation 2010 for signal DP and (b) shows a PLS generation block 2020 and a PLS scrambler 2030 for generating and processing PLS data. A description will be given of the operation of each block.

The Input Stream Splitter splits the input TS, IP, GS streams into multiple service or service component (audio, video, etc.) streams. The mode adaptation module 2010 is comprised of a CRC Encoder, BB (baseband) Frame Slicer, and BB Frame Header Insertion block.

The CRC Encoder provides three kinds of CRC encoding for error detection at the user packet (UP) level, i.e., CRC-8, CRC-16, and CRC-32. The computed CRC bytes are appended after the UP. CRC-8 is used for TS stream and CRC-32 for IP stream. If the GS stream doesn't provide the CRC encoding, the proposed CRC encoding should be applied.

BB Frame Slicer maps the input into an internal logical-bit format. The first received bit is defined to be the MSB. The BB Frame Slicer allocates a number of input bits equal to the available data field capacity. To allocate a number of input bits equal to the BBF payload, the UP packet stream is sliced to fit the data field of BBF.

BB Frame Header Insertion block can insert fixed length BBF header of 2 bytes is inserted in front of the BB Frame. The BBF header is composed of STUFFI (1 bit), SYNCD (13 bits), and RFU (2 bits). In addition to the fixed 2-Byte BBF header, BBF can have an extension field (1 or 3 bytes) at the end of the 2-byte BBF header.

The stream adaptation 2010 is comprised of stuffing insertion block and BB scrambler. The stuffing insertion block can insert stuffing field into a payload of a BB frame. If the input data to the stream adaptation is sufficient to fill a BB-Frame, STUFFI is set to '0' and the BBF has no stuffing field. Otherwise STUFFI is set to '1' and the stuffing field is inserted immediately after the BBF header. The stuffing field comprises two bytes of the stuffing field header and a variable size of stuffing data.

The BB scrambler scrambles complete BBF for energy dispersal. The scrambling sequence is synchronous with the BBF. The scrambling sequence is generated by the feed-back shift register.

The PLS generation block 2020 can generate physical layer signaling (PLS) data. The PLS provides the receiver with a means to access physical layer DPs. The PLS data consists of PLS 1 data and PLS2 data.

The PLS1 data is a first set of PLS data carried in the FSS symbols in the frame having a fixed size, coding and modulation, which carries basic information about the system as well as the parameters needed to decode the PLS2 data. The PLS1 data provides basic transmission parameters including parameters required to enable the reception and decoding of the PLS2 data. Also, the PLS1 data remains constant for the duration of a frame-group.

The PLS2 data is a second set of PLS data transmitted in the FSS symbol, which carries more detailed PLS data about the system and the DPs. The PLS2 contains parameters that provide sufficient information for the receiver to decode the desired DP. The PLS2 signaling further consists of two types of parameters, PLS2 Static data (PLS2-STAT data) and PLS2 dynamic data (PLS2-DYN data). The PLS2 Static data is PLS2 data that remains static for the duration of a frame-group and the PLS2 dynamic data is PLS2 data that may dynamically change frame-by-frame.

Details of the PLS data will be described later.

The PLS scrambler 2030 can scramble the generated PLS data for energy dispersal.

The above-described blocks may be omitted or replaced by blocks having similar or identical functions.

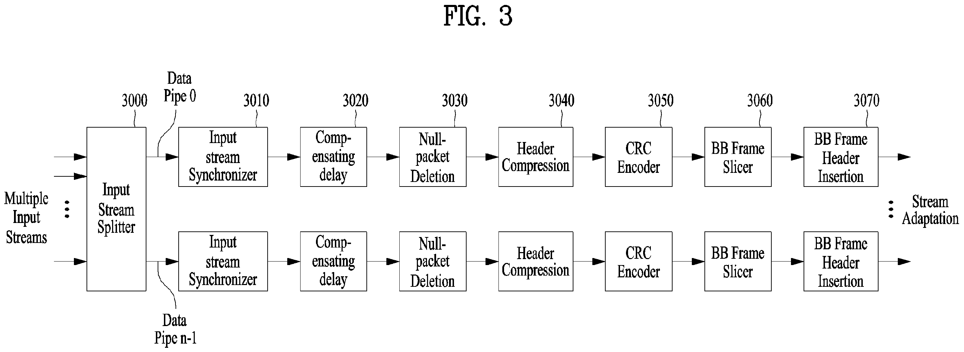

FIG. 3 illustrates an input formatting block according to another embodiment of the present invention.

The input formatting block illustrated in FIG. 3 corresponds to an embodiment of the input formatting block 1000 described with reference to FIG. 1.

FIG. 3 shows a mode adaptation block of the input formatting block when the input signal corresponds to multiple input streams.

The mode adaptation block of the input formatting block for processing the multiple input streams can independently process the multiple input streams.

Referring to FIG. 3, the mode adaptation block for respectively processing the multiple input streams can include an input stream splitter 3000, an input stream synchronizer 3010, a compensating delay block 3020, a null packet deletion block 3030, a head compression block 3040, a CRC encoder 3050, a BB frame slicer 3060 and a BB header insertion block 3070. Description will be given of each block of the mode adaptation block.

Operations of the CRC encoder 3050, BB frame slicer 3060 and BB header insertion block 3070 correspond to those of the CRC encoder, BB frame slicer and BB header insertion block described with reference to FIG. 2 and thus description thereof is omitted.

The input stream splitter 3000 can split the input TS, IP, GS streams into multiple service or service component (audio, video, etc.) streams.

The input stream synchronizer 3010 may be referred as ISSY. The ISSY can provide suitable means to guarantee Constant Bit Rate (CBR) and constant end-to-end transmission delay for any input data format. The ISSY is always used for the case of multiple DPs carrying TS, and optionally used for multiple DPs carrying GS streams.

The compensating delay block 3020 can delay the split TS packet stream following the insertion of ISSY information to allow a TS packet recombining mechanism without requiring additional memory in the receiver.

The null packet deletion block 3030, is used only for the TS input stream case. Some TS input streams or split TS streams may have a large number of null-packets present in order to accommodate VBR (variable bit-rate) services in a CBR TS stream. In this case, in order to avoid unnecessary transmission overhead, null-packets can be identified and not transmitted. In the receiver, removed null-packets can be re-inserted in the exact place where they were originally by reference to a deleted null-packet (DNP) counter that is inserted in the transmission, thus guaranteeing constant bit-rate and avoiding the need for time-stamp (PCR) updating.

The head compression block 3040 can provide packet header compression to increase transmission efficiency for TS or IP input streams. Because the receiver can have a priori information on certain parts of the header, this known information can be deleted in the transmitter.

For Transport Stream, the receiver has a-priori information about the sync-byte configuration (0x47) and the packet length (188 Byte). If the input TS stream carries content that has only one PID, i.e., for only one service component (video, audio, etc.) or service sub-component (SVC base layer, SVC enhancement layer, MVC base view or MVC dependent views), TS packet header compression can be applied (optionally) to the Transport Stream. IP packet header compression is used optionally if the input steam is an IP stream.

The above-described blocks may be omitted or replaced by blocks having similar or identical functions.

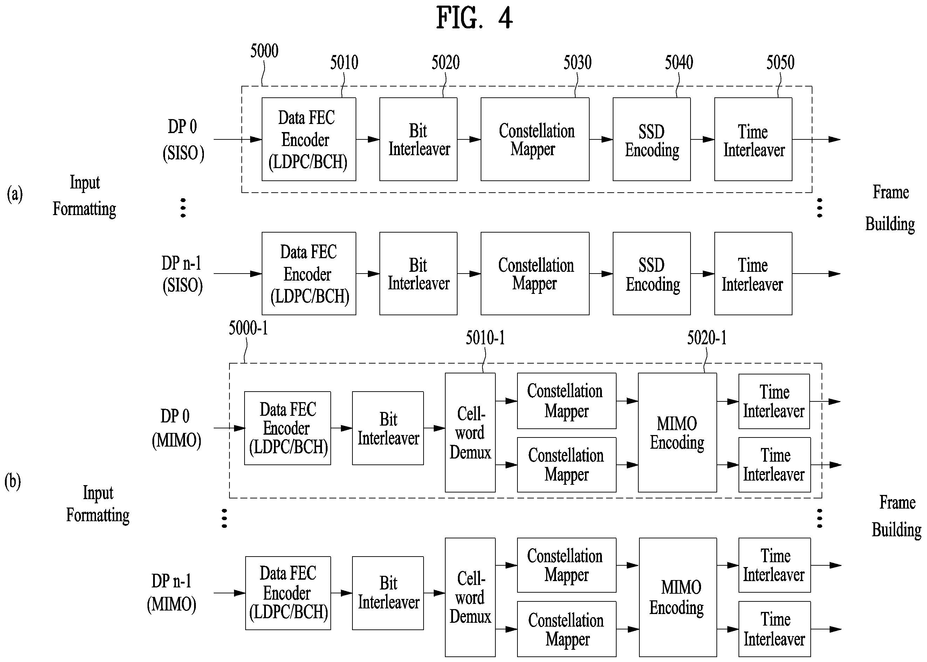

FIG. 4 illustrates a BICM block according to an embodiment of the present invention.

The BICM block illustrated in FIG. 4 corresponds to an embodiment of the BICM block 1010 described with reference to FIG. 1.

As described above, the apparatus for transmitting broadcast signals for future broadcast services according to an embodiment of the present invention can provide a terrestrial broadcast service, mobile broadcast service, UHDTV service, etc.

Since QoS (quality of service) depends on characteristics of a service provided by the apparatus for transmitting broadcast signals for future broadcast services according to an embodiment of the present invention, data corresponding to respective services needs to be processed through different schemes. Accordingly, the a BICM block according to an embodiment of the present invention can independently process DPs input thereto by independently applying SISO, MISO and MIMO schemes to the data pipes respectively corresponding to data paths. Consequently, the apparatus for transmitting broadcast signals for future broadcast services according to an embodiment of the present invention can control QoS for each service or service component transmitted through each DP.

(a) shows the BICM block shared by the base profile and the handheld profile and (b) shows the BICM block of the advanced profile.

The BICM block shared by the base profile and the handheld profile and the BICM block of the advanced profile can include plural processing blocks for processing each DP.

A description will be given of each processing block of the BICM block for the base profile and the handheld profile and the BICM block for the advanced profile.

A processing block 5000 of the BICM block for the base profile and the handheld profile can include a Data FEC encoder 5010, a bit interleaver 5020, a constellation mapper 5030, an SSD (Signal Space Diversity) encoding block 5040 and a time interleaver 5050.

The Data FEC encoder 5010 can perform the FEC encoding on the input BBF to generate FECBLOCK procedure using outer coding (BCH), and inner coding (LDPC). The outer coding (BCH) is optional coding method. Details of operations of the Data FEC encoder 5010 will be described later.

The bit interleaver 5020 can interleave outputs of the Data FEC encoder 5010 to achieve optimized performance with combination of the LDPC codes and modulation scheme while providing an efficiently implementable structure.

Details of operations of the bit interleaver 5020 will be described later.

The constellation mapper 5030 can modulate each cell word from the bit interleaver 5020 in the base and the handheld profiles, or cell word from the Cell-word demultiplexer 5010-1 in the advanced profile using either QPSK, QAM-16, non-uniform QAM (NUQ-64, NUQ-256, NUQ-1024) or non-uniform constellation (NUC-16, NUC-64, NUC-256, NUC-1024) to give a power-normalized constellation point, el. This constellation mapping is applied only for DPs. Observe that QAM-16 and NUQs are square shaped, while NUCs have arbitrary shape. When each constellation is rotated by any multiple of 90 degrees, the rotated constellation exactly overlaps with its original one. This "rotation-sense" symmetric property makes the capacities and the average powers of the real and imaginary components equal to each other. Both NUQs and NUCs are defined specifically for each code rate and the particular one used is signaled by the parameter DP_MOD filed in PLS2 data.

The time interleaver 5050 can operates at the DP level. The parameters of time interleaving (TI) may be set differently for each DP. Details of operations of the time interleaver 5050 will be described later.

A processing block 5000-1 of the BICM block for the advanced profile can include the Data FEC encoder, bit interleaver, constellation mapper, and time interleaver. However, the processing block 5000-1 is distinguished from the processing block 5000 further includes a cell-word demultiplexer 5010-1 and a MIMO encoding block 5020-1.

Also, the operations of the Data FEC encoder, bit interleaver, constellation mapper, and time interleaver in the processing block 5000-1 correspond to those of the Data FEC encoder 5010, bit interleaver 5020, constellation mapper 5030, and time interleaver 5050 described and thus description thereof is omitted.

The cell-word demultiplexer 5010-1 is used for the DP of the advanced profile to divide the single cell-word stream into dual cell-word streams for MIMO processing. Details of operations of the cell-word demultiplexer 5010-1 will be described later.

The MIMO encoding block 5020-1 can processing the output of the cell-word demultiplexer 5010-1 using MIMO encoding scheme. The MIMO encoding scheme was optimized for broadcasting signal transmission. The MIMO technology is a promising way to get a capacity increase but it depends on channel characteristics. Especially for broadcasting, the strong LOS component of the channel or a difference in the received signal power between two antennas caused by different signal propagation characteristics makes it difficult to get capacity gain from MIMO. The proposed MIMO encoding scheme overcomes this problem using a rotation-based pre-coding and phase randomization of one of the MIMO output signals.

MIMO encoding is intended for a 2x2 MIMO system requiring at least two antennas at both the transmitter and the receiver. Two MIMO encoding modes are defined in this proposal; full-rate spatial multiplexing (FR-SM) and full-rate full-diversity spatial multiplexing (FRFD-SM). The FR-SM encoding provides capacity increase with relatively small complexity increase at the receiver side while the FRFD-SM encoding provides capacity increase and additional diversity gain with a great complexity increase at the receiver side. The proposed MIMO encoding scheme has no restriction on the antenna polarity configuration.

MIMO processing is required for the advanced profile frame, which means all DPs in the advanced profile frame are processed by the MIMO encoder. MIMO processing is applied at DP level. Pairs of the Constellation Mapper outputs NUQ (e1,i and e2,i) are fed to the input of the MIMO Encoder. Paired MIMO Encoder output (g1,i and g2,i) is transmitted by the same carrier k and OFDM symbol l of their respective TX antennas.

The above-described blocks may be omitted or replaced by blocks having similar or identical functions.

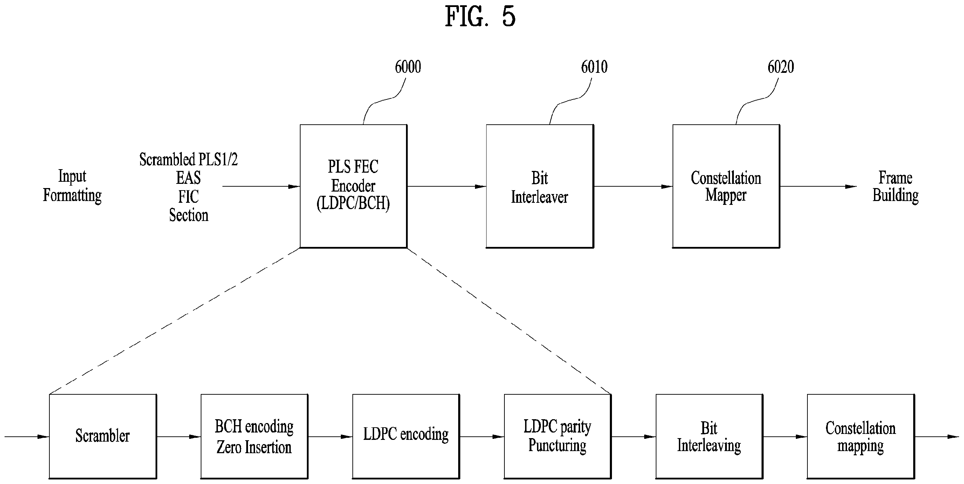

FIG. 5 illustrates a BICM block according to another embodiment of the present invention.

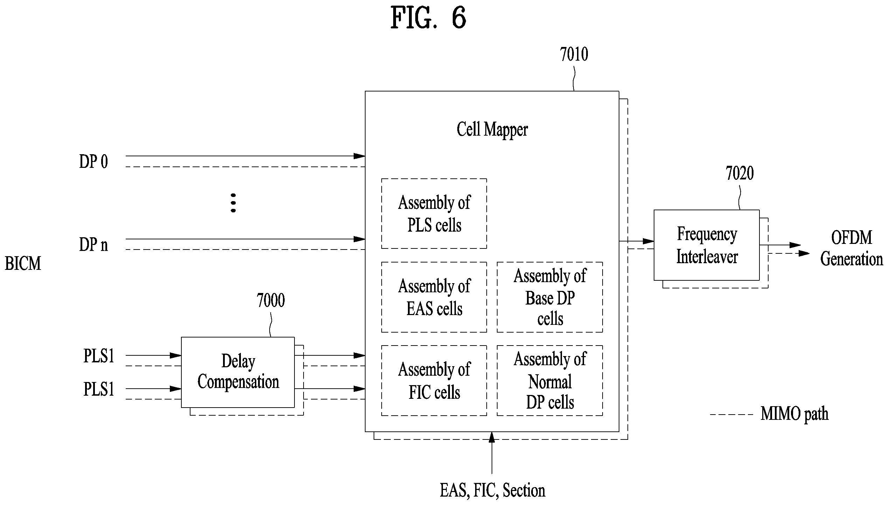

The BICM block illustrated in FIG. 6 corresponds to an embodiment of the BICM block 1010 described with reference to FIG. 1.

FIG. 5 illustrates a BICM block for protection of physical layer signaling (PLS), emergency alert channel (EAC) and fast information channel (FIC). EAC is a part of a frame that carries EAS information data and FIC is a logical channel in a frame that carries the mapping information between a service and the corresponding base DP. Details of the EAC and FIC will be described later.

Referring to FIG. 6, the BICM block for protection of PLS, EAC and FIC can include a PLS FEC encoder 6000, a bit interleaver 6010 and a constellation mapper 6020.

Also, the PLS FEC encoder 6000 can include a scrambler, BCH encoding/zero insertion block, LDPC encoding block and LDPC parity puncturing block. Description will be given of each block of the BICM block.

The PLS FEC encoder 6000 can encode the scrambled PLS 1/2 data, EAC and FIC section.

The scrambler can scramble PLS1 data and PLS2 data before BCH encoding and shortened and punctured LDPC encoding.

The BCH encoding/zero insertion block can perform outer encoding on the scrambled PLS 1/2 data using the shortened BCH code for PLS protection and insert zero bits after the BCH encoding. For PLS 1 data only, the output bits of the zero insertion may be permutted before LDPC encoding.

The LDPC encoding block can encode the output of the BCH encoding/zero insertion block using LDPC code. To generate a complete coded block, Cldpc, parity bits, Pldpc are encoded systematically from each zero-inserted PLS information block, Ildpc and appended after it.

【Equation 1】

$$\mathbf{C}_{ldpc} = [\,\mathbf{I}_{ldpc} \quad \mathbf{P}_{ldpc}\,] = [\,i_0, i_1, \ldots, i_{K_{ldpc}-1}, \ p_0, p_1, \ldots, p_{N_{ldpc}-K_{ldpc}-1}\,]$$

The LDPC code parameters for PLS1 and PLS2 are as following table 4.

[Table 4]

| Signaling Type | $K_{sig}$ | $K_{bch}$ | $N_{bch\_parity}$ | $K_{ldpc}$ (=$N_{bch}$) | $N_{ldpc}$ | $N_{ldpc\_parity}$ | code rate | $Q_{ldpc}$ |
|---|---|---|---|---|---|---|---|---|
| PLS1 | 342 | 1020 | 60 | 1080 | 4320 | 3240 | 1/4 | 36 |
| PLS2 | <1021 | | | | | | | |
| | >1020 | 2100 | | 2160 | 7200 | 5040 | 3/10 | 56 |

The LDPC parity puncturing block can perform puncturing on the PLS1 data and PLS 2 data.

When shortening is applied to the PLS 1 data protection, some LDPC parity bits are punctured after LDPC encoding. Also, for the PLS2 data protection, the LDPC parity bits of PLS2 are punctured after LDPC encoding. These punctured bits are not transmitted.

The bit interleaver 6010 can interleave the each shortened and punctured PLS1 data and PLS2 data.

The constellation mapper 6020 can map the bit ineterlaeved PLS1 data and PLS2 data onto constellations.

The above-described blocks may be omitted or replaced by blocks having similar or identical functions.

FIG. 6 illustrates a frame building block according to one embodiment of the present invention.

The frame building block illustrated in FIG. 6 corresponds to an embodiment of the frame building block 1020 described with reference to FIG. 1.

Referring to FIG. 6, the frame building block can include a delay compensation block 7000, a cell mapper 7010 and a frequency interleaver 7020. Description will be given of each block of the frame building block.

The delay compensation block 7000 can adjust the timing between the data pipes and the corresponding PLS data to ensure that they are co-timed at the transmitter end. The PLS data is delayed by the same amount as data pipes are by addressing the delays of data pipes caused by the Input Formatting block and BICM block. The delay of the BICM block is mainly due to the time interleaver 5050. In-band signaling data carries information of the next TI group so that they are carried one frame ahead of the DPs to be signaled. The Delay Compensating block delays in-band signaling data accordingly.

The cell mapper 7010 can map PLS, EAC, FIC, DPs, auxiliary streams and dummy cells into the active carriers of the OFDM symbols in the frame. The basic function of the cell mapper 7010 is to map data cells produced by the TIs for each of the DPs, PLS cells, and EAC/FIC cells, if any, into arrays of active OFDM cells corresponding to each of the OFDM symbols within a frame. Service signaling data (such as PSI(program specific information)/SI) can be separately gathered and sent by a data pipe. The Cell Mapper operates according to the dynamic information produced by the scheduler and the configuration of the frame structure. Details of the frame will be described later.

The frequency interleaver 7020 can randomly interleave data cells received from the cell mapper 7010 to provide frequency diversity. Also, the frequency interleaver 7020 can operate on very OFDM symbol pair comprised of two sequential OFDM symbols using a different interleaving-seed order to get maximum interleaving gain in a single frame.

The above-described blocks may be omitted or replaced by blocks having similar or identical functions.

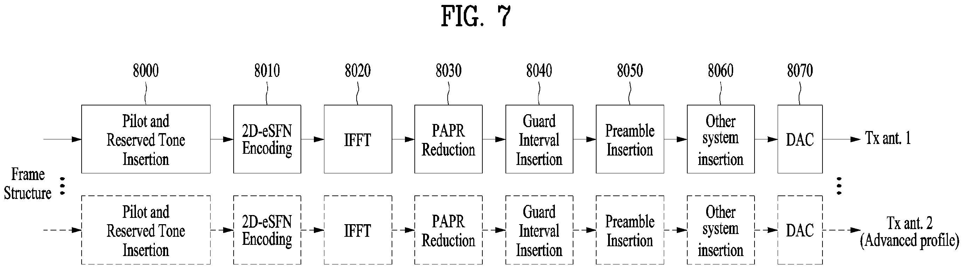

FIG. 7 illustrates an OFDM generation block according to an embodiment of the present invention.

The OFDM generation block illustrated in FIG. 7 corresponds to an embodiment of the OFDM generation block 1030 described with reference to FIG. 1.

The OFDM generation block modulates the OFDM carriers by the cells produced by the Frame Building block, inserts the pilots, and produces the time domain signal for transmission. Also, this block subsequently inserts guard intervals, and applies PAPR (Peak-to-Average Power Radio) reduction processing to produce the final RF signal.

Referring to FIG. 7, the OFDM generation block can include a pilot and reserved tone insertion block 8000, a 2D-eSFN encoding block 8010, an IFFT (Inverse Fast Fourier Transform) block 8020, a PAPR reduction block 8030, a guard interval insertion block 8040, a preamble insertion block 8050, other system insertion block 8060 and a DAC block 8070.

The other system insertion block 8060 can multiplex signals of a plurality of broadcast transmission/reception systems in the time domain such that data of two or more different broadcast transmission/reception systems providing broadcast services can be simultaneously transmitted in the same RF signal bandwidth. In this case, the two or more different broadcast transmission/reception systems refer to systems providing different broadcast services. The different broadcast services may refer to a terrestrial broadcast service, mobile broadcast service, etc.

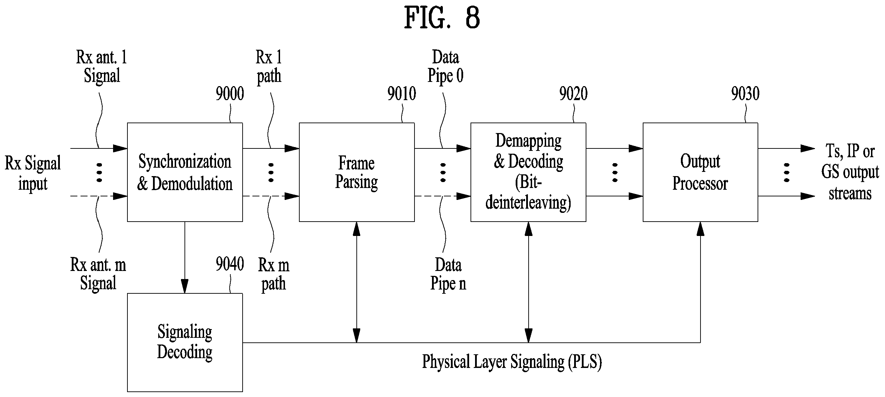

FIG. 8 illustrates a structure of an apparatus for receiving broadcast signals for future broadcast services according to an embodiment of the present invention.

The apparatus for receiving broadcast signals for future broadcast services according to an embodiment of the present invention can correspond to the apparatus for transmitting broadcast signals for future broadcast services, described with reference to FIG. 1.

The apparatus for receiving broadcast signals for future broadcast services according to an embodiment of the present invention can include a synchronization & demodulation module 9000, a frame parsing module 9010, a demapping & decoding module 9020, an output processor 9030 and a signaling decoding module 9040. A description will be given of operation of each module of the apparatus for receiving broadcast signals.

The synchronization & demodulation module 9000 can receive input signals through m Rx antennas, perform signal detection and synchronization with respect to a system corresponding to the apparatus for receiving broadcast signals and carry out demodulation corresponding to a reverse procedure of the procedure performed by the apparatus for transmitting broadcast signals.

The frame parsing module 9010 can parse input signal frames and extract data through which a service selected by a user is transmitted. If the apparatus for transmitting broadcast signals performs interleaving, the frame parsing module 9010 can carry out deinterleaving corresponding to a reverse procedure of interleaving. In this case, the positions of a signal and data that need to be extracted can be obtained by decoding data output from the signaling decoding module 9040 to restore scheduling information generated by the apparatus for transmitting broadcast signals.

The demapping & decoding module 9020 can convert the input signals into bit domain data and then deinterleave the same as necessary. The demapping & decoding module 9020 can perform demapping for mapping applied for transmission efficiency and correct an error generated on a transmission channel through decoding. In this case, the demapping & decoding module 9020 can obtain transmission parameters necessary for demapping and decoding by decoding the data output from the signaling decoding module 9040.

The output processor 9030 can perform reverse procedures of various compression/signal processing procedures which are applied by the apparatus for transmitting broadcast signals to improve transmission efficiency. In this case, the output processor 9030 can acquire necessary control information from data output from the signaling decoding module 9040. The output of the output processor 8300 corresponds to a signal input to the apparatus for transmitting broadcast signals and may be MPEG-TSs, IP streams (v4 or v6) and generic streams.

The signaling decoding module 9040 can obtain PLS information from the signal demodulated by the synchronization & demodulation module 9000. As described above, the frame parsing module 9010, demapping & decoding module 9020 and output processor 9030 can execute functions thereof using the data output from the signaling decoding module 9040.

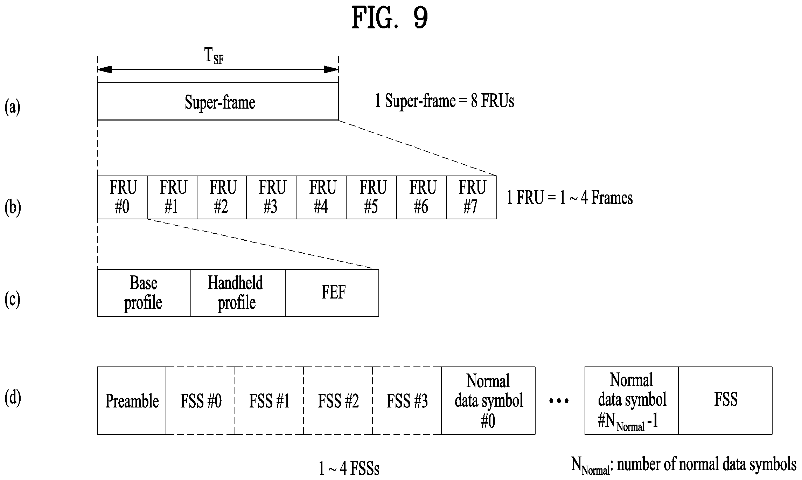

FIG. 9 illustrates a frame structure according to an embodiment of the present invention.

FIG. 9 shows an example configuration of the frame types and FRUs in a super-frame. (a) shows a super frame according to an embodiment of the present invention, (b) shows FRU (Frame Repetition Unit) according to an embodiment of the present invention, (c) shows frames of variable PHY profiles in the FRU and (d) shows a structure of a frame.

A super-frame may be composed of eight FRUs. The FRU is a basic multiplexing unit for TDM of the frames, and is repeated eight times in a super-frame.

Each frame in the FRU belongs to one of the PHY profiles, (base, handheld, advanced) or FEF. The maximum allowed number of the frames in the FRU is four and a given PHY profile can appear any number of times from zero times to four times in the FRU (e.g., base, base, handheld, advanced). PHY profile definitions can be extended using reserved values of the PHY_PROFILE in the preamble, if required.

The FEF part is inserted at the end of the FRU, if included. When the FEF is included in the FRU, the minimum number of FEFs is 8 in a super-frame. It is not recommended that FEF parts be adjacent to each other.

One frame is further divided into a number of OFDM symbols and a preamble. As shown in (d), the frame comprises a preamble, one or more frame signaling symbols (FSS), normal data symbols and a frame edge symbol (FES).

The preamble is a special symbol that enables fast Futurecast UTB system signal detection and provides a set of basic transmission parameters for efficient transmission and reception of the signal. The detailed description of the preamble will be will be described later.

The main purpose of the FSS(s) is to carry the PLS data. For fast synchronization and channel estimation, and hence fast decoding of PLS data, the FSS has more dense pilot pattern than the normal data symbol. The FES has exactly the same pilots as the FSS, which enables frequency-only interpolation within the FES and temporal interpolation, without extrapolation, for symbols immediately preceding the FES.

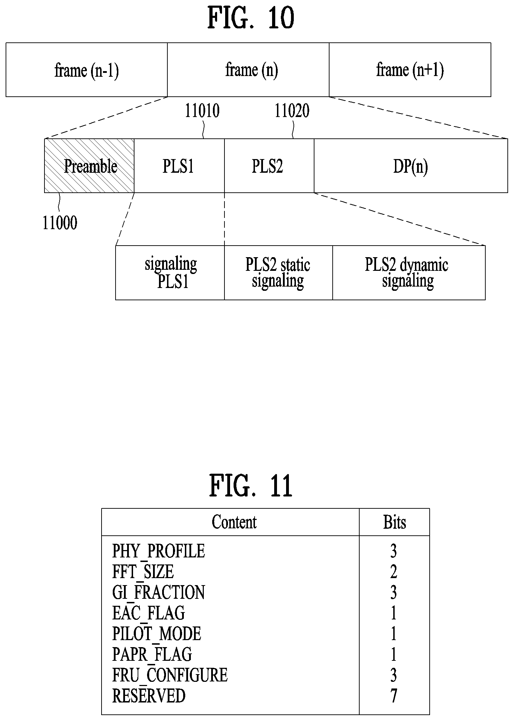

FIG. 10 illustrates a signaling hierarchy structure of the frame according to an embodiment of the present invention.

FIG. 10 illustrates the signaling hierarchy structure, which is split into three main parts: the preamble signaling data 11000, the PLS1 data 11010 and the PLS2 data 11020. The purpose of the preamble, which is carried by the preamble symbol in every frame, is to indicate the transmission type and basic transmission parameters of that frame. The PLS1 enables the receiver to access and decode the PLS2 data, which contains the parameters to access the DP of interest. The PLS2 is carried in every frame and split into two main parts: PLS2-STAT data and PLS2-DYN data. The static and dynamic portion of PLS2 data is followed by padding, if necessary.

FIG. 11 illustrates preamble signaling data according to an embodiment of the present invention.

Preamble signaling data carries 21 bits of information that are needed to enable the receiver to access PLS data and trace DPs within the frame structure. Details of the preamble signaling data are as follows:

PHY_PROFILE: This 3-bit field indicates the PHY profile type of the current frame. The mapping of different PHY profile types is given in below table 5.

[Table 5]

| Value | PHY profile |
|---|---|
| 000 | Base profile |
| 001 | Handheld profile |
| 010 | Advanced profiled |
| 011~110 | Reserved |
| 111 | FEF |

FFT_SIZE: This 2 bit field indicates the FFT size of the current frame within a frame-group, as described in below table 6.

[Table 6]

| Value | FFT size |
|---|---|
| 00 | 8K FFT |
| 01 | 16K FFT |
| 10 | 32K FFT |
| 11 | Reserved |

GI_FRACTION: This 3 bit field indicates the guard interval fraction value in the current super-frame, as described in below table 7.

[Table 7]

| Value | GI FRACTION |
|---|---|
| 000 | 1/5 |
| 001 | 1/10 |
| 010 | 1/20 |
| 011 | 1/40 |
| 100 | 1/80 |
| 101 | 1/160 |
| 110~111 | Reserved |

EAC_FLAG: This 1 bit field indicates whether the EAC is provided in the current frame. If this field is set to '1', emergency alert service (EAS) is provided in the current frame. If this field set to '0', EAS is not carried in the current frame. This field can be switched dynamically within a super-frame.

PILOT_MODE: This 1-bit field indicates whether the pilot mode is mobile mode or fixed mode for the current frame in the current frame-group. If this field is set to '0', mobile pilot mode is used. If the field is set to '1', the fixed pilot mode is used.

PAPR_FLAG: This 1-bit field indicates whether PAPR reduction is used for the current frame in the current frame-group. If this field is set to value '1', tone reservation is used for PAPR reduction. If this field is set to '0', PAPR reduction is not used.

FRU_CONFIGURE: This 3-bit field indicates the PHY profile type configurations of the frame repetition units (FRU) that are present in the current super-frame. All profile types conveyed in the current super-frame are identified in this field in all preambles in the current super-frame. The 3-bit field has a different definition for each profile, as show in below table 8.

[Table 8]

|  | Current PHY_PROFILE = '000' (base) | Current PHY_PROFILE = '001' (handheld) | Current PHY_PROFILE = '010' (advanced) | Current PHY_PROFILE = '111' (FEF) |
|---|---|---|---|---|
| FRU_CONFIGURE = 000 | Only base profile present | Only handheld profile present | Only advanced profile present | Only FEF present |
| FRU_CONFIGURE = 1XX | Handheld profile present | Base profile present | Base profile present | Base profile present |
| FRU_CONFIGURE = X1X | Advanced profile present | Advanced profile present | Handheld profile present | Handheld profile present |
| FRU_CONFIGURE =XX1 | FEF present | FEF present | FEF present | Advanced profile present |

RESERVED: This 7-bit field is reserved for future use.

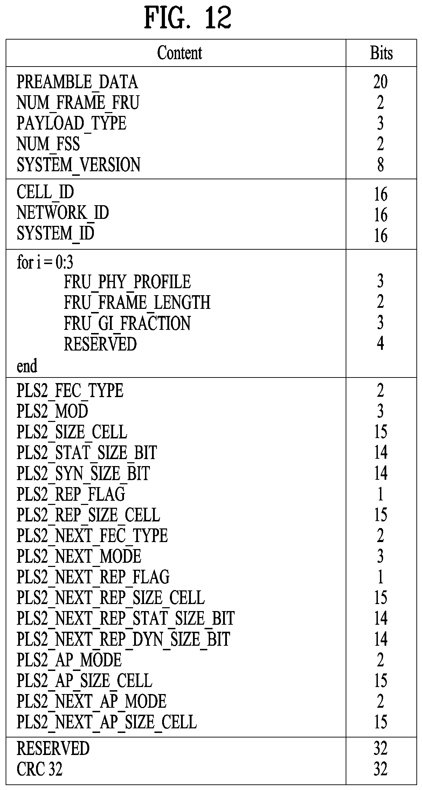

FIG. 12 illustrates PLS1 data according to an embodiment of the present invention.

PLS1 data provides basic transmission parameters including parameters required to enable the reception and decoding of the PLS2. As above mentioned, the PLS1 data remain unchanged for the entire duration of one frame-group. The detailed definition of the signaling fields of the PLS1 data are as follows:

PREAMBLE_DATA: This 20-bit field is a copy of the preamble signaling data excluding the EAC_FLAG.

NUM_FRAME_FRU: This 2-bit field indicates the number of the frames per FRU.

PAYLOAD_TYPE: This 3-bit field indicates the format of the payload data carried in the frame-group. PAYLOAD_TYPE is signaled as shown in table 9.

[Table 9]

| value | Payload type |
|---|---|
| 1XX | TS stream is transmitted |
| X1X | IP stream is transmitted |
| XX1 | GS stream is transmitted |

NUM_FSS: This 2-bit field indicates the number of FSS symbols in the current frame.

SYSTEM_VERSION: This 8-bit field indicates the version of the transmitted signal format. The SYSTEM_VERSION is divided into two 4-bit fields, which are a major version and a minor version.

Major version: The MSB four bits of SYSTEM_VERSION field indicate major version information. A change in the major version field indicates a non-backward-compatible change. The default value is '0000'. For the version described in this standard, the value is set to '0000'.

Minor version: The LSB four bits of SYSTEM_VERSION field indicate minor version information. A change in the minor version field is backward-compatible.

CELL_ID: This is a 16-bit field which uniquely identifies a geographic cell in an ATSC network. An ATSC cell coverage area may consist of one or more frequencies, depending on the number of frequencies used per Futurecast UTB system. If the value of the CELL_ID is not known or unspecified, this field is set to '0'.

NETWORK_ID: This is a 16-bit field which uniquely identifies the current ATSC network.

SYSTEM_ID: This 16-bit field uniquely identifies the Futurecast UTB system within the ATSC network. The Futurecast UTB system is the terrestrial broadcast system whose input is one or more input streams (TS, IP, GS) and whose output is an RF signal. The Futurecast UTB system carries one or more PHY profiles and FEF, if any. The same Futurecast UTB system may carry different input streams and use different RF frequencies in different geographical areas, allowing local service insertion. The frame structure and scheduling is controlled in one place and is identical for all transmissions within a Futurecast UTB system. One or more Futurecast UTB systems may have the same SYSTEM_ID meaning that they all have the same physical layer structure and configuration.

The following loop consists of FRU_PHY_PROFILE, FRU_FRAME_LENGTH, FRU_GI_FRACTION, and RESERVED which are used to indicate the FRU configuration and the length of each frame type. The loop size is fixed so that four PHY profiles (including a FEF) are signaled within the FRU. If NUM_FRAME_FRU is less than 4, the unused fields are filled with zeros.

FRU_PHY_PROFILE: This 3-bit field indicates the PHY profile type of the (i+1)th (i is the loop index) frame of the associated FRU. This field uses the same signaling format as shown in the table 8.

FRU_FRAME_LENGTH: This 2-bit field indicates the length of the (i+1)th frame of the associated FRU. Using FRU_FRAME_LENGTH together with FRU_GI_FRACTION, the exact value of the frame duration can be obtained.

FRU_GI_FRACTION: This 3-bit field indicates the guard interval fraction value of the (i+1)th frame of the associated FRU. FRU_GI_FRACTION is signaled according to the table 7.

RESERVED: This 4-bit field is reserved for future use.

The following fields provide parameters for decoding the PLS2 data.

PLS2_FEC_TYPE: This 2-bit field indicates the FEC type used by the PLS2 protection. The FEC type is signaled according to table 10. The details of the LDPC codes will be described later.

[Table 10]

| Content | PLS2 FEC type |
|---------|---------------|
| 00 | 4K-1/4 and 7K-3/10 LDPC codes |
| 01 ~ 11 | Reserved |

PLS2_MOD: This 3-bit field indicates the modulation type used by the PLS2. The modulation type is signaled according to table 11.

[Table 11]

| Value | PLS2_MODE |
|-------|-----------|
| 000 | BPSK |
| 001 | QPSK |
| 010 | QAM-16 |
| 011 | NUQ-64 |
| 100~111 | Reserved |

PLS2_SIZE_CELL: This 15-bit field indicates Ctotal_partial_block, the size (specified as the number of QAM cells) of the collection of full coded blocks for PLS2 that is carried in the current frame-group. This value is constant during the entire duration of the current frame-group.

PLS2_STAT_SIZE_BIT: This 14-bit field indicates the size, in bits, of the PLS2-STAT for the current frame-group. This value is constant during the entire duration of the current frame-group.

PLS2_DYN_SIZE_BIT: This 14-bit field indicates the size, in bits, of the PLS2-DYN for the current frame-group. This value is constant during the entire duration of the current frame-group.

PLS2_REP_FLAG: This 1-bit flag indicates whether the PLS2 repetition mode is used in the current frame-group. When this field is set to value '1', the PLS2 repetition mode is activated. When this field is set to value '0', the PLS2 repetition mode is deactivated.

PLS2_REP_SIZE_CELL: This 15-bit field indicates Ctotal_partial_block, the size (specified as the number of QAM cells) of the collection of partial coded blocks for PLS2 carried in every frame of the current frame-group, when PLS2 repetition is used. If repetition is not used, the value of this field is equal to 0. This value is constant during the entire duration of the current frame-group.

PLS2_NEXT_FEC_TYPE: This 2-bit field indicates the FEC type used for PLS2 that is carried in every frame of the next frame-group. The FEC type is signaled according to the table 10.

PLS2_NEXT_MOD: This 3-bit field indicates the modulation type used for PLS2 that is carried in every frame of the next frame-group. The modulation type is signaled according to the table 11.

PLS2_NEXT_REP_FLAG: This 1-bit flag indicates whether the PLS2 repetition mode is used in the next frame-group.

When this field is set to value '1', the PLS2 repetition mode is activated. When this field is set to value '0', the PLS2 repetition mode is deactivated.

PLS2_NEXT_REP_SIZE_CELL: This 15-bit field indicates Ctotal_full_block, The size (specified as the number of QAM cells) of the collection of full coded blocks for PLS2 that is carried in every frame of the next frame-group, when PLS2 repetition is used. If repetition is not used in the next frame-group, the value of this field is equal to 0. This value is constant during the entire duration of the current frame-group.

PLS2_NEXT_REP _STAT_SIZE_BIT: This 14-bit field indicates the size, in bits, of the PLS2-STAT for the next frame-group. This value is constant in the current frame-group.

PLS2_NEXT_REP_DYN_SIZE_BIT: This 14-bit field indicates the size, in bits, of the PLS2-DYN for the next frame-group. This value is constant in the current frame-group.

PLS2_AP_MODE: This 2-bit field indicates whether additional parity is provided for PLS2 in the current frame-group. This value is constant during the entire duration of the current frame-group. The below table 12 gives the values of this field. When this field is set to '00', additional parity is not used for the PLS2 in the current frame-group.

[Table 12]

| Value | PLS2-AP mode3 |
|---|---|
| 00 | AP is not provided |
| 01 | AP1 mode |
| 10~11 | Reserved |

PLS2_AP_SIZE_CELL: This 15-bit field indicates the size (specified as the number of QAM cells) of the additional parity bits of the PLS2. This value is constant during the entire duration of the current frame-group.

PLS2_NEXT_AP_MODE: This 2-bit field indicates whether additional parity is provided for PLS2 signaling in every frame of next frame-group. This value is constant during the entire duration of the current frame-group. The table 12 defines the values of this field

PLS2_NEXT_AP_SIZE_CELL: This 15-bit field indicates the size (specified as the number of QAM cells) of the additional parity bits of the PLS2 in every frame of the next frame-group. This value is constant during the entire duration of the current frame-group.

RESERVED: This 32-bit field is reserved for future use.

CRC_32: A 32-bit error detection code, which is applied to the entire PLS1 signaling.

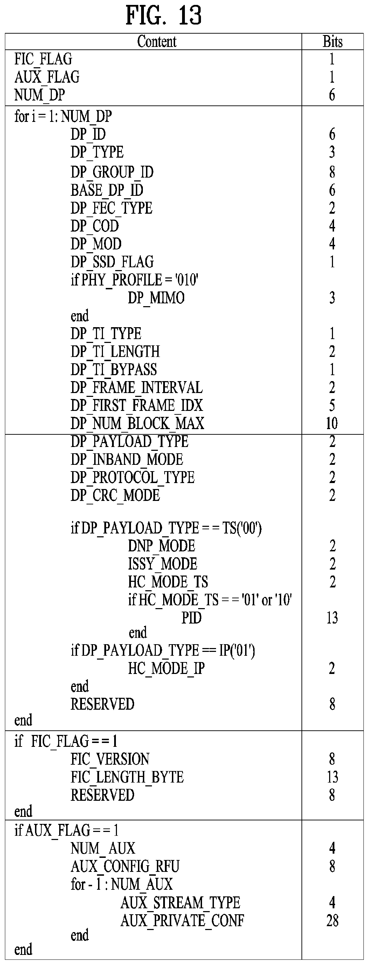

FIG. 13 illustrates PLS2 data according to an embodiment of the present invention.

FIG. 13 illustrates PLS2-STAT data of the PLS2 data. The PLS2-STAT data are the same within a frame-group, while the PLS2-DYN data provide information that is specific for the current frame.

The details of fields of the PLS2-STAT data are as follows:

FIC_FLAG: This 1-bit field indicates whether the FIC is used in the current frame-group. If this field is set to '1', the FIC is provided in the current frame. If this field set to '0', the FIC is not carried in the current frame. This value is constant during the entire duration of the current frame-group.

AUX_FLAG: This 1-bit field indicates whether the auxiliary stream(s) is used in the current frame-group. If this field is set to '1', the auxiliary stream is provided in the current frame. If this field set to '0', the auxiliary stream is not carried in the current frame. This value is constant during the entire duration of current frame-group.

*NUM_DP: This 6-bit field indicates the number of DPs carried within the current frame. The value of this field ranges from 1 to 64, and the number of DPs is NUM_DP+1.

DP_ID: This 6-bit field identifies uniquely a DP within a PHY profile.

DP_TYPE: This 3-bit field indicates the type of the DP. This is signaled according to the below table 13.

[Table 13]

| Value | DP Type |
|---|---|
| 000 | DP Type 1 |
| 001 | DP Type 2 |
| 010~111 | reserved |

DP_GROUP_ID: This 8-bit field identifies the DP group with which the current DP is associated. This can be used by a receiver to access the DPs of the service components associated with a particular service, which will have the same DP_GROUP_ID.

BASE_DP_ID: This 6-bit field indicates the DP carrying service signaling data (such as PSI/SI) used in the Management layer. The DP indicated by BASE_DP_ID may be either a normal DP carrying the service signaling data along with the service data or a dedicated DP carrying only the service signaling data

DP_FEC_TYPE: This 2-bit field indicates the FEC type used by the associated DP. The FEC type is signaled according to the below table 14.

[Table 14]

| Value | FEC_TYPE |
|-------|----------|
| 00 | 16K LDPC |
| 01 | 64K LDPC |
| 10 ~ 11 | Reserved |

DP_COD: This 4-bit field indicates the code rate used by the associated DP. The code rate is signaled according to the below table 15.

[Table 15]

| Value | Code rate |
|-------|-----------|
| 0000 | 5/15 |
| 0001 | 6/15 |
| 0010 | 7/15 |
| 0011 | 8/15 |
| 0100 | 9/15 |
| 0101 | 10/15 |
| 0110 | 11/15 |
| 0111 | 12/15 |
| 1000 | 13/15 |
| 1001 ~ 1111 | Reserved |

DP_MOD: This 4-bit field indicates the modulation used by the associated DP. The modulation is signaled according to the below table 16.

[Table 16]

| Value | Modulation |
|-------|------------|
| 0000 | QPSK |
| 0001 | QAM-16 |
| 0010 | NUQ-64 |
| 0011 | NUQ-256 |
| 0100 | NUQ-1024 |
| 0101 | NUC-16 |
| 0110 | NUC-64 |
| 0111 | NUC-256 |
| 1000 | NUC-1024 |
| 1001~1111 | reserved |

DP_SSD_FLAG: This 1-bit field indicates whether the SSD mode is used in the associated DP. If this field is set to value '1', SSD is used. If this field is set to value '0', SSD is not used.

The following field appears only if PHY_PROFILE is equal to '010', which indicates the advanced profile:

DP_MIMO: This 3-bit field indicates which type of MIMO encoding process is applied to the associated DP. The type of MIMO encoding process is signaled according to the table 17.

[Table 17]

| Value | MIMO encoding |
|---|---|
| 000 | FR-SM |
| 001 | FRFD-SM |
| 010~111 | reserved |

DP_TI_TYPE: This 1-bit field indicates the type of time-interleaving. A value of '0' indicates that one TI group corresponds to one frame and contains one or more TI-blocks. A value of '1' indicates that one TI group is carried in more than one frame and contains only one TI-block.

DP_TI_LENGTH: The use of this 2-bit field (the allowed values are only 1, 2, 4, 8) is determined by the values set within the DP_TI_TYPE field as follows:

If the DP_TI_TYPE is set to the value '1', this field indicates PI, the number of the frames to which each TI group is mapped, and there is one TI-block per TI group (NTI=1). The allowed PI values with 2-bit field are defined in the below table 18.

If the DP_TI_TYPE is set to the value '0', this field indicates the number of TI-blocks NTI per TI group, and there is one TI group per frame (PI=1). The allowed PI values with 2-bit field are defined in the below table 18.

[Table 18]

| 2-bit field | $P_I$ | $N_{TI}$ |
|---|---|---|
| 00 | 1 | 1 |
| 01 | 2 | 2 |
| 10 | 4 | 3 |
| 11 | 8 | 4 |

DP_FRAME_INTERVAL: This 2-bit field indicates the frame interval (IJUMP) within the frame-group for the associated DP and the allowed values are 1, 2, 4, 8 (the corresponding 2-bit field is '00', '01', '10', or '11', respectively). For DPs that do not appear every frame of the frame-group, the value of this field is equal to the interval between successive frames. For example, if a DP appears on the frames 1, 5, 9, 13, etc., this field is set to '4'. For DPs that appear in every frame, this field is set to '1'.

DP_TI_BYPASS: This 1-bit field determines the availability of time interleaver 5050. If time interleaving is not used for a DP, it is set to '1'. Whereas if time interleaving is used it is set to '0'.

DP_FIRST_FRAME_IDX: This 5-bit field indicates the index of the first frame of the super-frame in which the current DP occurs. The value of DP_FIRST_FRAME_IDX ranges from 0 to 31

DP_NUM_BLOCK_MAX: This 10-bit field indicates the maximum value of DP_NUM_BLOCKS for this DP. The value of this field has the same range as DP_NUM_BLOCKS.

DP_PAYLOAD_TYPE: This 2-bit field indicates the type of the payload data carried by the given DP. DP_PAYLOAD_TYPE is signaled according to the below table 19.

[Table 19]

| Value | Payload Type |
|---|---|
| 00 | TS. |
| 01 | IP |
| 10 | GS |
| 11 | reserved |

DP_INBAND MODE: This 2-bit field indicates whether the current DP carries in-band signaling information. The in-band signaling type is signaled according to the below table 20.

[Table 20]

| Value | In-band mode |
|-------|--------------|
| 00 | In-band signaling is not carried. |
| 01 | INBAND-PLS is carried only |
| 10 | INBAND-ISSY is carried only |
| 11 | INBAND-PLS and INBAND-ISSY are carried |

DP_PROTOCOL_TYPE: This 2-bit field indicates the protocol type of the payload carried by the given DP. It is signaled according to the below table 21 when input payload types are selected.

[Table 21]

| Value | If DP_PAYLOAD_TYPE Is TS | If DP_PAYLOAD_TYPE Is IP | If DP_PAYLOAD_TYPE Is GS |
|-------|--------------------------|--------------------------|--------------------------|
| 00 | MPEG2-TS | IPv4 | (Note) |
| 01 | Reserved | IPv6 | Reserved |
| 10 | Reserved | Reserved | Reserved |
| 11 | Reserved | Reserved | Reserved |

DP_CRC_MODE: This 2-bit field indicates whether CRC encoding is used in the Input Formatting block. The CRC mode is signaled according to the below table 22.

[Table 22]

| Value | CRC mode |
|-------|----------|
| 00 | Not used |
| 01 | CRC-8 |
| 10 | CRC-16 |
| 11 | CRC-32 |

DNP_MODE: This 2-bit field indicates the null-packet deletion mode used by the associated DP when DP_PAYLOAD_TYPE is set to TS ('00'). DNP_MODE is signaled according to the below table 23. If DP_PAYLOAD_TYPE is not TS ('00'), DNP_MODE is set to the value '00'.

[Table 23]

| Value | Null-packet deletion mode |
|-------|---------------------------|
| 00 | Not used |
| 01 | DNP-NORMAL |
| 10 | DNP-OFFSET |
| 11 | reserved |

ISSY_MODE: This 2-bit field indicates the ISSY mode used by the associated DP when DP_PAYLOAD_TYPE is set to TS ('00'). The ISSY_MODE is signaled according to the below table 24 If DP_PAYLOAD_TYPE is not TS ('00'), ISSY_MODE is set to the value '00'.

[Table 24]

| Value | ISSY mode |
|-------|-----------|
| 00 | Not used |
| 01 | ISSY-UP |
| 10 | ISSY-BBF |
| 11 | reserved |

HC_MODE_TS: This 2-bit field indicates the TS header compression mode used by the associated DP when DP_PAYLOAD_TYPE is set to TS ('00'). The HC_MODE_TS is signaled according to the below table 25.

[Table 25]

| Value | Header compression mode |
|-------|------------------------|
| 00 | HC_MODE_TS 1 |
| 01 | HC_MODE_TS 2 |
| 10 | HC_MODE_TS 3 |
| 11 | HC_MODE_TS 4 |

HC_MODE_IP: This 2-bit field indicates the IP header compression mode when DP_PAYLOAD_TYPE is set to IP ('01'). The HC_MODE_IP is signaled according to the below table 26.

[Table 26]

| Value | Header compression mode |
|-------|------------------------|
| 00 | No compression |
| 01 | HC_MODE_IP 1 |
| 10~11 | reserved |

PID : This 13-bit field indicates the PID number for TS header compression when DP_PAYLOAD_TYPE is set to TS ('00') and HC_MODE_TS is set to '01' or '10'.
RESERVED: This 8-bit field is reserved for future use.
The following field appears only if FIC_FLAG is equal to '1':

FIC_VERSION: This 8-bit field indicates the version number of the FIC.
FIC_LENGTH_BYTE: This 13-bit field indicates the length, in bytes, of the FIC.
RESERVED: This 8-bit field is reserved for future use.

The following field appears only if AUX_FLAG is equal to '1':

NUM_AUX: This 4-bit field indicates the number of auxiliary streams. Zero means no auxiliary streams are used.
AUX_CONFIG_RFU: This 8-bit field is reserved for future use.
AUX_STREAM_TYPE: This 4-bit is reserved for future use for indicating the type of the current auxiliary stream.
AUX_PRIVATE_CONFIG: This 28-bit field is reserved for future use for signaling auxiliary streams.

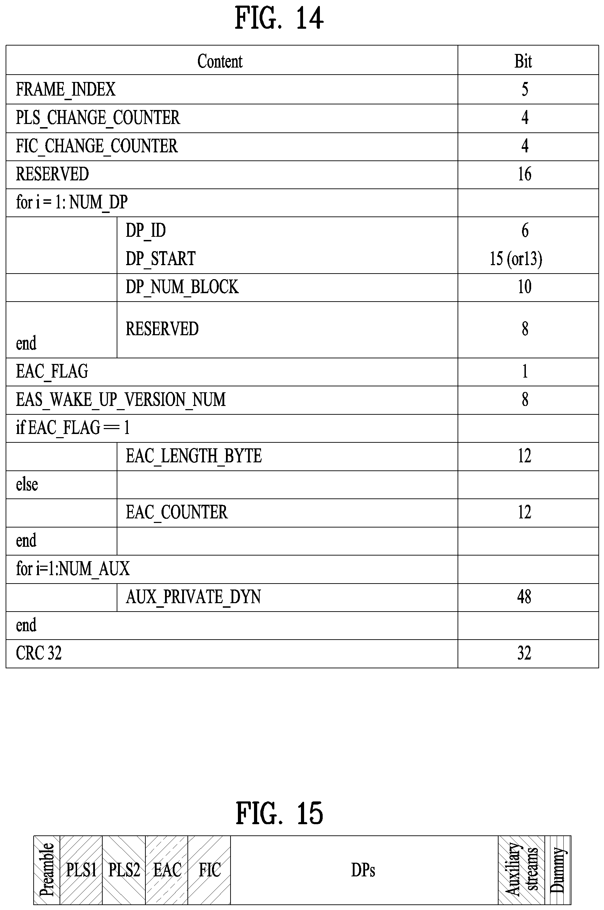

FIG. 14 illustrates PLS2 data according to another embodiment of the present invention.
FIG. 14 illustrates PLS2-DYN data of the PLS2 data. The values of the PLS2-DYN data may change during the duration of one frame-group, while the size of fields remains constant.
The details of fields of the PLS2-DYN data are as follows:

FRAME_INDEX: This 5-bit field indicates the frame index of the current frame within the super-frame. The index of the first frame of the super-frame is set to '0'.
PLS_CHANGE_COUNTER: This 4-bit field indicates the number of super-frames ahead where the configuration will change. The next super-frame with changes in the configuration is indicated by the value signaled within this field. If this field is set to the value '0000', it means that no scheduled change is foreseen: e.g., value '1' indicates that there is a change in the next super-frame.

FIC_CHANGE_COUNTER: This 4-bit field indicates the number of super-frames ahead where the configuration (i.e., the contents of the FIC) will change. The next super-frame with changes in the configuration is indicated by the value signaled within this field. If this field is set to the value '0000', it means that no scheduled change is foreseen: e.g. value '0001' indicates that there is a change in the next super-frame..

RESERVED: This 16-bit field is reserved for future use.

The following fields appear in the loop over NUM_DP, which describe the parameters associated with the DP carried in the current frame.

DP_ID: This 6-bit field indicates uniquely the DP within a PHY profile.

DP_START: This 15-bit (or 13-bit) field indicates the start position of the first of the DPs using the DPU addressing scheme. The DP_START field has differing length according to the PHY profile and FFT size as shown in the below table 27.

[Table 27]

| PHY profile | DP_START field size | |
| --- | --- | --- |
| | 64K | 16K |
| Base | 13 bit | 15 bit |
| Handheld | - | 13 bit |
| Advanced | 13 bit | 15 bit |

DP_NUM_BLOCK: This 10-bit field indicates the number of FEC blocks in the current TI group for the current DP. The value of DP_NUM_BLOCK ranges from 0 to 1023

RESERVED: This 8-bit field is reserved for future use.

The following fields indicate the FIC parameters associated with the EAC.

EAC FLAG: This 1-bit field indicates the existence of the EAC in the current frame. This bit is the same value as the EAC_FLAG in the preamble.

EAS _WAKE_UP_VERSION_NUM: This 8-bit field indicates the version number of a wake-up indication.

If the EAC_FLAG field is equal to '1', the following 12 bits are allocated for EAC_LENGTH_BYTE field. If the EAC_FLAG field is equal to '0', the following 12 bits are allocated for EAC_COUNTER.

EAC_LENGTH_BYTE: This 12-bit field indicates the length, in byte, of the EAC..

EAC_COUNTER: This 12-bit field indicates the number of the frames before the frame where the EAC arrives.

The following field appears only if the AUX_FLAG field is equal to '1':

AUX_PRIVATE_DYN: This 48-bit field is reserved for future use for signaling auxiliary streams. The meaning of this field depends on the value of AUX_STREAM_TYPE in the configurable PLS2-STAT.

CRC_32: A 32-bit error detection code, which is applied to the entire PLS2.

FIG. 15 illustrates a logical structure of a frame according to an embodiment of the present invention.

As above mentioned, the PLS, EAC, FIC, DPs, auxiliary streams and dummy cells are mapped into the active carriers of the OFDM symbols in the frame. The PLS1 and PLS2 are first mapped into one or more FSS(s). After that, EAC cells, if any, are mapped immediately following the PLS field, followed next by FIC cells, if any. The DPs are mapped next after the PLS or EAC, FIC, if any. Type 1 DPs follows first, and Type 2 DPs next. The details of a type of the DP will be described later. In some case, DPs may carry some special data for EAS or service signaling data. The auxiliary stream or streams, if any, follow the DPs, which in turn are followed by dummy cells. Mapping them all together in the above mentioned order, i.e. PLS, EAC, FIC, DPs, auxiliary streams and dummy data cells exactly fill the cell capacity in the frame.

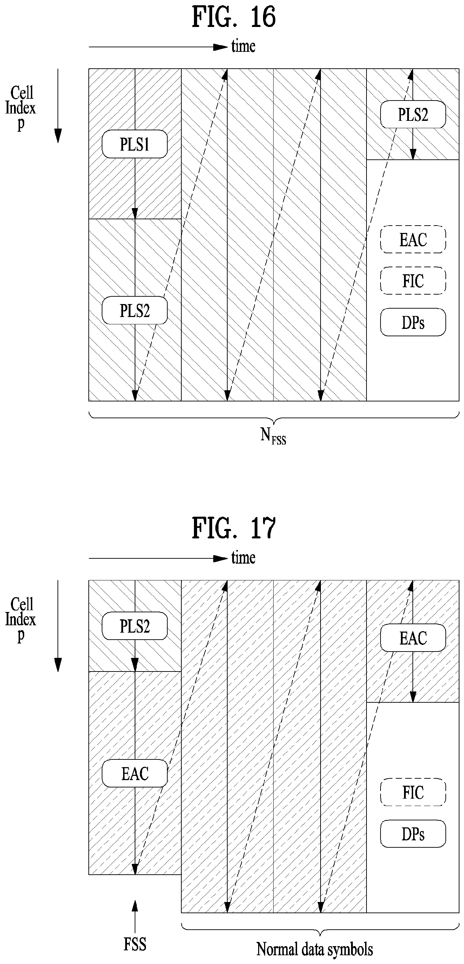

FIG. 16 illustrates PLS mapping according to an embodiment of the present invention.

PLS cells are mapped to the active carriers of FSS(s). Depending on the number of cells occupied by PLS, one or more symbols are designated as FSS(s), and the number of FSS(s) NFSS is signaled by NUM_FSS in PLS1. The FSS is a special symbol for carrying PLS cells. Since robustness and latency are critical issues in the PLS, the FSS(s) has higher density of pilots allowing fast synchronization and frequency-only interpolation within the FSS.

PLS cells are mapped to active carriers of the NFSS FSS(s) in a top-down manner as shown in an example in FIG. 16. The PLS1 cells are mapped first from the first cell of the first FSS in an increasing order of the cell index. The PLS2 cells follow immediately after the last cell of the PLS 1 and mapping continues downward until the last cell index of the first FSS. If the total number of required PLS cells exceeds the number of active carriers of one FSS, mapping proceeds to the next FSS and continues in exactly the same manner as the first FSS.

After PLS mapping is completed, DPs are carried next. If EAC, FIC or both are present in the current frame, they are placed between PLS and "normal" DPs.

FIG. 17 illustrates EAC mapping according to an embodiment of the present invention.

EAC is a dedicated channel for carrying EAS messages and links to the DPs for EAS. EAS support is provided but EAC itself may or may not be present in every frame. EAC, if any, is mapped immediately after the PLS2 cells. EAC is not preceded by any of the FIC, DPs, auxiliary streams or dummy cells other than the PLS cells. The procedure of mapping the EAC cells is exactly the same as that of the PLS.

The EAC cells are mapped from the next cell of the PLS2 in increasing order of the cell index as shown in the example in FIG. 17. Depending on the EAS message size, EAC cells may occupy a few symbols, as shown in FIG. 17.

EAC cells follow immediately after the last cell of the PLS2, and mapping continues downward until the last cell index of the last FSS. If the total number of required EAC cells exceeds the number of remaining active carriers of the last FSS mapping proceeds to the next symbol and continues in exactly the same manner as FSS(s). The next symbol for mapping in this case is the normal data symbol, which has more active carriers than a FSS.

After EAC mapping is completed, the FIC is carried next, if any exists. If FIC is not transmitted (as signaled in the PLS2 field), DPs follow immediately after the last cell of the EAC.

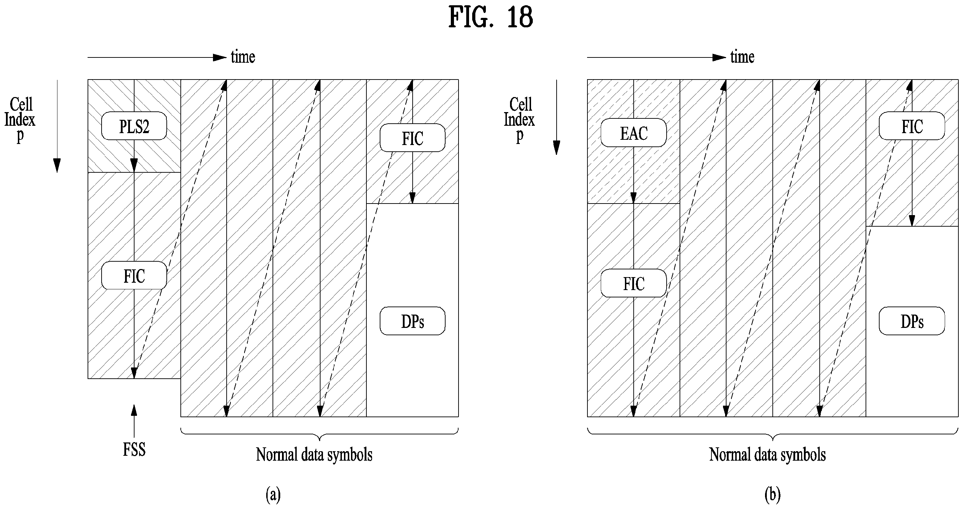

FIG. 18 illustrates FIC mapping according to an embodiment of the present invention.
shows an example mapping of FIC cell without EAC and (b) shows an example mapping of FIC cell with EAC.

FIC is a dedicated channel for carrying cross-layer information to enable fast service acquisition and channel scanning. This information primarily includes channel binding information between DPs and the services of each broadcaster. For fast scan, a receiver can decode FIC and obtain information such as broadcaster ID, number of services, and BASE_DP_ID. For fast service acquisition, in addition to FIC, base DP can be decoded using BASE_DP_ID. Other than the content it carries, a base DP is encoded and mapped to a frame in exactly the same way as a normal DP. Therefore, no additional description is required for a base DP. The FIC data is generated and consumed in the Management Layer. The content of FIC data is as described in the Management Layer specification.

The FIC data is optional and the use of FIC is signaled by the FIC_FLAG parameter in the static part of the PLS2. If FIC is used, FIC_FLAG is set to '1' and the signaling field for FIC is defined in the static part of PLS2. Signaled in this field are FIC_VERSION, and FIC_LENGTH_BYTE. FIC uses the same modulation, coding and time interleaving parameters as PLS2. FIC shares the same signaling parameters such as PLS2_MOD and PLS2_FEC. FIC data, if any, is mapped immediately after PLS2 or EAC if any. FIC is not preceded by any normal DPs, auxiliary streams or dummy cells. The method of mapping FIC cells is exactly the same as that of EAC which is again the same as PLS.

Without EAC after PLS, FIC cells are mapped from the next cell of the PLS2 in an increasing order of the cell index as shown in an example in (a). Depending on the FIC data size, FIC cells may be mapped over a few symbols, as shown in (b).

FIC cells follow immediately after the last cell of the PLS2, and mapping continues downward until the last cell index of the last FSS. If the total number of required FIC cells exceeds the number of remaining active carriers of the last FSS, mapping proceeds to the next symbol and continues in exactly the same manner as FSS(s). The next symbol for mapping in this case is the normal data symbol which has more active carriers than a FSS.

If EAS messages are transmitted in the current frame, EAC precedes FIC, and FIC cells are mapped from the next cell of the EAC in an increasing order of the cell index as shown in (b).

After FIC mapping is completed, one or more DPs are mapped, followed by auxiliary streams, if any, and dummy cells.

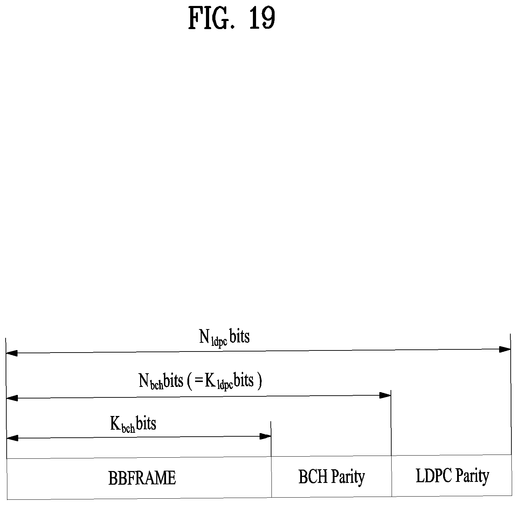

FIG. 19 illustrates an FEC structure according to an embodiment of the present invention.

FIG. 19 illustrates an FEC structure according to an embodiment of the present invention before bit interleaving. As above mentioned, Data FEC encoder may perform the FEC encoding on the input BBF to generate FECBLOCK procedure using outer coding (BCH), and inner coding (LDPC). The illustrated FEC structure corresponds to the FECBLOCK. Also, the FECBLOCK and the FEC structure have same value corresponding to a length of LDPC codeword.

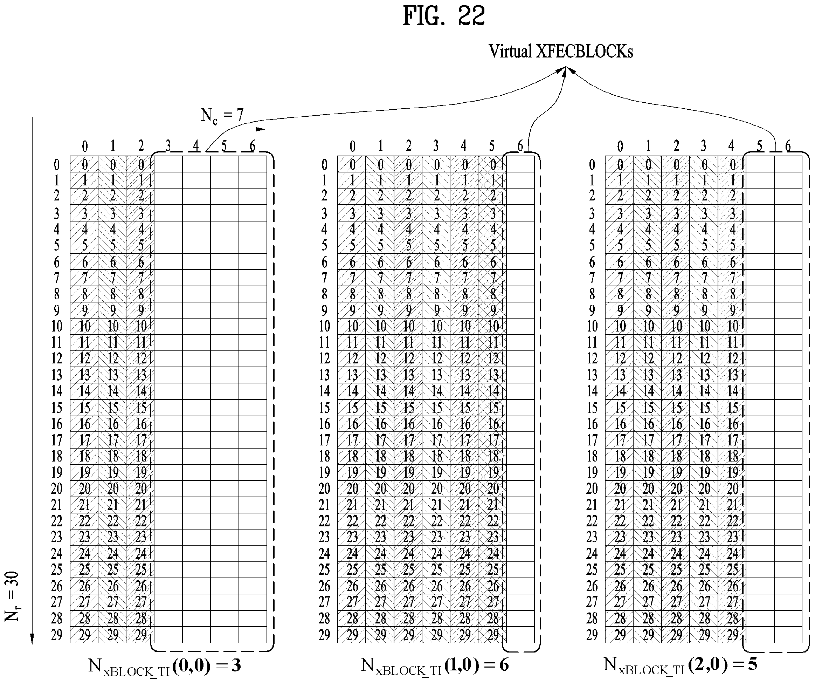

The BCH encoding is applied to each BBF (Kbch bits), and then LDPC encoding is applied to BCH-encoded BBF (Kldpc bits = Nbch bits) as illustrated in FIG. 22.

The value of Nldpc is either 64800 bits (long FECBLOCK) or 16200 bits (short FECBLOCK).

The below table 28 and table 29 show FEC encoding parameters for a long FECBLOCK and a short FECBLOCK, respectively.

[Table 28]

| LDPC Rate | $N_{ldpc}$ | $K_{ldpc}$ | $K_{bch}$ | BCH error correction capability | $N_{bch}$-$K_{bch}$ |
|---|---|---|---|---|---|
| 5/15 | | 21600 | 21408 | | |
| 6/15 | | 25920 | 25728 | | |
| 7/15 | | 30240 | 30048 | | |
| 8/15 | | 34560 | 34368 | | |
| 9/15 | 64800 | 38880 | 38688 | 12 | 192 |
| 10/15 | | 43200 | 43008 | | |
| 11/15 | | 47520 | 47328 | | |
| 12/15 | | 51840 | 51648 | | |
| 13/15 | | 56160 | 55968 | | |

[Table 29]

| LDPC Rate | $N_{ldpc}$ | $K_{ldpc}$ | $K_{bch}$ | BCH error correction capability | $N_{bch}$-$K_{bch}$ |
|---|---|---|---|---|---|
| 5/15 | | 5400 | 5232 | | |
| 6/15 | | 6480 | 6312 | | |
| 7/15 | | 7560 | 7392 | | |
| 8/15 | | 8640 | 8472 | | |
| 9/15 | 16200 | 9720 | 9552 | 12 | 168 |
| 10/15 | | 10800 | 10632 | | |
| 11/15 | | 11880 | 11712 | | |
| 12/15 | | 12960 | 12792 | | |
| 13/15 | | 14040 | 13872 | | |

The details of operations of the BCH encoding and LDPC encoding are as follows:

A 12-error correcting BCH code is used for outer encoding of the BBF. The BCH generator polynomial for short FECBLOCK and long FECBLOCK are obtained by multiplying together all polynomials.

LDPC code is used to encode the output of the outer BCH encoding. To generate a completed Bldpc (FECBLOCK), Pldpc (parity bits) is encoded systematically from each Ildpc (BCH-encoded BBF), and appended to Ildpc. The completed Bldpc (FECBLOCK) are expressed as followequation.

【Equation2】

$$B_{ldpc} = [\ \mathbf{I}_{ldpc}\ \ \mathbf{P}_{ldpc}\ ] = [\ i_0, i_1, \ldots, i_{K_{ldpc}-1},\ \ p_0, p_1, \ldots, p_{N_{ldpc}-K_{ldpc}-1}\ ]$$

The parameters for long FECBLOCK and short FECBLOCK are given in the above table 28 and 29, respectively.
The detailed procedure to calculate Nldpc - $K_{ldpc}$ parity bits for long FECBLOCK, is as follows:

1) Initialize the parity bits,

【Equation3】

$$p_0 = p_1 = p_2 = \ldots = p_{N_{ldpc}-K_{ldpc}-1} = 0$$

2) Accumulate the first information bit - i0, at parity bit addresses specified in the first row of an addresses of parity check matrix. The details of addresses of parity check matrix will be described later. For example, for rate 13/15:

【Equation 4】

$$p_{983} = p_{983} \oplus i_0 \qquad\qquad p_{2815} = p_{2815} \oplus i_0$$

$$p_{4837} = p_{4837} \oplus i_0 \qquad\qquad p_{4989} = p_{4989} \oplus i_0$$

$$p_{6138} = p_{6138} \oplus i_0 \qquad\qquad p_{6458} = p_{6458} \oplus i_0$$

$$p_{6921} = p_{6921} \oplus i_0 \qquad\qquad p_{6974} = p_{6974} \oplus i_0$$

$$p_{7572} = p_{7572} \oplus i_0 \qquad\qquad p_{8260} = p_{8260} \oplus i_0$$

$$p_{8496} = p_{8496} \oplus i_0$$

3) For the next 359 information bits, is, s=1, 2, ..., 359 accumulate is at parity bit addresses using following equation.

【Equation 5】

$$\{x + (s \bmod 360) \times Q_{ldpc}\} \bmod (N_{ldpc} - K_{ldpc})$$

where x denotes the address of the parity bit accumulator corresponding to the first bit i0, and Qldpc is a code rate dependent constant specified in the addresses of parity check matrix. Continuing with the example, Qldpc = 24 for rate 13/15, so for information bit i1, the following operations are performed:

【Equation 6】

$$p_{1007} = p_{1007} \oplus i_1 \qquad\qquad p_{2839} = p_{2839} \oplus i_1$$

$$p_{4861} = p_{4861} \oplus i_1 \qquad\qquad p_{5013} = p_{5013} \oplus i_1$$

$$p_{6162} = p_{6162} \oplus i_1 \qquad\qquad p_{6482} = p_{6482} \oplus i_1$$

$$p_{6945} = p_{6945} \oplus i_1 \qquad\qquad p_{6998} = p_{6998} \oplus i_1$$

$$p_{7596} = p_{7596} \oplus i_1 \qquad\qquad p_{8284} = p_{8284} \oplus i_1$$

$$p_{8520} = p_{8520} \oplus i_1$$

4) For the 361st information bit i360, the addresses of the parity bit accumulators are given in the second row of the addresses of parity check matrix. In a similar manner the addresses of the parity bit accumulators for the following 359 information bits is, s= 361, 362, ..., 719 are obtained using the equation 6, where x denotes the address of the parity bit accumulator corresponding to the information bit i360, i.e., the entries in the second row of the addresses of parity check matrix.

5) In a similar manner, for every group of 360 new information bits, a new row from addresses of parity check matrixes used to find the addresses of the parity bit accumulators.

After all of the information bits are exhausted, the final parity bits are obtained as follows:

6) Sequentially perform the following operations starting with i=1

【Equation 7】

$$p_i = p_i \oplus p_{i-1}, \qquad i = 1,2,..., N_{ldpc} - K_{ldpc} - 1$$

where final content of $p_i$, i=0,1,...$N_{ldpc}$ - $K_{ldpc}$ - 1 is equal to the parity bit pi.

[Table 30]

| Code Rate | $Q_{ldpc}$ |
|---|---|
| 5/15 | 120 |
| 6/15 | 108 |
| 7/15 | 96 |
| 8/15 | 84 |
| 9/15 | 72 |
| 10/15 | 60 |
| 11/15 | 48 |
| 12/15 | 36 |
| 13/15 | 24 |

This LDPC encoding procedure for a short FECBLOCK is in accordance with the LDPC encoding procedure for the long FECBLOCK, except replacing the table 30 with table 31, and replacing the addresses of parity check matrix for the long FECBLOCK with the addresses of parity check matrix for the short FECBLOCK.

[Table 31]

| Code Rate | $Q_{ldpc}$ |
|---|---|
| 5/15 | 30 |
| 6/15 | 27 |
| 7/15 | 24 |
| 8/15 | 21 |
| 9/15 | 18 |
| 10/15 | 15 |
| 11/15 | 12 |
| 12/15 | 9 |
| 13/15 | 6 |

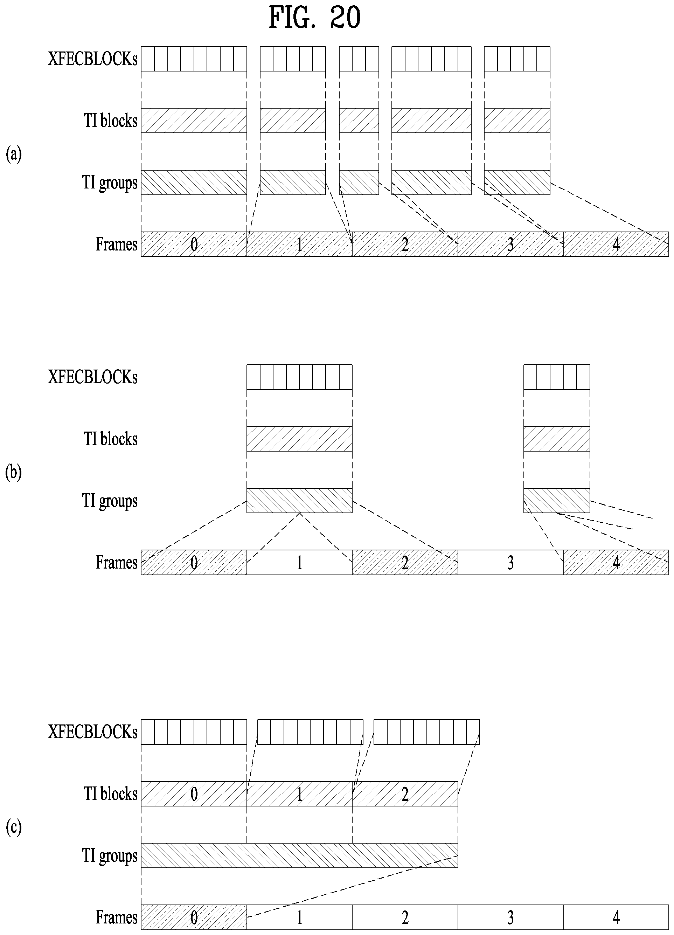

FIG. 20 illustrates a time interleaving according to an embodiment of the present invention.

(a) to (c) show examples of TI mode.

The time interleaver operates at the DP level. The parameters of time interleaving (TI) may be set differently for each DP.

The following parameters, which appear in part of the PLS2-STAT data, configure the TI:

DP_TI_TYPE (allowed values: 0 or 1): Represents the TI mode; '0' indicates the mode with multiple TI blocks (more than one TI block) per TI group. In this case, one TI group is directly mapped to one frame (no inter-frame interleaving). '1' indicates the mode with only one TI block per TI group. In this case, the TI block may be spread over more than one frame (inter-frame interleaving).

DP_TI_LENGTH: If DP_TI_TYPE = '0', this parameter is the number of TI blocks NTI per TI group. For DP_TI_TYPE = '1', this parameter is the number of frames PI spread from one TI group.

DP_NUM_BLOCK_MAX (allowed values: 0 to 1023): Represents the maximum number of XFECBLOCKs per TI group.

DP_FRAME_INTERVAL (allowed values: 1, 2, 4, 8): Represents the number of the frames IJUMP between two successive frames carrying the same DP of a given PHY profile.

DP_TI_BYPASS (allowed values: 0 or 1): If time interleaving is not used for a DP, this parameter is set to '1'. It is set to '0' if time interleaving is used.

Additionally, the parameter DP_NUM_BLOCK from the PLS2-DYN data is used to represent the number of XFECBLOCKs carried by one TI group of the DP.

When time interleaving is not used for a DP, the following TI group, time interleaving operation, and TI mode are not considered. However, the Delay Compensation block for the dynamic configuration information from the scheduler will still be required. In each DP, the XFECBLOCKs received from the SSD/MIMO encoding are grouped into TI groups. That is, each TI group is a set of an integer number of XFECBLOCKs and will contain a dynamically variable number of XFECBLOCKs. The number of XFECBLOCKs in the TI group of index n is denoted by NxBLOCK_Group(n) and is signaled as DP_NUM_BLOCK in the PLS2-DYN data. Note that NxBLOCK_Group(n) may vary from the minimum value of 0 to the maximum value NxBLOCK Group_MAX (corresponding to DP_NUM_BLOCK_MAX) of which the largest value is 1023.

Each TI group is either mapped directly onto one frame or spread over PI frames. Each TI group is also divided into more than one TI blocks(NTI), where each TI block corresponds to one usage of time interleaver memory. The TI blocks within the TI group may contain slightly different numbers of XFECBLOCKs. If the TI group is divided into multiple TI blocks, it is directly mapped to only one frame. There are three options for time interleaving (except the extra option of skipping the time interleaving) as shown in the below table 32.

[Table 32]

| Modes | Descriptions |
|---|---|
| Option-1 | Each TI group contains one TI block and is mapped directly to one frame as shown in (a). This option is signaled in the PLS2-STAT by DP_TI_TYPE='0' and DP_TI_LENGTH ='1'($N_{TI}$=1). |
| Option-2 | Each TI group contains one TI block and is mapped to more than one frame. (b) shows an example, where one TI group is mapped to two frames, i.e., DP_TI_LENGTH ='2' ($P_I$=2) and DP_FRAME_INTERVAL ($I_{JUMP}$ = 2). This provides greater time diversity for low data-rate services. This option is signaled in the PLS2-STAT by DP_TI_TYPE ='1'. |
| Option-3 | Each TI group is divided into multiple TI blocks and is mapped directly to one frame as shown in (c). Each TI block may use full TI memory, so as to provide the maximum bit-rate for a DP. This option is signaled in the PLS2-STAT signaling by DP_TI_TYPE='0' and DP_TI_LENGTH = $N_{TI}$, while $P_I$=1. |

Typically, the time interleaver will also act as a buffer for DP data prior to the process of frame building. This is achieved by means of two memory banks for each DP. The first TI-block is written to the first bank. The second TI-block is written to the second bank while the first bank is being read from and so on.

The TI is a twisted row-column block interleaver. For the sth TI block of the nth TI group, the number of rows $N_r$ of a TI memory is equal to the number of cells $N_{cells}$, i.e., $N_r = N_{cells}$ while the number of columns $N_c$ is equal to the number $N_{xBLOCK\_TI}(n,s)$.

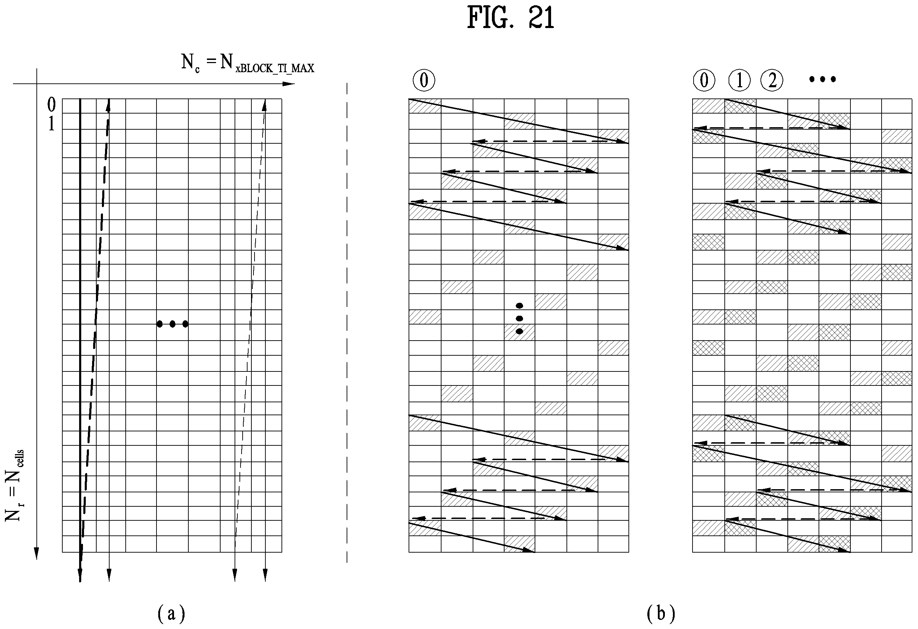

FIG. 21 illustrates the basic operation of a twisted row-column block interleaver according to an embodiment of the present invention.

FIG. 21 (a) shows a writing operation in the time interleaver and FIG. 21(b) shows a reading operation in the time interleaver The first XFECBLOCK is written column-wise into the first column of the TI memory, and the second XFECBLOCK is written into the next column, and so on as shown in (a). Then, in the interleaving array, cells are read out diagonal-wise. During diagonal-wise reading from the first row (rightwards along the row beginning with the left-most column) to the last row, $N_r$ cells are read out as shown in (b). In detail, assuming $z_{n,s,i}(i = 0,...,N_rN_c)$ as the TI memory cell position to be read sequentially, the reading process in such an interleaving array is performed by calculating the row index $R_{n,s,i}$, the column index $C_{n,s,i}$, and the associated twisting parameter $T_{n,s,i}$ as follows equation.

【Equation 8】

$$GENERATE\,(R_{n,s,i}, C_{n,s,i}) =$$

$$\{$$

$$R_{n,s,i} = \mathrm{mod}(i, N_r),$$

$$T_{n,s,i} = \mathrm{mod}(S_{shift} \times R_{n,s,i}, N_c),$$

$$C_{n,s,i} = \mathrm{mod}(T_{n,s,i} + \left\lfloor \frac{i}{N_r} \right\rfloor, N_c)$$

$$\}$$

where $S_{shift}$, is a common shift value for the diagonal-wise reading process regardless of $T_{xBLOCK\_TI}(n,s)$, and it is determined by $N_{xBLOCk\_TI\_MAX}$ given in the PLS2-STAT as follows equation.

【Equation 9】

$$for \begin{cases} N'_{xBLOCK\_TI\_MAX} = N_{xBLOCK\_TI\_MAX} + 1, & if\ N_{xBLOCK\_TI\_MAX}\,\mathrm{mod}2 = 0 \\ N'_{xBLOCK\_TI\_MAX} = N_{xBLOCK\_TI\_MAX}, & if\ N_{xBLOCK\_TI\_MAX}\,\mathrm{mod}2 = 1 \end{cases}$$

$$S_{shift} = \frac{N'_{xBLOCK\_TI\_MAX} - 1}{2}$$

As a result, the cell positions to be read are calculated by a coordinate as $z_{n,s,i} = N_rC_{n,s,i} + R_{n,s,i}$.

FIG. 22 illustrates an operation of a twisted row-column block interleaver according to another embodiment of the present invention.

More specifically, FIG. 22 illustrates the interleaving array in the TI memory for each TI group, including virtual XFECBLOCKs when $N_{xBLOCK\_TI}(0,0) = 3$, $N_{xBLOCK\_TI}(1,0) = 6$ $N_{xBLOCK\_TI}(2,0) = 5$

The variable number $N_{xBLOCK\_TI}(n,s) = N_r$ will be less than or equal to $N'_{xBLOCK\_TI\_MAX}$. Thus, in order to achieve a single-memory deinterleaving at the receiver side, regardless of $N_{xBLOCK\_TI}(n,s)$, the interleaving array for use in a twisted row-column block interleaver is set to the size of $N_r \times N_c = N_{cells} \times N'_{cBLOCK\_TI\_MAX}$ by inserting the virtual XFECBLOCKs into the TI memory and the reading process is accomplished as follow equation.

【Equation10】

$$p = 0;$$
$$for\ i = 0; i < N_{cells}N'_{xBLOCK\_TI\_MAX}; i = i+1$$
$$\{GENERATE\ (R_{n,s,i}, C_{n,s,i});$$
$$V_i = N_r C_{n,s,j} + R_{n,s,j}$$
$$if\ V_i < N_{cells}N_{xBLOCK\_TI}(n,s)$$
$$\{$$
$$Z_{n,s,p} = V_i; p = p+1;$$
$$\}$$
$$\}$$

The number of TI groups is set to 3. The option of time interleaver is signaled in the PLS2-STAT data by DP_TI_TYPE='0', DP_FRAME_INTERVAL='1', and DP_TI_LENGTH='1', i.e., NTI=1, IJUMP=1, and PI=1. The number of XFECBLOCKs, each of which has Ncells = 30 cells, per TI group is signaled in the PLS2-DYN data by NxBLOCK_TI(0,0)=3, NxBLOCK TI(1,0)=6, and NxBLOCK TI(2,0)=5, respectively. The maximum number of XFECBLOCK is signaled in the PLS2-STAT data by NxBLOCK Group_MAX, which leads to $\lfloor N_{xBLOCK\_Group-MAX} / N_{TI} \rfloor = N_{xBLOCK\_TI\_MAX} = 6$.

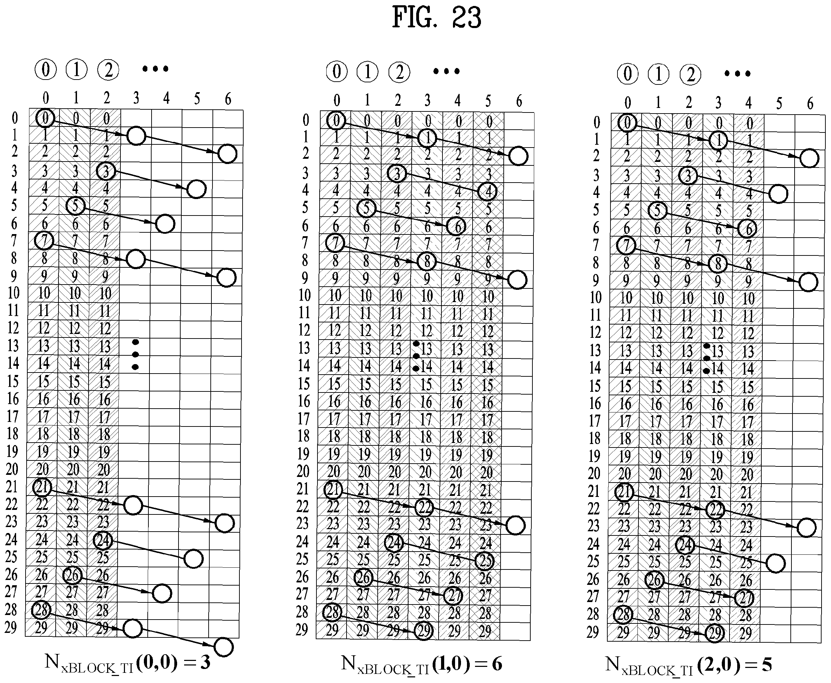

FIG. 23 illustrates a diagonal-wise reading pattern of a twisted row-column block interleaver according to an embodiment of the present invention.

More specifically FIG. 23 shows a diagonal-wise reading pattern from each interleaving array with parameters of $N'_{xBLOCx\_TI\_MAX}$ = 7 and Sshift=(7-1)/2=3. Note that in the reading process shown as pseudocode above, if $V_i \geq N_{cells}N_{xBLOCK\_TI}(n,s)$ the value of Vi is skipped and the next calculated value of Vi is used.

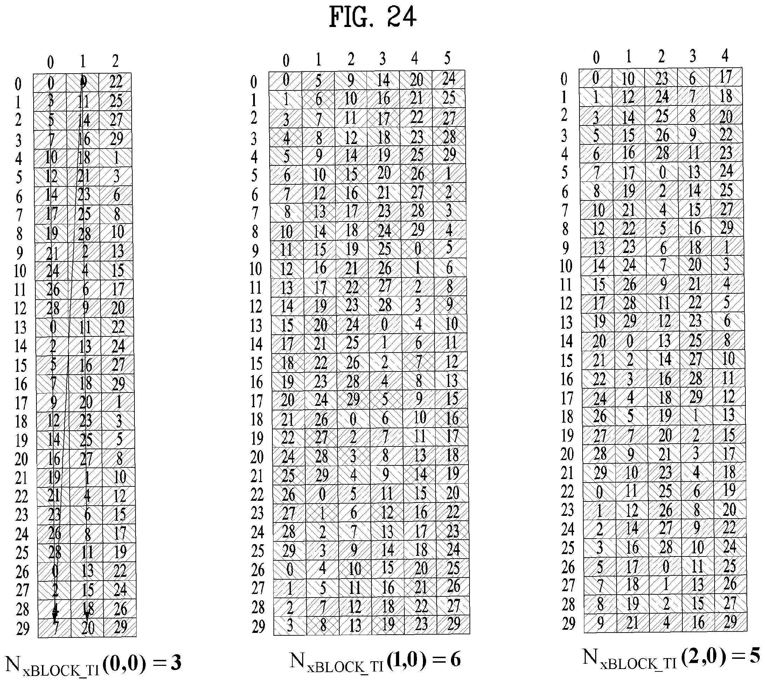

FIG. 24 illustrates interlaved XFECBLOCKs from each interleaving array according to an embodiment of the present invention.

FIG. 24 illustrates the interleaved XFECBLOCKs from each interleaving array with parameters of $N_{xBLOCK\_TI\_MAX}$ = 7 and Sshift=3.

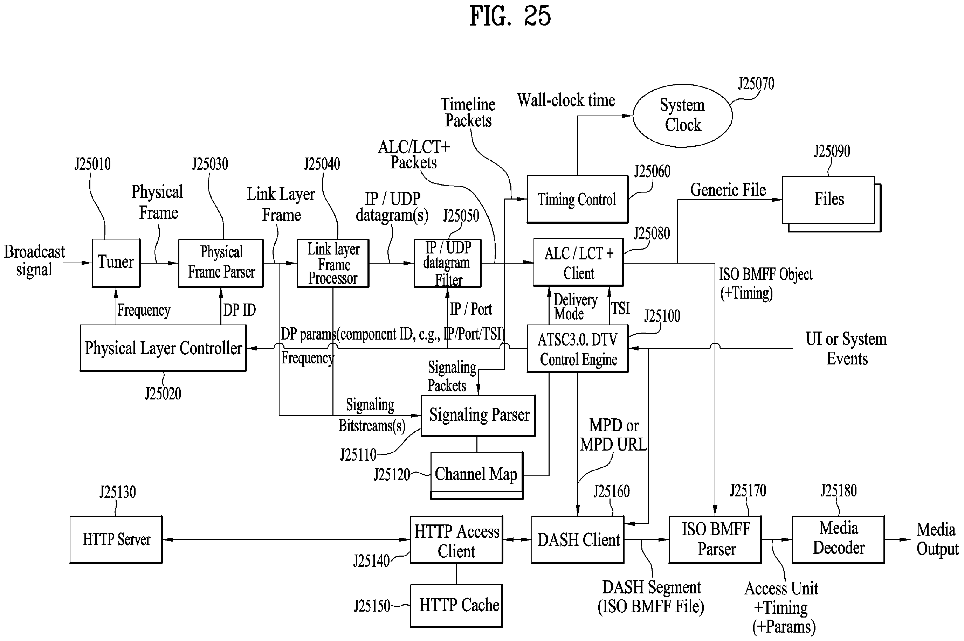

FIG. 25 is a diagram illustrating a hybrid broadcast receiver according to an embodiment of the present invention.

The hybrid broadcast receiver according to an embodiment of the present invention may receive a typical broadcast signal. In addition, the hybrid broadcast receiver may include a network interface for receiving data transmitted in an IP packet.

The hybrid broadcast receiver according to an embodiment of the present invention may include a tuner J25010, a physical layer controller J25020, a physical frame parser J25030, a link layer frame processor J25040, an IP/UDP datagram filter J25050, a timing control J25060, a system clock J25070, an ALC/LCT+ client J25080, files J25090, an ATSC3.0 DTV control engine J25100, a signaling parser J25110, a channel map J25120, an HTTP server J25130, an HTTP access client J25140, an HTTP cache J25150, a DASH client J25160, an ISO BMFF parser J25170, and/or a media decoder J25180.

The tuner J25010 may receive a broadcast signal. The tuner J25010 may tune the broadcast signal to a specific frequency and receive a broadcast signal of the corresponding frequency. The tuner J25010 may extract a physical frame included in the broadcast signal.

The physical layer controller J25020 may perform control related to processing of a broadcast signal at a physical layer. The physical layer controller J25020 may transmit information on a frequency to be tuned in order to acquire a specific broadcast service to the tuner J25010 and control the tuner J25010 to tune to a corresponding frequency based on a transmission parameter or information acquired from signaling data. The physical layer controller J25020 may transmit information (DP ID) for identifying a data pipe (DP) to be accessed/extracted in order to acquire a specific broadcast service or broadcast content to the physical frame parser J25030 and control the physical frame parser J25030 to identify the corresponding ID and to parse the ID based on the transmission parameter or information acquired from the signaling data.

The physical frame parser J25030 may parse a physical frame in the broadcast signal. The physical frame may indicate a unit of data to be processed in a physical layer. The physical frame parser J25030 may parse a physical frame and extract a link layer frame. The physical frame parser J25030 may extract a link layer frame with a corresponding DP ID using a data pipe identifier (DP ID) in order to extract a link layer frame including a specific DP during parsing of the physical frame. The physical frame parser J25030 may extract signaling data. The physical frame parser J25030 may extract a DP (e.g., a base DP) including the signaling data or identify a signaling channel for transmitting signaling data and extract signaling data transmitted on a corresponding channel.

The link layer frame processor J25040 may process a link layer frame. The link layer frame processor J25040 may extract an IP/UDP datagram from the link layer frame. The link layer frame processor J25040 may extract signaling data transmitted in a link layer. The signaling data transmitted in a link layer may include information on data of a higher layer than the link layer. For example, the signaling data transmitted from the link layer may include a type of an IP packet, content of information common in headers of an IP packet, and/or information on header compression when compression is applied to an IP header.

The IP/UDP datagram filter J25050 may identify and extract a specific IP/UDP datagram. The IP/UDP datagram filter J25050 may extract a specific IP packet and, in this procedure, use IP/Port information. The IP/UDP datagram filter J25050 may extract an IP/UDP datagram including a specific packet and transmit a packet in the corresponding datagram to each device of the receiver. The IP/UDP datagram filter J25050 may extract an asynchronous layered coding / layered coding transport (ALC/LCT) + packet for transmitting broadcast data in the IP/UDP datagram, a timeline packet including data for synchronization of a broadcast system, a broadcast receiver, and/or broadcast service/content, and/or a signaling packet for transmitting signaling data.

The timing control J25060 may be used to synchronize transport streams transmitted from one or more sources. Information required to synchronize the transport streams transmitted from one or more sources may be transmitted in the form of a timeline packet. The timing control J25060 may be used to synchronize a received packet or data in the packet with a broadcast system clock. The timing control J25060 may be used to synchronize a clock of the broadcast receiver and a clock of a broadcast system.

The system clock J25070 may receive information on wall-clock time and control a clock of the system.

The ALC/LCT+ client J25080 may process a packet according to a protocol of an application layer. Accordingly, the ALC/LCT+ client J25080 may be referred to as an application layer transmission protocol client. A protocol packet of an application layer may be referred to as various terms according to a protocol applied to a corresponding layer but will be referred to as an application layer transmission protocol packet or a packet in the present invention. The application layer transmission protocol packet may include an ALC/LCT packet, an ALC/LCT+ packet, a ROUTE packet, and/or an MMT packet.

The application layer transmission protocol packet may be parsed or decoded. The ALC/LCT+ client J25080 may extract a file for transmitting general data from the application layer transmission protocol packet or extract ISO base media file format (ISO BMFF) object data. The ALC/LCT+ client J25080 may additionally acquire information related to timing during extraction of the ISO BMFF object data. The ALC/LCT+ client J25080 may use delivery mode and/or transport session identifier (TSI) information during extraction of the general file and/or the ISO BMFF object data.

The files J25090 may store or process files.

The ATSC3.0 DTV control engine J25100 may control a series of operations for processing broadcast data using information on a channel map including information on each broadcast channel. The ATSC3.0 DTV control engine J25100 may receive and process user input via a user interface (UI) or an event in a system. The ATSC3.0 DTV control engine J25100 may control a physical layer controller using the transmission parameter and control the physical layer controller to process a broadcast signal in a physical layer. When the broadcast receiver processes data related to moving picture expert group - dynamic adaptive streaming over HTTP (MPEG-DASH), the ATSC3.0 DTV control engine J25100 may extract media presentation description (MPD) or extract location information (e.g., uniform resource locator (URL) information) for acquisition of the MPD and transmit the location information to an apparatus for processing the data related to MPEG-DASH.

The signaling parser J25110 may receive a signaling packet or a signaling bitstream and parse signaling information. The signaling information may include information required to generate a channel map.

The channel map J25120 may generate and store the channel map using the signaling information.

The HTTP server J25130 may transmit data or a packet using hypertext transfer protocol (HTTP). The HTTP server J25130 may receive a request of the broadcast receiver and transmit response to the request to the broadcast receiver. The HTTP server J25130 may be included outside or inside the broadcast server.

The HTTP access client J25140 may process communication with the HTTP server J25130. The HTTP access client J25140 may transmit a request of the DASH client J25160 to the HTTP server J25130 or transmit a response of the HTTP server J25130 to the DASH client J25160.

The HTTP cache J25150 may cache some or all of data transmitted in the form of HTTP.

The DASH client J25160 may perform a series of operations for processing data related to MPEG-DASH. The DASH client J25160 may request the HTTP server J25130 for MPD, receive a response to the request, or receive the MPD through another path. The DASH client J25160 may extract a DASH segment for specific broadcast services or content using the MPD. The DASH segment extracted from the DASH client J25160 may be an ISO BMFF file. The DASH client J25160 may receive input via a UI or input according to a system event and process data related thereto.

The ISO BMFF parser J25170 may parse the ISO BMFF object data and/or the ISO BMFF file. The ISO BMFF parser J25170 may parse the ISO BMFF object data and/or the ISO BMFF file to extract an access unit, timing information, and/or information required for decoding. The access unit may include data for media.

The media decoder J25180 may decode media (broadcast service, broadcast content, or event) using the access unit, the timing information, and/or the information required for decoding.

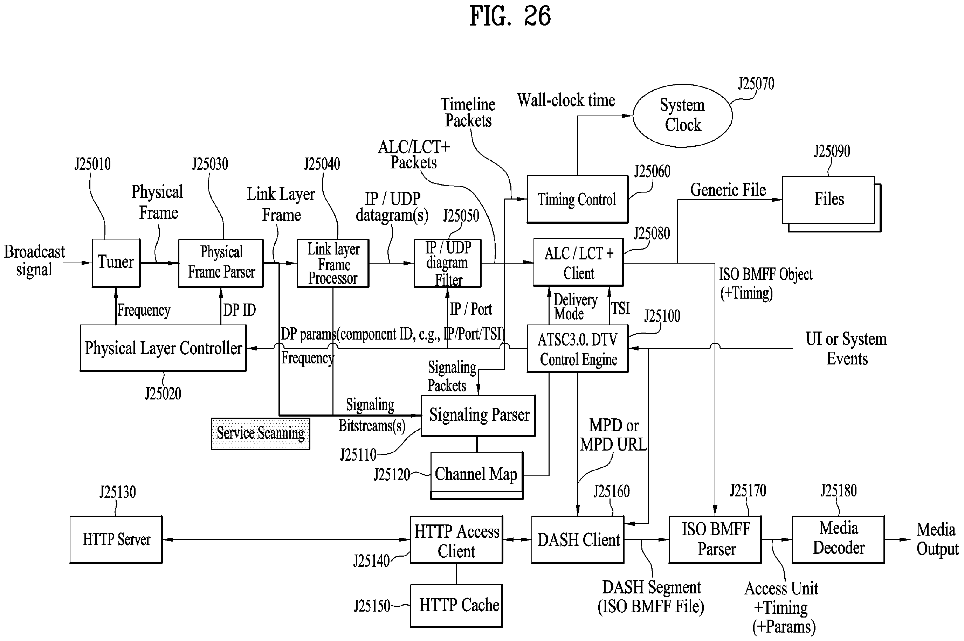

FIG. 26 is a diagram illustrating an operation of service scanning by a hybrid broadcast receiver according to an embodiment of the present invention.

In the service scanning of the broadcast receiver according to an embodiment of the present invention, the physical layer controller J25020 may control the tuner J25010 to scan a channel of each frequency.

The tuner J25010 may receive a broadcast signal in each channel. The tuner J25010 may extract a physical frame from the broadcast signal. The tuner J25010 may transmit the broadcast signal or the physical frame to the physical frame parser J25030.

The physical frame parser J25030 may extract a signaling bitstream for transmitting signaling information. The physical frame parser J25030 may transmit the signaling bitstream to the signaling parser J25110.

The signaling parser J25110 may extract signaling information from the signaling bitstream. The signaling parser J25110 may transmit the signaling information to the channel map J25120.

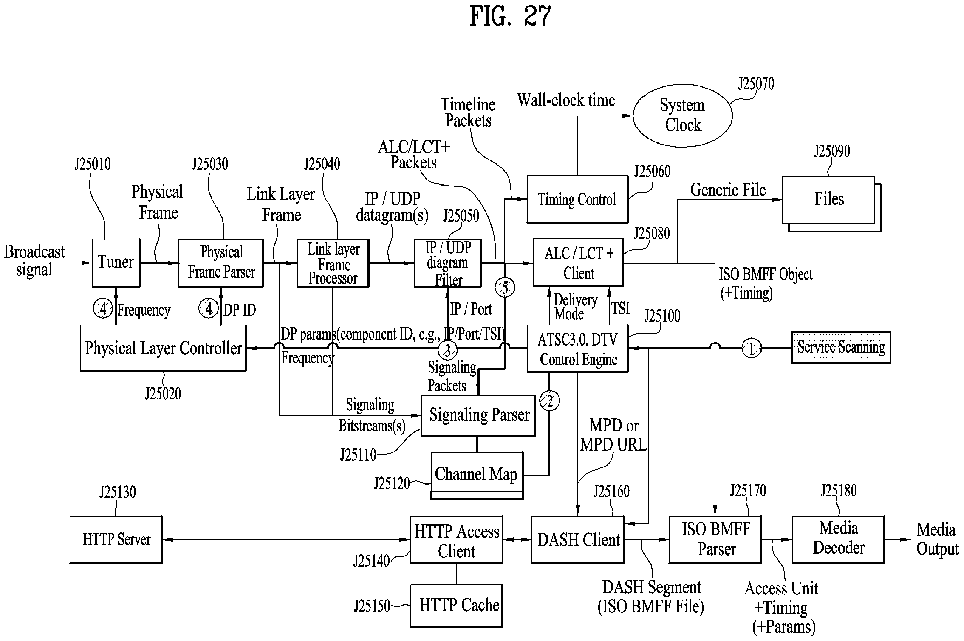

FIG. 27 is a diagram illustrating a service selection operation by a hybrid broadcast receiver according to an embodiment of the present invention.

The ATSC3.0 DTV control engine J25100 may receive a control signal for selection of a service according to a user or a broadcast event. The ATSC3.0 DTV control engine J25100 may extract information on a channel frequency, DP identification information, component identification information, and/or datagram identification information, for transmission of the selected service, from a channel map or signaling information stored in the channel map J25120 or the like and transmit the extracted information to the physical layer controller J25020 and/or the IP/UDP datagram filter J25050.

The physical layer controller J25020 may control the tuner J25010 to tune to a channel for transmission of the selected service using the frequency information and control the physical frame parser J25030 to extract DP for transmission of the selected service using the DP identification information.

The extracted DP may be processed by the link layer frame processor J25040 to extract IP/UDP datagrams.

The IP/UDP datagram filter J25050 may filter specific IP/UDP datagram or a specific IP packet for transmission of a signaling packet using IP/Port information, extract the signaling packet from the corresponding datagram, and transmit the signaling packet to the signaling parser J25110.

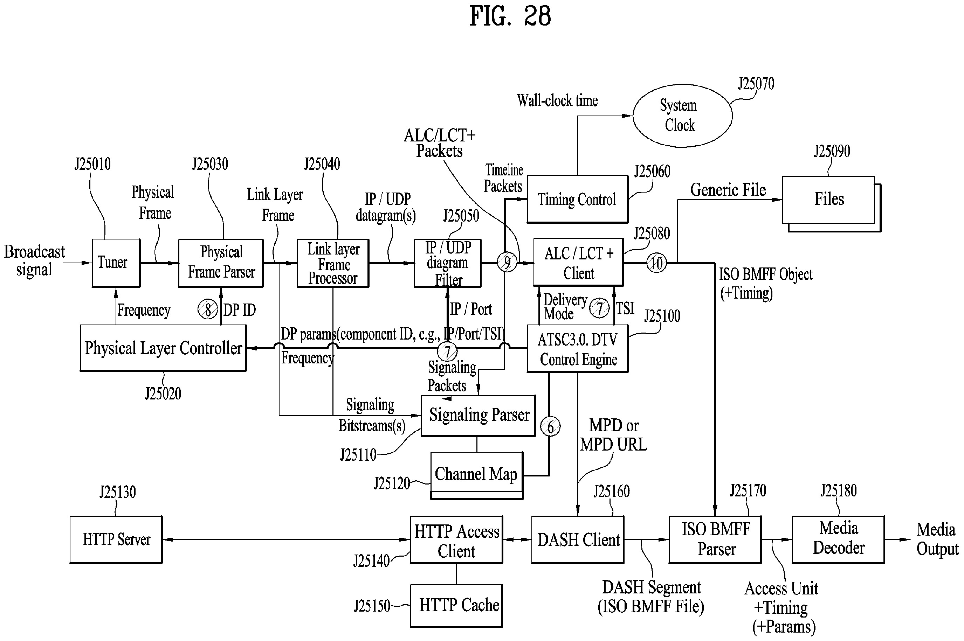

FIG. 28 is a diagram illustrating a service selection operation by a hybrid broadcast receiver according to an embodiment of the present invention.

The drawing illustrates an operation of the broadcast receiver, which is performed subsequent to the aforementioned service selection of the broadcast receiver.

A DTV control engine may acquire information for identifying a DP for transmitting a packet of broadcast content or a broadcast service selected by a user, information for identifying a delivery mode for transmitting a corresponding packet, TSI information on a corresponding packet, and/or IP/Port information of a corresponding packet, according to channel map information.

The DTV control engine may transmit the information for identifying a DP to a physical layer controller. The DTV control engine may transmit the IP/Port information of the corresponding packet to an IP/UDP datagram filter. The DTV control engine may transmit the TSI information on the corresponding packet and/or the information for identifying a delivery mode for transmitting a corresponding packet to an ALC/LCT+ client.

The physical layer controller may transmit a data pipe identifier (DP ID) to a physical frame parser.

The physical frame parser may identify a DP for identifying a packet of broadcast content or broadcast services selected by a user using the DP ID and parse the corresponding DP. The physical frame parser may extract a link layer frame from the DP.

A link layer frame processor may parse IP/UDP datagram in a link layer frame. The link layer frame processor may extract an IP/UDP datagram and/or IP packets related to broadcast content or broadcast services selected by a user.

The IP/UDP datagram filter may extract a packet (e.g., an application layer transmission protocol packet) including data related to broadcast content or broadcast services selected by the user. The IP/UDP datagram filter may extract a timeline packet including information for synchronization with a broadcast system of the broadcast service and/or the broadcast content.

An ALC/LCT+ client may extract ISO BMFF object data and/or timing related information from the received packet and transmit the extracted information to an ISO BMFF parser.

A detailed description of subsequent data processing is substituted with the above description of each device.

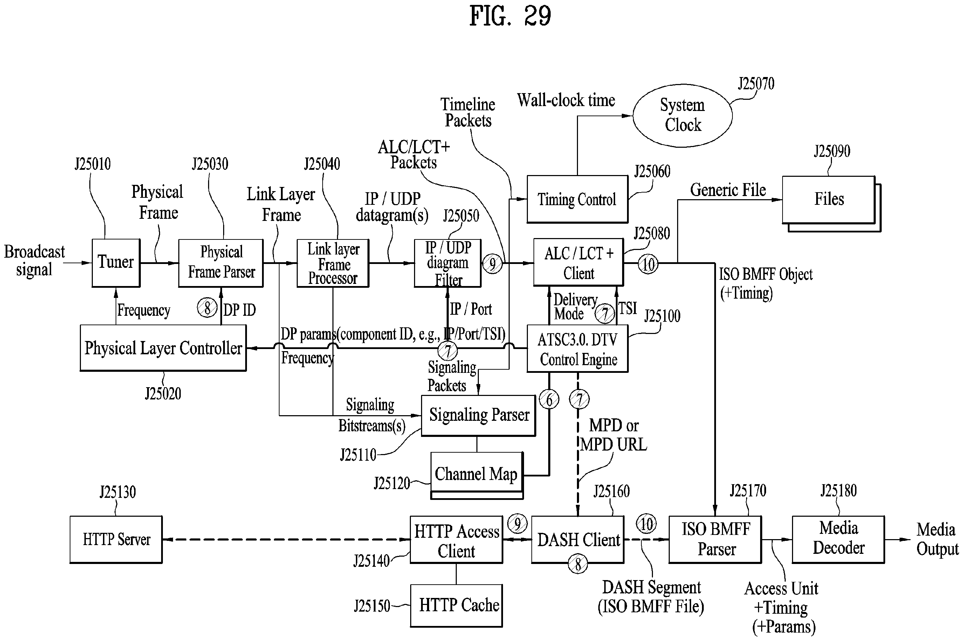

FIG. 29 is a diagram illustrating a service selection operation by a hybrid broadcast receiver according to another embodiment of the present invention.

The drawing illustrates an operation of the broadcast receiver, which is performed subsequent to the service selection of the broadcast receiver described with reference to FIG. 27.

A DTV control engine may acquire MPD including information on broadcast content or broadcast services selected by a user through a channel map or signaling information or acquire location information of a server or a storage for providing the corresponding MPD. The DTV control engine may transmit information on MPD or a location thereof to a DASH client.

The DASH client may acquire MPD and extract information (e.g., segment URL) on a location for providing a segment as data included in media (broadcast service or broadcast content) selected by a user from the MPD. The DASH client may transmit a request for a segment to an HTTP access client.

The HTTP access client may access a server for providing a corresponding segment, acquire the corresponding segment, and transmit the segment to the DASH client using information on location of the segment.

The DASH client may extract a file (e.g., an ISO BMFF file) from the received segment and transmit the file to an ISO BMFF parser.

A detailed description of subsequent data processing is substituted with the above description of each device.

According to the embodiment illustrated in the drawing, media may be received using a communication network using HTTP instead of a broadcast network.

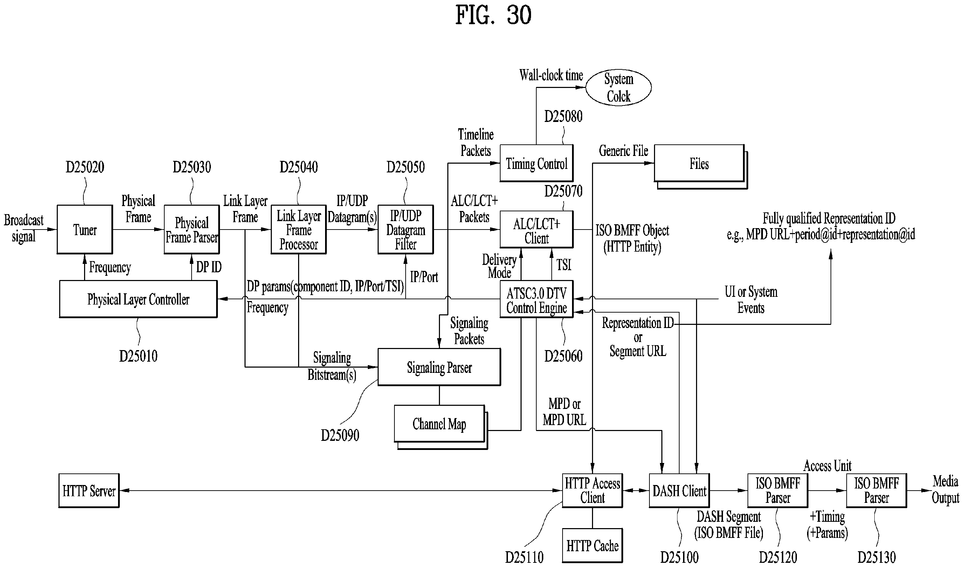

FIG. 30 is a block diagram of a hybrid broadcast receiver according to an embodiment of the present invention.

The hybrid broadcast receiver may receive a hybrid broadcast service for interaction of terrestrial broadcast and broadband in a DTV service of a next-generation broadcast system. The hybrid broadcast receiver may receive audio/video (A/V) content transmitted through terrestrial broadcast and receive some of enhancement data or broadcast A/V content associated with the A/V content in a broadband. In the specification, broadcast audio/video (A/V) content may refer to media content.

The hybrid broadcast receiver may include a physical layer controller D25010, a tuner D25020, a physical frame parser D25030, a link layer frame processor D25040, an IP/UDP datagram filter D25050, an ATSC 3.0 DTV control engine D25060, an ALC/LCT+ client D25070, a timing control D25080, a signaling parser D25090, a dynamic adaptive streaming over HTTP (DASH) client D25100, an HTTP access client D25110, an ISO base media file format (BMFF) parser D25120, and/or a media decoder D25130.

The physical layer controller D25010 may control operations of the tuner D25020, the physical frame parser D25030, and so on using radio frequency (RF) information, etc. of a terrestrial broadcast channel to be received by the hybrid broadcast receiver.

The tuner D25020 may receive and process a broadcast related signal through the terrestrial broadcast channel and convert the signal in an appropriate form. For example, the tuner D25020 may convert the received terrestrial broadcast signal into a physical frame.

The physical frame parser D25030 may parse the received physical frame and acquire a link layer frame through processing related to the physical frame.

The link layer frame processor D25040 may perform related calculation for acquisition of link layer signaling, etc. or acquisition of IP/UDP datagram from the link layer frame or acquiring. The link layer frame processor D25040 may output at least one IP/UDP datagram.

The IP/UDP datagram filter D25050 may filter a specific IP/UDP datagram from the received at least one IP/UDP datagram. That is, the IP/UDP datagram filter D25050 may selectively filter an IP/UDP datagram selected by the ATSC 3.0 DTV control engine D25060 from at least one IP/UDP datagram output from the link layer frame processor D25040. The IP/UDP datagram filter D25050 may output an application layer transmission protocol packet.

The ATSC 3.0 DTV control engine D25060 may function as an interface between modules included in each hybrid broadcast receiver. The ATSC 3.0 DTV control engine D25060 may transmit a parameter, etc. required for each module and control an operation of each module through the transmitted parameter, etc. According to the present invention, the ATSC 3.0 DTV control engine D25060 may transmit media presentation description (MPD) and/or MPD URL to the DASH client D25100. In addition, according to the present invention, the ATSC 3.0 DTV control engine D25060 may transmit information on a delivery mode(Delivery mode and/or transport session identifier (TSI) to the ALC/LCT+ client D25070. Here, the TSI may indicate an identifier of a session for transmission of a transmission packet including a signaling message such as MPD or MPD URL related signaling, e.g., an ALC/LCT session or a FLUTE session.

The ALC/LCT+ client D25070 may process the application layer transmission protocol packet and collect and process a plurality of application layer transmission protocol packets to generate one or more ISO base media file format (ISO BMFF) objects.

The timing control D25080 may process a packet including system time information and control a system clock according to the processed packet.

The signaling parser D25090 may acquire and parse DTV broadcast service related signaling and generate and manage a channel map, etc. based on the parsed signaling. According to the present invention, the signaling parser D25090 may parse MPD or MPD related information extended from signaling information.

The DASH client D25100 may perform calculation related to real-time streaming or adaptive streaming. The DASH client D25100 may receive DASH content from an HTTP server through the HTTP access client D25110. The DASH client D25100 may process the received DASH segment, etc. to output an ISO base media file format object. According to the present invention, the DASH client D25100 may transmit a fully qualified representation ID or a segment URL to the ATSC 3.0 DTV control engine D25060. Here, the fully qualified representation ID may refer to an ID formed by combining, for example, MPD URL, period@id, and representation@id. In addition, the DASH client D25100 may receive MPD or MPD URL from the ATSC 3.0 DTV control engine D25060. The DASH client D25100 may receive a desired media stream or DASH segment from the HTTP server using the received MPD or MPD URL. In the specification, the DASH client D25100 may be referred to as a processor.

The HTTP access client D25110 may request the HTTP server for specific information and receive and process a response to the request from the HTTP server. Here, the HTTP server may process the request received from the HTTP access client D25110 and provide a response to the request.

The ISO BMFF parser D25120 may extract audio/video data from the ISO base media file format object.

The media decoder D25130 may decode the received audio/video data and perform processing for presentation of the decoded audio/video data.

In order to provide a hybrid broadcast service via synchronization between a terrestrial broadcast network and a broadband network by a hybrid broadcast receiver according to the present invention, the MPD needs to be extended or corrected. The aforementioned terrestrial broadcast system may transmit the extended or corrected MPD and the hybrid broadcast receiver may receive content through broadcast or broadband using the extended or corrected MPD. That is, the hybrid broadcast receiver may receive the extended or corrected MPD through terrestrial broadcast and receive content through terrestrial broadcast or broadband based on the MPD. Hereinafter, elements and attributes to be additionally included in the extended or corrected MPD compared with typical MPD will be described. The extended or corrected MPD may be referred to as MPD below.

The MPD may be extended or corrected for representing an ATSC 3.0 service. The extended or corrected MPD may further include MPD@anchorPresentationTime, Common@presentable, Common.Targeting, Common.TargetDevice, and/or Common@associatedTo.

The MPD@anchorPresentationTime may represent an anchor of presentation time of segments included in the MPD, that is, time as reference time. Hereinafter, the MPD@anchorPresentationTime may be used as effective time of the MPD. The MPD@anchorPresentationTime may represent an earliest presentation time among segments included in the MPD.

The MPD may further include common attributes and elements. The Common@presentable may represent that media described by the MPD is a presentable component.

The Common.Targeting may represent targeting properties and/or personalization properties of media described by the MPD.

The Common.TargetDevice may represent a target device or target devices of media described by the MPD.

The Common@associatedTo may represent adaptationSet and/or representation related to media described by the MPD.

MPD@id, Period@id, and AdaptationSet@id included in the MPD may be required to specify media content described by the MPD. That is, the DASH client may specify content to be received based on the MPD as MPD@id, Period@id, and AdaptationSet@id and transmit the content to the ATSC 3.0 DTV control engine. The ATSC 3.0 DTV control engine may receive corresponding content and transmit the content to the DASH client.

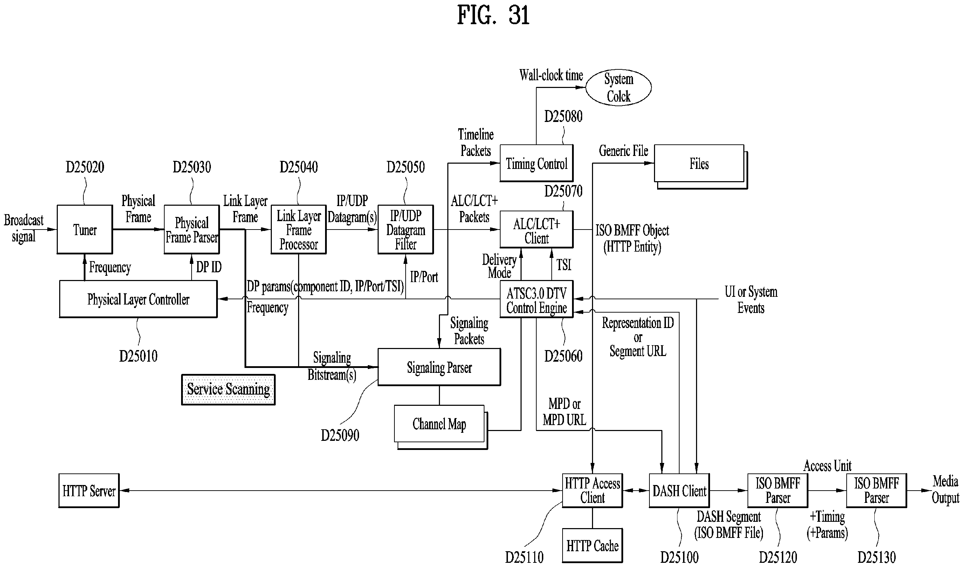

FIG. 31 is a diagram illustrating a service selection operation by a hybrid broadcast receiver according to another embodiment of the present invention.

In service scanning of the broadcast receiver according to another embodiment of the present invention, the physical layer controller D25010 may control the tuner D25020 to perform scanning on a channel of each frequency.

The tuner D25020 may receive a broadcast signal on each channel. The tuner D25020 may extract a physical frame from the broadcast signal. The tuner D25020 may transmit the broadcast signal or the physical frame to the physical frame parser D25030.

The physical frame parser D25030 may extract a signaling bitstream for transmitting signaling information. The physical frame parser D25030 may transmit the signaling bitstream to the signaling parser D25090.

The signaling parser D25090 may extract signaling information from the signaling bitstream. The signaling parser D25090 may transmit the signaling information to a channel map or a channel map processor.

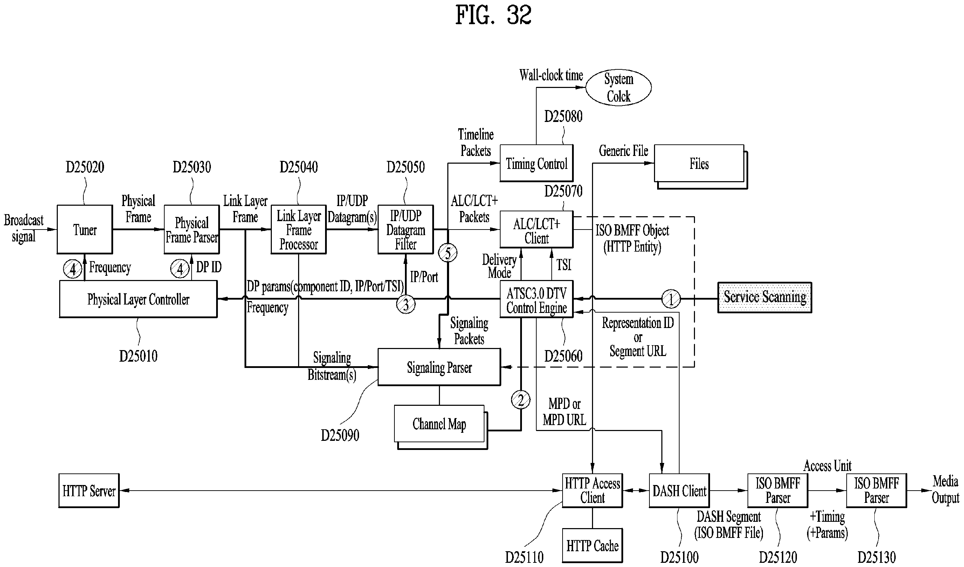

FIG. 32 is a diagram illustrating a service selection operation by a hybrid broadcast receiver according to another embodiment of the present invention.

The DTV control engine D25060 may receive a control signal for selection of a service according to a user or a broadcast event. The DTV control engine D25060 may extract information on a channel frequency, DP identification information, component identification information, and/or datagram identification information, for transmission of the selected service, from a channel map or signaling information stored in a channel map processor or the like and transmit the extracted information to the physical layer controller D25010 and/or the IP/UDP datagram filter D25050.

The physical layer controller D25010 may control the tuner D25020 to tune to a channel for transmission of the selected service using the frequency information and control the physical frame parser D25030 to extract DP for transmission of the selected service using the DP identification information.

The extracted DP may be processed by the link layer frame processor D25040 to extract IP/UDP datagrams.

The IP/UDP datagram filter D25050 may filter specific IP/UDP datagram or specific IP packet for transmission of a signaling packet using IP/Port information, extract the signaling packet from the corresponding datagram, and transmit the signaling packet to the signaling parser D25090.

The IP/UDP datagram filter D25050 may extract application layer transmission protocol packets for transmitting data on broadcast content or broadcast services. Some of application layer transmission protocol packets may include signaling information. The ALC/LCT+ client D25070 may parse a packet including signaling information and transmit the packet to the signaling parser D25090. The signaling parser D25090 may parse a packet including the corresponding signaling information to acquire signaling information and transmit the signaling information to a channel map processor or store the signaling information in a channel map.

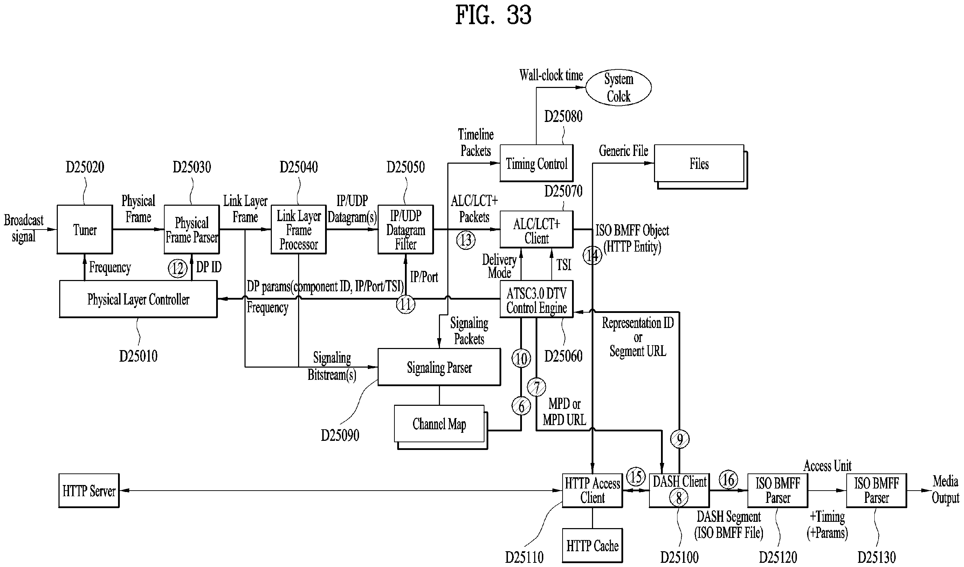

FIG. 33 is a diagram illustrating an operation of service selection operation by a hybrid broadcast receiver according to another embodiment of the present invention.

The drawing illustrates an operation of the broadcast receiver, which is subsequently performed to the aforementioned service selection of the broadcast receiver.

The DTV control engine D25060 may acquire MPD or URL information of a location at which the MPD is acquirable, from a channel map processor.

The DTV control engine D25060 may transmit MPD including information on media, such as a specific broadcast service or broadcast content or URL information of a location of for acquisition of the corresponding MPD to the DASH client D25100.

The DASH client D25100 may parse the MPD. The DASH client D25100 may transmit a request for the MPD at the corresponding location to an HTTP access client using the URL information of the location for acquisition of the MPD. The HTTP access client may access an HTTP server at a location indicated by the URL information of the location for acquisition of the MPD, request the HTTP server for the MPD, receive the MPD in response to the request, and transmit the MPD to the DASH client D25100. The DASH client D25100 may extract Representation ID as information for identification of representation included in the MPD and/or Segment URL information for identification of a location for acquisition of a specific segment. The DASH client D25100 may transmit information extracted from the MPD to the DTV control engine D25060.

The DTV control engine D25060 may acquire information (e.g., DP ID, component ID, IP/Port information, and/or TSI information) for identifying a DP for transmission of specific media (a specific broadcast service, content, and/or event), indicated by the information extracted from the MPD, and transmit the acquired information to the physical layer controller D25010 and/or the IP/UDP datagram filter D25050. The information for identifying the DP may be stored in a channel map processor or extracted from information that is stored in the broadcast receiver in the form of a channel map.

The physical layer controller D25010 may control the physical frame parser D25030 to extract a specific DP from a physical frame. The physical layer controller D25010 may transmit the DP ID to the physical frame parser D25030 so as to extract the DP identified by the corresponding DP ID by the physical frame parser D25030.

The physical frame parser D25030 may extract a link layer frame included in the DP.

The link layer frame processor D25040 may parse the link layer frame to extract one or more IP/UDP datagrams.

The IP/UDP datagram filter D25050 may extract IP/UDP datagram and/or an IP packet including data on media to be extracted by the broadcast receiver using IP/Port information. The IP/UDP datagram filter D25050 may parse the IP/UDP datagram and/or the IP packet to extract an application layer transmission protocol packet for transmitting data on specific media.

The ALC/LCT+ client D25070 may decode an application layer transmission protocol packet including data on a media to be consumed by the broadcast receiver to acquire ISO BMFF object data. The ISO BMFF object data may include an HTTP entity. The HTTP entity may include HTTP related information for receiving specific data.

The HTTP access client D25110 may decode the ISO BMFF object data or receive data for specific media using information included in the ISO BMFF object data from an external source.

The DASH client D25100 may parse a DASH segment from the received data. The DASH segment may take the form of an ISO BMFF file.

A detailed description of subsequent data processing is substituted with the above description of each device.

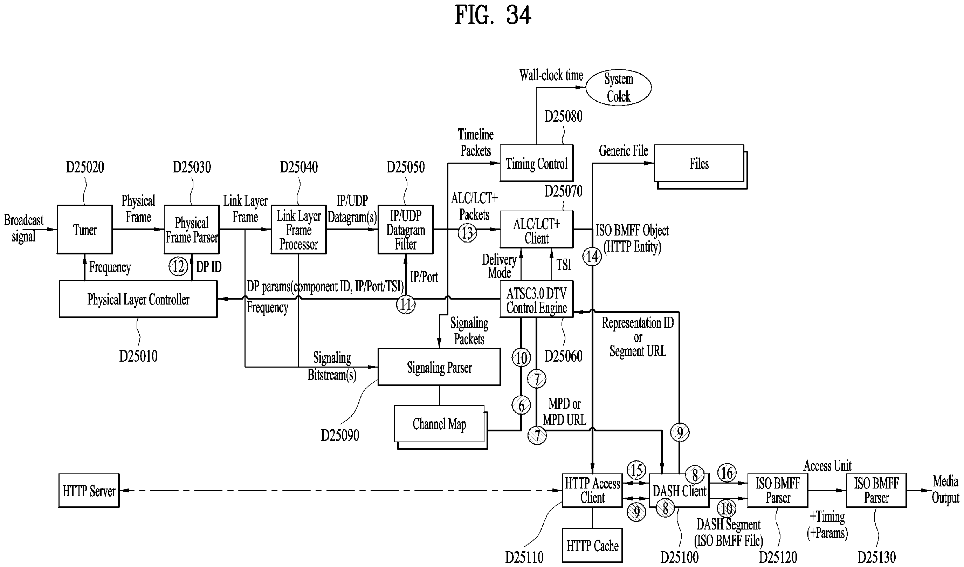

FIG. 34 is a diagram illustrating a service selection operation by a hybrid broadcast receiver according to another embodiment of the present invention.

The drawing illustrates an operation of the broadcast receiver, which is subsequently performed to the service selection of the broadcast receiver described with reference to FIG. 32.

The DTV control engine D25060 may acquire MPD including information on broadcast content or broadcast services selected by a user through a channel map or signaling information or acquire location information of a server or a storage for providing the corresponding MPD. The DTV control engine D25060 may transmit information on MPD or a location thereof to a DASH client.

Upon receiving the location information on the server or the storage for providing the MPD, the DASH client D25100 may transmit a request for the corresponding MPD to the HTTP access client D25110. The HTTP access client D25110 may access a server or storage corresponding to the location of the MPD, acquire the MPD, and transmit the MPD to the DASH client D25100.

The DASH client D25100 may acquire the MPD and extract information (e.g., segment URL) on a location for providing a segment as data included in media (broadcast service or broadcast content) selected by the user from the MPD. The DASH client D25100 may transmit a request for the segment to the HTTP access client D25110.

The HTTP access client D25110 may access a server for providing the corresponding segment using information on the location of the segment, acquire the corresponding segment, and transmit the segment to the DASH client D25100.

The DASH client D25100 may extract a file (e.g., ISO BMFF file) from the received segment and transmit the file to an ISO BMFF parser.

A detailed description of subsequent data processing is substituted with the above description of each device.

According to the embodiment illustrated in the drawing, media may be received using a communication network using HTTP, but not a broadcast network.

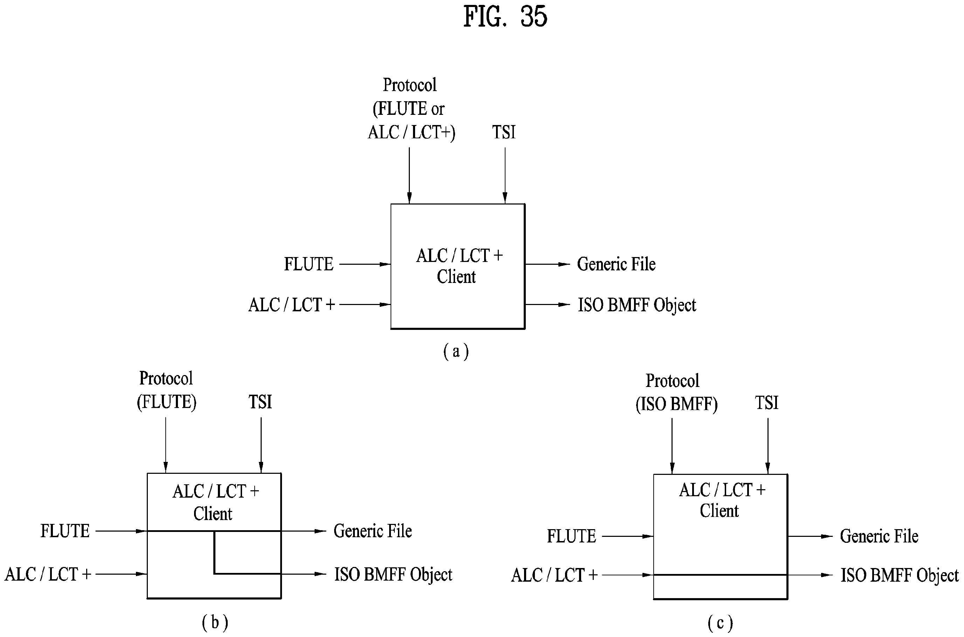

FIG. 35 illustrates a diagram illustrating an operation of an ALC/LCT+ client according to an embodiment of the present invention.

Referring to FIG. 35(a), the ALC/LCT+ client may process data according to one or more protocols. The ALC/LCT+ client may process data according to file delivery over unidirectional transport (FLUTE) and/or ALC/LCT+ protocol. The ALC/LCT+ client may receive TSI information and acquire data transmitted through a transport session corresponding to the TSI information. The ALC/LCT+ client may receive FLUTE data and/or ALC/LCT+ data. The ALC/LCT+ client may decode or parse a generic file and/or ISO BMFF object data from the received data.

FIG. 35(b) illustrates an operation of the ALC/LCT+ client when non-real-time transmission is supported according to an embodiment of the present invention. Non-real-time transmission is a transmission method of receiving data of corresponding media before media is actually consumed, through a broadcast network. A broadcast service to be included in the media may include one or more broadcast contents. The broadcast content may include one or more files. Each file may be discontinuously transmitted and stored in a receiver. Data transmitted in non-real-time may correspond to data of broadcast content and/or broadcast services. The data transmitted in non-real-time may be data that is added to broadcast data transmitted in real time or media data received through the Internet.

According to an embodiment of the present invention, when non-real-time transmission is transmitted, the data transmitted in non-real time may be transmitted using the FLUTE protocol. Files transmitted through the FLUTE may include a generic file or ISO BMFF Object data. The ALC/LCT+ client may extract a generic file and/or ISO BMFF Object data from the data transmitted through FLUTE.

The ALC/LCT+ client may collect an ALC/LCT packet including specific transmission object identifier (TOI) information and/or TSI information for a file delivery table (FDT) in order to acquire the data transmitted in non-real-time. The ALC/LCT+ client may parse the FDT from corresponding ALC/LCT packets. The ALC/LCT+ client may collect an ALC/LCT packet having specific TOI information and/or TSI information in order to collect files included in specific media or broadcast content. TOI information and/or TSI information on files corresponding to the specific media or broadcast content may be included in the aforementioned FDT. When real-time streaming is performed, an operation for acquiring FDT may not be performed and, in this case, the ALC/LCT+ client may be operated to disregard TOI information and TSI information related to the FDT.

FIG. 35(c) illustrates an operation of an ALC/LCT+ client in the case of real-time transmission according to an embodiment of the present invention.

In real-time transmission, data may be transmitted using an ALC/LCT+ protocol. The ALC/LCT+ protocol may also be referred to as real-time object delivery over unidirectional transport (ROUTE). The ALC/LCT+ client may extract ISO BMFF Object data from the application layer transmission protocol packet.

In order to acquire data included in specific media or broadcast content, the ALC/LCT+ client may collect an ALC/LCT+ packet including specific TSI information and/or TOI information.

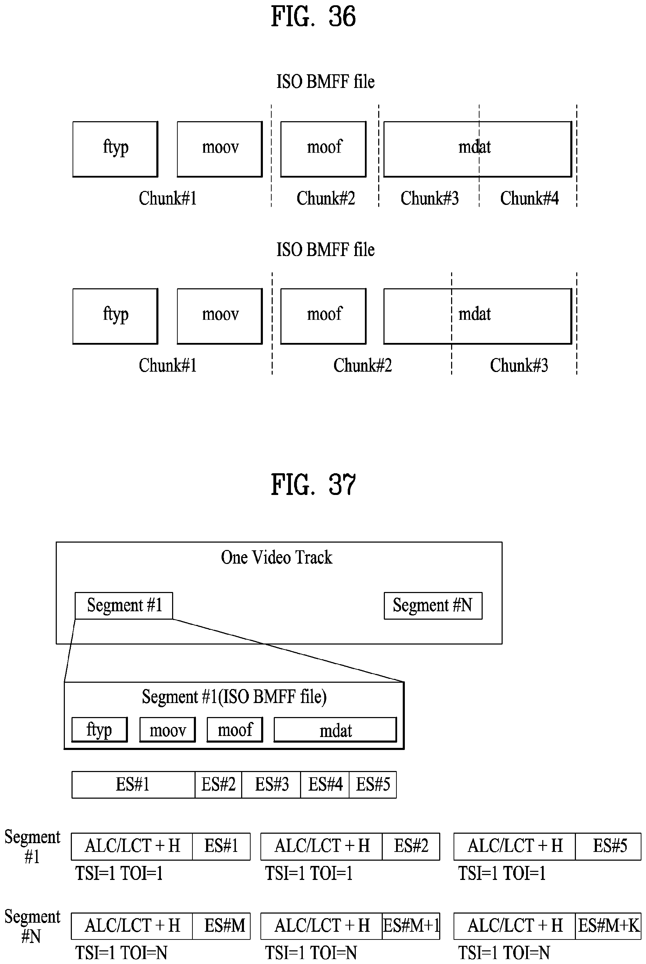

FIG. 36 is a diagram illustrating an ISO BMFF file according to an embodiment of the present invention.

One ISO BMFF file may have the same meaning as one DASH segment. The ISO BMFF Object data may correspond to some data of the ISO BMFF file. The ISO BMFF file may be divided into one or more chunks and each chunk may correspond to ISO BMFF Object data.

The ISO BMFF file may include one or more boxes. The ISO BMFF file may include an ftyp box, a moov box, a moof box, and/or an mdat box.

When the ISO BMFF file is divided into one or more chunks, two or more different types of boxes may be included in the chunk. The chunk may include only one type of box. The chunk may include a portion of one box.

Alternatively, the chunk may include data included in one box and a portion of data included in different types of boxes.

The ftyp box may indicate a type of the ISO BMFF file. The ftyp box may identify technological standards for compatibility with the ISO BMFF file.

The moov box may be a container for metadata. The metadata may correspond to signaling information. The metadata may include information for describing data included in media.

The moof box may correspond to a movie fragment box and the movie fragment may extend presentation time.

The mdat box may include actual media data for presentation.

FIG. 37 is a diagram illustrating an application layer transmission protocol packet according to an embodiment of the present invention.

According to an embodiment of the present invention, a transport session identifier (TSI) may be mapped to one track. One track may correspond to video, audio, or DASH representation.

The DASH representation may indicate a set or encapsulation of one or more media streams. The DASH representation may be encoded to transmit an O element of media and may have different encoding characteristics for respective DASH representations. For example, the DASH representation may indicate units encoded using different bit rates, resolutions, and/or codecs with respect to content elements of the same media. The DASH representation may include one or more DASH segments. The DASH segment may correspond to a file that is continuously divided in a time unit. The DASH segment may include data in the form of MPEG2-TS or ISO BMFF.

According to an embodiment of the present invention, a transmission object identifier (TOI) may be mapped to one ISO BMFF object data. One ISO BMFF object datum may correspond to one ISO BMFF file or one chunk.

The drawing illustrates an application layer transmission protocol packet when a TSI is mapped to one track and a TOI is mapped to one ISO BMFF file.

For example, one video track may include one or more segments (DASH segment).

Each segment may correspond to an ISO BMFF file. The ISO BMFF file may be divided into one or more ESs (elementary streams or elementary segments). In the drawing, one ISO BMFF file is divided into five ESs.

The application layer transmission protocol packet may include an ALC/LCT+ header (ALC/LCT+ H) and an ES.

For example, data of Segment #1 may be transmitted through five application layer transmission protocol packets and each application layer transmission protocol packet may have a TOI value of '1' and, thus, the data of Segment #1 is transmitted. The video track may be identified as a TSI with '1' and other segments included in the corresponding video segment may be identified according to a value of the TOI. When the video track includes N segments, the TOI may have a value of 1 to N.

The receiver needs to identify start of a file. An ISO BMFF file transmitted by Segment #1 may information indicating that a corresponding file is a first file of a data unit identified by a corresponding TSI.

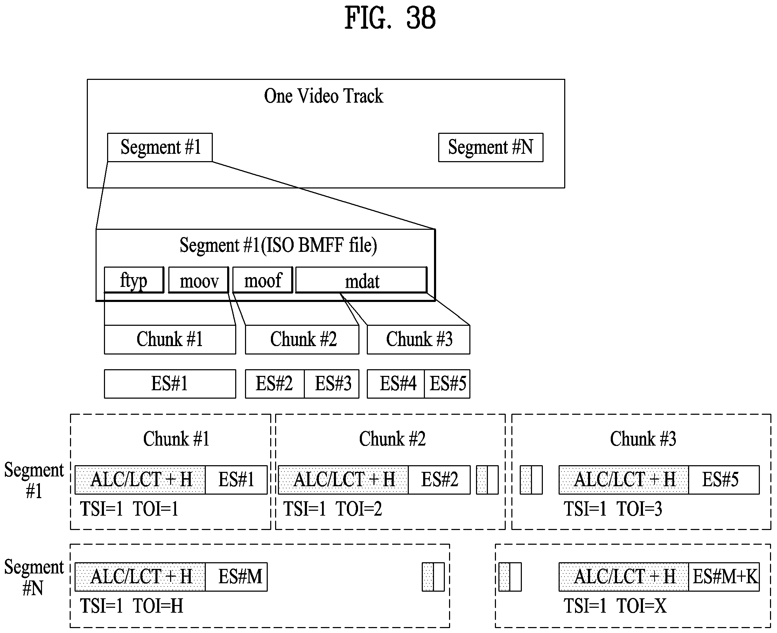

FIG. 38 is a diagram illustrating an application layer transmission protocol packet when a TSI is mapped to one track and a TOI is mapped to one chunk, according to an embodiment of the present invention.

According to an embodiment of the present invention, one track (e.g., video track) may include one or more segments. One segment may correspond to an ISO BMFF file. One segment may be divided into one or more chunks. One chunk may be divided into one or more ESs. Each application layer transmission protocol packet may include an ALC/LCT+ header and one ES. In this case, each chunk may be transmitted by one or more application layer transmission protocol packets.

Referring to the drawing, with respect to a video track, a TSI value of '1' may be set and a segment included in a corresponding video track may have a TSI value of '1'. With respect to each chuck included in Segment #1, each TOI value may be set.

In order to control an appropriate operation of an ISO BMFF parser, the receiver may need to identify offset to each chunk from start of the ISO BMFF file. For example, each chunk may include offset information indicating offset and chunk including data of a start portion of the ISO BMFF file may include offset information with a value of '0'.

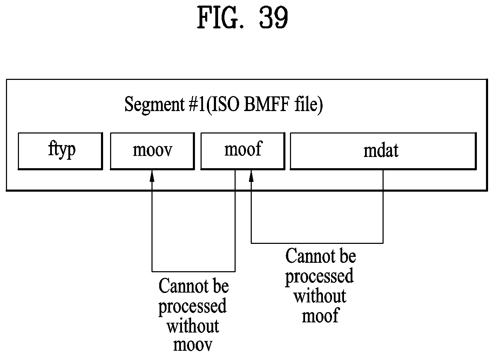

FIG. 39 is a diagram illustrating setting of characteristics of boxes in an ISO BMFF file in an application layer transmission protocol packet when a TSI is mapped to one track and a TOI is mapped to one chunk, according to an embodiment of the present invention.

When a TSI is mapped to one track and a TOI is mapped to one chunk, different degrees of importance may be set to the respective boxes included in the ISO BMFF file corresponding to a segment. The degrees of importance may be set by a transmitter. For example, degrees of importance indicating highest may be set to the moov box and degrees of importance indicating higher may be set to the moof box.

The mdat box including data corresponding to a random access point (RAP) may be set with a higher degree of importance than other mdat boxes that do not include RAP. The RAP may correspond to a data unit for transmission of data of I-frame in the case of a video track.

Information for determination of priority according to a degree of importance among the mdat boxes may be included in each mdat box. Alternatively, the information for determination of priority according to a degree of importance among the mdat boxes may be included in the moov box. In this case, in conjunction with information for identification of the mdat box, priority of a specific mdat box may be determined and, in this case, the corresponding information may be used.

Referring to the drawing, the mdat box may not be processed without the moof box and, thus, the moof box may be set to be more important than the mdat box. In addition, the moof box may not be processed without the moov box and, thus, the moov box may be set to be more important than the moof box.

When one or more boxes are transmitted by different application layer transmission protocol packets, information on priority may be included in each application layer transmission protocol packet in consideration of boxes included in each application layer transmission protocol packet. According to embodiments of the present invention, information setting or data setting may be performed by a transmitter or a receiver.

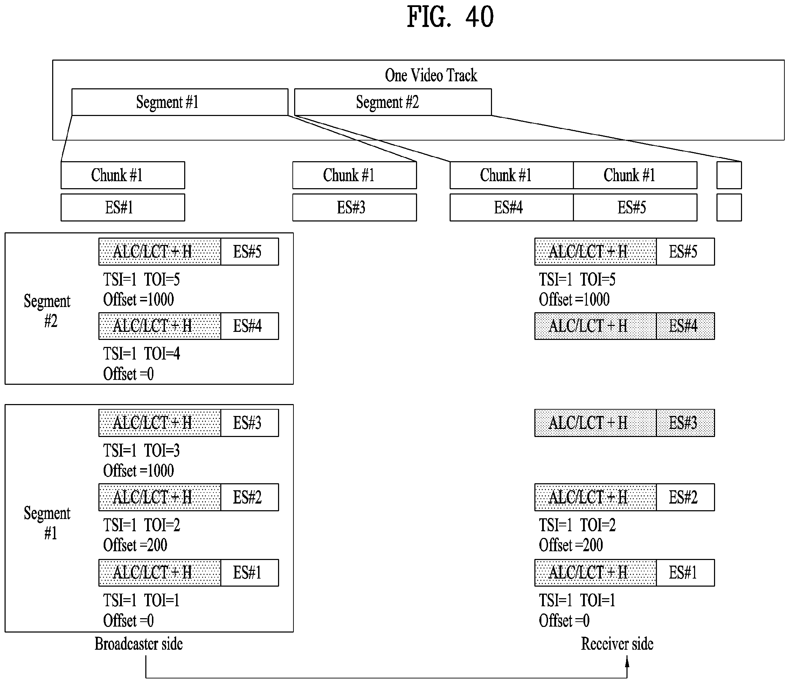

FIG. 40 is a diagram illustrating transmission and reception of an application layer transmission protocol packet according to an embodiment of the present invention.

The aforementioned application layer transmission protocol packet may be generated by a transmitter and transmitted to a receiver.

As described above, when one TSI is mapped to one track and one TOI is mapped to one chunk, an application layer transmission protocol packet for transmitting data of each segment is generated. In this case, when an ALC.LCT+ packet generated and transmitted by a transmitting side is received by a receiver, there is a problem in that the receiver does not know a segment to which the application layer transmission protocol packet belongs. TOIs may be set to respective chunks, each chunk may be divided into one or more ESs, and each ES is transmitted in an application layer transmission protocol packet and, thus, a receiver that receives the application layer transmission protocol packet may not know a segment to which a corresponding application layer transmission protocol packet or an ES included in the application layer transmission protocol packet belongs. Accordingly, there is a need for a method of recognizing a segment (or a file) to which each chunk belongs by a receiver.

Referring to the drawing, a video track may include Segment #1 and Segment #2. Segment #1 may include Chunk #1 to Chunk #3. Segment #2 may include Chunk #1 and Chunk #2. In this example, each chunk is assumed to be transmitted in each ES. In this case, three application layer transmission protocol packets generated with respect to Segment #1 may be present and an ES for transmitting a chunk including first data of Segment #1 may be set with TSI '1' and TOI '1' and may be transmitted through an application layer transmission protocol packet set with offset information '0'. ES #2 for transmitting Chunk #2 included in Segment #1 may be set with TSI '1' and TOI '2' and may be transmitted through an application layer transmission protocol packet set with offset information '200'. ES #3 for transmitting Chunk #3 included in Segment #1 may be set with TSI '1' and TOI '3' and may be transmitted through an application layer transmission protocol packet set with offset information '1000'. ES #4 for transmitting Chunk #1 include in Segment #2 may be set with TSI '1' and TOI '4' and may be transmitted through an application layer transmission protocol packet set with offset information '0'. ES #5 for transmitting Chunk #2 included in Segment #2 may be set with TSI '1' and TOI '5' and may be transmitted through an application layer transmission protocol packet set with offset information '1000'.

When application layer transmission protocol packets are sequentially transmitted to a receiver from a transmitter, the receiver may recognize application layer transmission protocol packets corresponding to a TSI with a value of '1' as packets for transmitting data with respect to the same track. Accordingly, during a procedure of collecting application layer transmission protocol packets with the same TSI, the receiver may collects application layer transmission protocol packets in an order of a value of the TOI. However, when application layer transmission protocol packets for transmitting ES #3 and/or ES #4 are lost, there is a problem in that the receiver may not determine whether an ES (or a chunk) for transmitting an application layer transmission protocol packet set with TSI '1', TOI '5', and offset information '1000' belongs to Segment #1 or Segment #2.

According to an embodiment of the present invention, in order to overcome the aforementioned problem, an ID value of a track may be used with respect to a TSI. Here, the track may be interpreted to correspond to representation of MPEG-DASH. In addition, with respect to a TOI, a combination value of an ID of an ISO BMFF file and an ID of a chunk may be used. When one ISO BMFF object datum is set in the same way as one ISO BMFF file, the ISO BMFF object datum may be assumed to include one chunk. According to an embodiment of the present invention, in order to set information on priority of each ISO BMFF object datum (or chunk), 2 reserved bits may be used.

According to an embodiment of the present invention, offset information up to an application layer transmission protocol packet from a start portion of each file may be set. The information may be included in signaling information and/or an application layer transmission protocol packet. When a value of offset information is '0', an application layer transmission protocol packet to which the corresponding value is applied may indicate an application layer transmission protocol packet for transmitting data of the start portion of the ISO BMFF file. The application layer transmission protocol packet may include information (e.g., start time and duration time of presentation, and/or information for synchronization with other content) indicating presentation timing of media and/or location information (e.g., URL information) on required data in relation to the corresponding file or the application layer transmission protocol packet.

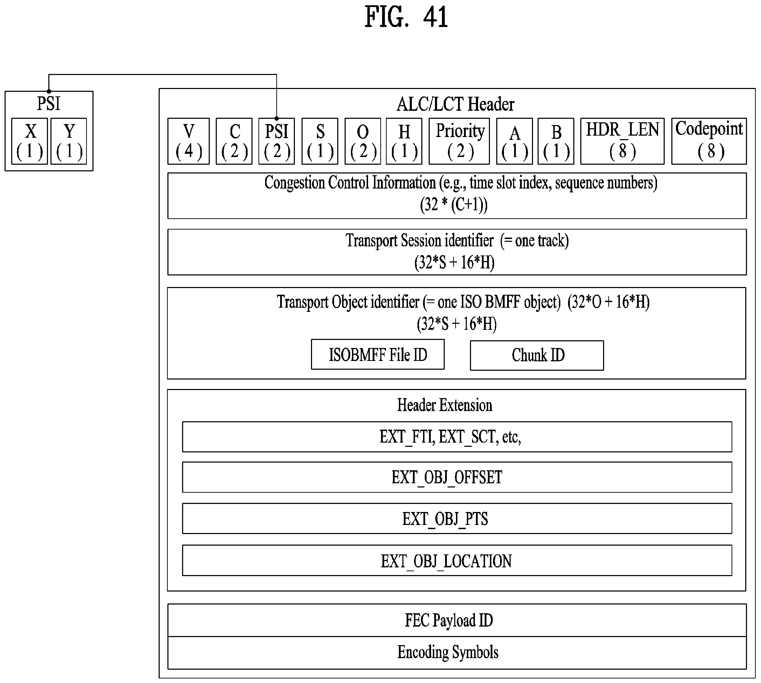

FIG. 41 is a diagram illustrating a structure of an application layer transmission protocol packet according to an embodiment of the present invention.

The application layer transmission protocol packet may include a v element, a c element, a PSI element, an S element, an O element, an H element, a Priority element, an A element, a B element, an HDR_LEN element, a Codepoint element, a Congestion Control Information element, a Transport Session Identifier (TSI) element, a Transport Object Identifier (TOI) element, an EXT_FTI element, an EXT_SCT element, an EXT_OBJ_OFFSET element, an EXT_OBJ_PTS element, an EXT_OBJ_LOCATION element, an FEC payload ID element, and/or an Encoding Symbol element.

The PSI element may include an X element and/or a Y element.

The v element may indicate a version number of a packet. The v element may indicate a version of ALC/LC. The v element may indicate that the current packet is a packet subsequent to the ALC/LCT+.

The c element may correspond to a Congestion control flag. The c element may indicate a length of the Congestion Control Information (CCI) element. For example, when a value of the c element is 0, the c element may indicate that the length of CCI is 32 bits, when a value of the c element is 1, the c element may indicate that the length of CCI is 64 bits, when a value of the c element is 2, the c element may indicate that the length of CCI is 96 bits, and when a value of the c element is 3, the c element may indicate that the length of CCI is 128 bits.

The PSI element may correspond to Protocol-Specific Indication (PSI). The PSI element may be used as an indicator with a specific purpose a higher protocol of ALC/LCT+. The PSI element may indicate whether a current packet corresponds to a source packet or an FEC repair packet.

The X element may correspond to information indicating a source packet. When different FEC payload ID formats are used for Source and repair data, if a value of the X element is '1', the X element may indicate an FEC payload ID format for source data, and if a value of the X element is '0', the X element may indicate an FEC payload ID format for repair data. In addition, when a value of the X element is set to '0' by a transmitter, a receiver may disregard the O element or the packet and may not process the O element or the packet.

The S element may correspond to a Transport Session Identifier flag. The S element may indicate a length of the Transport Session Identifier element.

The O element may correspond to a Transport Object Identifier flag. The O element may indicate a length of the Transport Object Identifier. An object may refer to one file and the TOI may be identification information of each object and a file with TOI of 0 may include signaling information associated with the file.

The H element may correspond to a Half-word flag. The H element may indicate whether a half-word (16 bits) is added to a length of TSI and TOI fields.

The Priority element may indicate priority of data included in the packet. With regard to the Priority element, a description of each object, chunk, or priority between boxes included in each is substituted with the above description.

The A element may correspond to a Close Session flag. The A element may indicate that a session is terminated or session termination is imminent.

The B element may correspond to a Close Object flag. The B element may indicate that a transmitted object is terminated or termination of the object is imminent.

The HDR_LEN element may indicate a length of a header of a packet.

The Codepoint element may indicate a type of a payload transmitted by the packet. According to a payload type, an additional payload header may be inserted into a prefix of payload data.

The Congestion Control Information (CCI) element may include Congestion Control information such as layer numbers, logical channel numbers, and sequence numbers. The Congestion Control Information (CCI) element may include required Congestion Control related information.

The Transport Session Identifier (TSI) element may be a unique identifier of a session. The TSI element may indicate any one of sessions from a specific sender. The TSI element may identify a transport session. A value of the TSI element may be used for one track.

The Transport Object Identifier (TOI) element may be a unique identifier of an object. The TOI element may indicate an object to which the packet belongs in a session. A value of the TOI element may be used for one ISO BMFF object dattum. The TOI element may include an ID of an ISO BMFF file and an ID of chunk. The TOI element may have a combination of the ID of the ISO BMFF file and the ID of the chunk as a value of the TOI element.

The EXT_FTI element may include information on FEC Transport Information.

The EXT_SCT element may correspond to extension information of Sender Current Time. The EXT_SCT element may include time information at a transmitter side.

The EXT_OBJ_OFFSET element may indicate offset of an object. The EXT_OBJ_OFFSET element may indicate offset at a location of a segment, in which an object (e.g., ISO BMFF object data or chunk) included in the packet is positioned, from a start portion of the segment (e.g., ISO BMFF file or file). A detailed description of the EXT_OBJ_OFFSET element is substituted with the above description of each device. Information indicating offset may be included in the payload of an application layer transmission protocol packet.

The EXT_OBJ_PTS element may indicate the presentation timestamp (PTS) of an object.

The EXT_OBJ_LOCATION element may identify a location of an object. The EXT_OBJ_LOCATION element may identify a location of an object, including a URL or the like of an object included in a payload of the packet. The location may be indicated by a URL or the like.

The FEC payload ID element may be an identifier of an FEC Payload identifier. The FEC payload ID element may include identification information of a Transmission Block or an encoding symbol. The FEC Payload ID may be an identifier when the file is FEC-encoded. For example, when the FLUTE protocol file is FEC encoded, the FEC Payload ID may be allocated in order for a broadcaster or a broadcast server to differentiate the FEC Payload ID.

The Encoding Symbols element may include data of a Transmission Block or an encoding symbol.

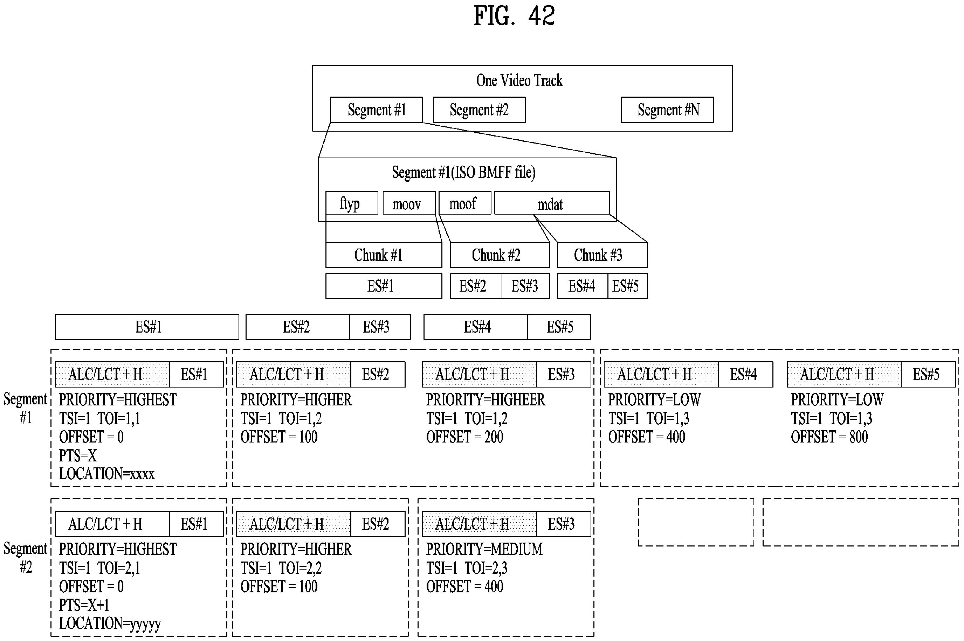

FIG. 42 is a diagram illustrating processing of an application layer transmission protocol packet according to an embodiment of the present invention.

According to an embodiment of the present invention, a value of one TSI may be allocated for one track and a value of one TOI may include a value for identification of an ID of an ISO BMFF file and an ID of a chunk.

Referring to the drawing, one video track may include N segments. Segment #1 may correspond to one ISO BMFF file. A segment may be divided into one or more chunks. Each chunk may be transmitted through one or more ESs. Each ES may be transmitted through a payload of an application layer transmission protocol packet.

An application layer transmission protocol packet for transmitting ES 1 included in Segment #1 may include data corresponding to a start portion of the ISO BMFF file and a moov box. Accordingly, the application layer transmission protocol packet may have a value of the Priority element of 'highest' (most important), the TSI element may have a value indicating a corresponding video track (e.g., 1), and the TOI element may have both a value '1' for identification of Segment #1 in a corresponding ding video track and a value '1' indicating data included in first chunk in the corresponding segment. In addition, since data of a start portion of the segment is transmitted, an offset element of the application layer transmission protocol packet may correspond to 0.

The application layer transmission protocol packet for transmitting ES #2 included in Segment #1 may include a portion of Chunk #2 including some of a moof box and an mdat box. Accordingly, the application layer transmission protocol packet may have a value of a Priority element of 'higher' (more important), the TSI element may have a value (e.g., 1) indicating a corresponding video track, and the TOI element may have both a value '1' for identifying Segment #1 in a corresponding video track and a value '2' indicating data included in second chunk in the corresponding segment. In addition, the offset element may indicate that data transmitted by the application layer transmission protocol packet is data positioned at a point with offset of 100 from a start point of the segment. An application layer transmission protocol packet for transmitting ES #3 included in Segment #1 transmits data included in Chunk #2 and, thus, the priority element, the TSI element, and the TOI element may have the same value as an application layer transmission protocol packet for transmitting ES #2. However, an application layer transmission protocol packet for transmitting ES #3 may have a different offset element value from an offset element value of the application layer transmission protocol packet for transmitting ES #2.

An application layer transmission protocol packet for transmitting ES #4 included in Segment #1 may include a portion of Chunk #3 including a portion of an mdat box. Accordingly, the application layer transmission protocol packet may have a value of a Priority element of 'low' (low), the TSI element may have a value (e.g., 1) indicating a corresponding video track, and the TOI element may have both of a value '1' for identification of Segment #1 in a corresponding video track and a value '3' indicating data included in a third chunk in the corresponding segment. The offset element may indicate that data transmitted by the application layer transmission protocol packet is data positioned at a point with an offset of 400 from a start portion of the segment. An application layer transmission protocol packet for transmitting ES #5 included in Segment #1 transmits data included in Chunk #3 and, thus, the priority element, the TSI element, and the TOI element may have the same value as an application layer transmission protocol packet for transmitting ES #4. However, the application layer transmission protocol packet for transmitting ES #5 may have a different offset element value from an offset element value of the application layer transmission protocol packet for transmitting ES #4.

The application layer transmission protocol packet for transmitting ES #1 included in Segment #2 may include data corresponding to a start portion of the ISO BMFF file and include a moov box. Accordingly, the application layer transmission protocol packet may have a value of a Priority element of 'highest' (most important), the TSI element may have a value (e.g., 1) indicating a corresponding video track, and the TOI element may have both a value '2' for identification of Segment #2 of the corresponding video track and a value '1' indicating data included in a first chunk in the corresponding segment. In addition, since data of a start portion of the segment is transmitted, an offset element of the application layer transmission protocol packet may correspond to 0.

The application layer transmission protocol packet for transmitting ES #2 included in Segment #2 may include a portion of Chunk #2 including some of a moof box and an mdat box. Accordingly, the application layer transmission protocol packet may have a value of a Priority element of 'higher' (more important), the TSI element may have a value (e.g., 1) indicating a corresponding video track, and the TOI element may have both a value '2' for identifying Segment #2 in a corresponding video track and a value '2' indicating data included in a second chunk in the corresponding segment. In addition, the offset element may indicate that data transmitted by the application layer transmission protocol packet is data positioned at a point with an offset of 100 from a start portion of the segment.

The application layer transmission protocol packet for transmitting ES #3 included in Segment #2 may include a portion of Chunk #3 including a portion of the mdat box. Data of the corresponding mdat box may include more important data than data of another mdat box. Accordingly, the application layer transmission protocol packet may have a value of a Priority element of 'medium' (regular), the TSI element may have a value (e.g., 1) indicating a corresponding video track, and the TOI element may have a value of '2' for identification of Segment #2 in a corresponding video track and a value of '3' indicating data included in a third chunk in the corresponding segment. In addition, the offset element may indicate that data transmitted by the application layer transmission protocol packet is the data positioned at a point with offset of 400 from a start point of a segment.

The application layer transmission protocol packets included in Segment #1 and Segment #2 may include PTS element values, respectively. In this regard, when the PTS element value of the application layer transmission protocol packet included in Segment #1 is x, the value PTS element value of the application layer transmission protocol packet included in Segment #2 may be x+1.

When an application layer transmission protocol packet is configured as described above, the receiver may know a segment (or an ISO BMFF file) to which a specific application layer transmission protocol packet belongs and, thus, even if a portion of the application layer transmission protocol packet is lost during a transmission procedure, the received application layer transmission protocol packet may be decoded at an accurate position.

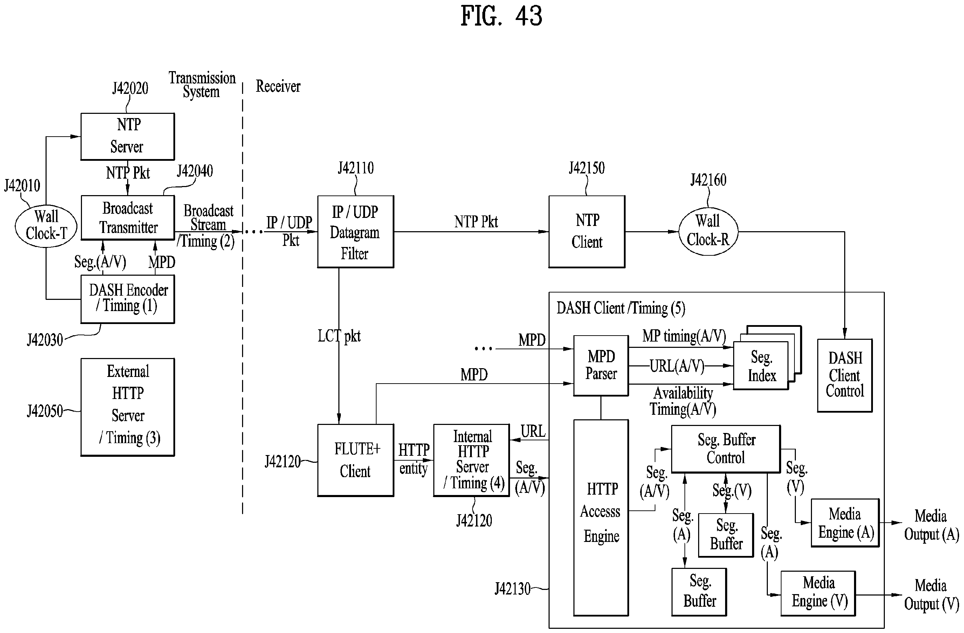

FIG. 43 is a diagram illustrating a broadcast system according to an embodiment of the present invention.

As described above, a broadcast receiver according to an embodiment of the present invention may provide broadcast streaming using MPD of MPEG-DASH. According to an embodiment of the present invention, the broadcast receiver may receive and process broadcast signals and/or broadcast data through a broadband and/or broadcast. Accordingly, the MPD may be used both in a broadband and broadcast. Alternatively, the MPD may be used only in a broadband.

The drawing illustrates an operation of a broadcast system when the MPD is used both in broadcast and a broadband, according to an embodiment of the present invention.

According to an embodiment of the present invention, the broadcast system may include a transmission system and a receiver.

The transmission system (transmitter) may include a wall clock-T J42010, an NTP server J42020, a DASH encoder J42030, a broadcast transmitter J42040, and/or an external HTTP server J42050.

The receiver may include an IP/UDP datagram filter J42110, a FLUTE+ client J42120, a DASH client J42130, an internal HTTP server J42140, an NTP client J42150, and/or a wall clock-R J42160.

The wall clock-T J42010 may process and provide information on reference time of the broadcast transmitter.

The NTP server J42020 may generate network time protocol (NTP) information and generate an NTP packet including the NTP information using the information on the reference time of the broadcast transmitter.

The DASH encoder J42030 may encode a segment including broadcast data according to the information on the reference time of the broadcast transmitter. The DASH encoder J42030 may encode MPD including data and/or description information of media (broadcast services, broadcast content, and/or broadcast events) according to the information on the reference time of the broadcast transmitter.

The broadcast transmitter J42040 may transmit a broadcast stream including the NTP packet, the segment, and/or the MPD.

The external HTTP server J42050 may process a response to a request for MPD or process a response to a request for data on media such as a segment. The external HTTP server J42050 may be positioned inside or outside the broadcast transmitter.

The IP/UDP datagram filter J42110 may filter an IP/UDP datagram or an IP packet separated from a broadcast signal. The IP/UDP datagram filter J42110 may filter an NTP packet and a packet (an application layer transmission protocol packet or an LCT packet) including media.

The FLUTE+ client J42120 may extract MPD from a received packet. The FLUTE+ client J42120 may extract an HTTP entity including information on media.

The DASH client J42130 may include an MPD parser, an HTTP access engine, a Seg. buffer control, a Seg. buffer, a Seg. Index, a DASH client control, and/or a media engine. The DASH client J42130 may process the MPD, may make a request for a segment according to the MPD or receive and process the segment. The MPD parser may parse the MPD. The HTTP access engine may communicate with a server through a HTTP and request or receive required data. The Seg. buffer control may control a segment buffer. The Seg. Buffer may buffer a segment. The Seg. Index may manage and process an index of a segment so as to sequentially process the segment. Information on an index of the segment may be included in the MPD. The Seg. Index may acquire information on timing of a segment and process the information so as to decode the segment according to timing. The DASH client control may control a DASH client. The DASH client control may control the DASH client to operate according to the reference time of the broadcast system. The media engine may decode a segment and generate media.

The internal HTTP server J42140 may receive a request for a specific segment of the DASH client and transmit the corresponding segment to the DASH client in response to the request. The DASH client may transmit URL information of the corresponding segment to the HTTP server. The internal HTTP server J42140 may be positioned inside or outside the receiver.

The NTP client J42150 may receive and parse the NTP packet.

The wall clock-R J42160 may maintain synchronization between reference time of the receiver and reference time of the network system using the NTP information.

According to an embodiment of the present invention, segments may be input as a broadcast stream immediately upon being encoded by a broadcast transmitter. Predetermined delay may occur during a transmission procedure to a receiver from a transmitter. Predetermined delay may occur between the receiver and one clock. The segment may be transmitted to the DASH client in the internal HTTP server.

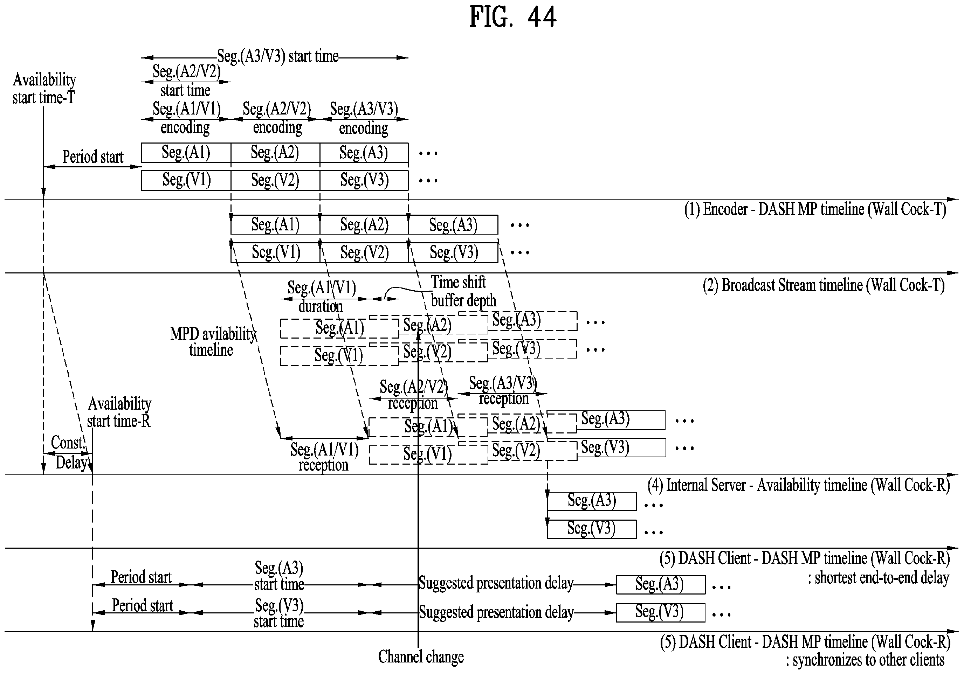

FIG. 44 is a diagram illustrating timing of processing of a segment in a broadcast system according to an embodiment of the present invention.

The drawing illustrates timelines in Timing (1), Timing (2), Timing (4), and Timing (5) displayed in each device in FIG. 43.

A segment A1 may transmit data of audio 1.

A segment V1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 4 may be a timeline in an internal server of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period.

In the timeline 2, when encoding of each segment is terminated, the transmitter may transmit the corresponding segment.

The drawing illustrates an availability timeline indicating available time of a segment described by MPD in the timeline 4. Actual duration time of a segment and time of each segment according to a time shift buffer depth may be combined to be set to a length of the corresponding segment.

In the timeline 4, time in which each segment is actually received may have constant delay based on transmission time.

With reference to the timeline 5, at a time point at which channel change occurs, the segment A3 and the segment V3 may be available and suggested presentation delay for presentation of the segment A3 and the segment V3 may be set in consideration of synchronization time between the above segments and the processing result of another client. The receiver may add time periods indicated by period start information, start time information of each of the segment A3 and the segment V3, and suggested presentation delay information to determine time for presentation of the segment A3 and the segment V3 after a period is started.

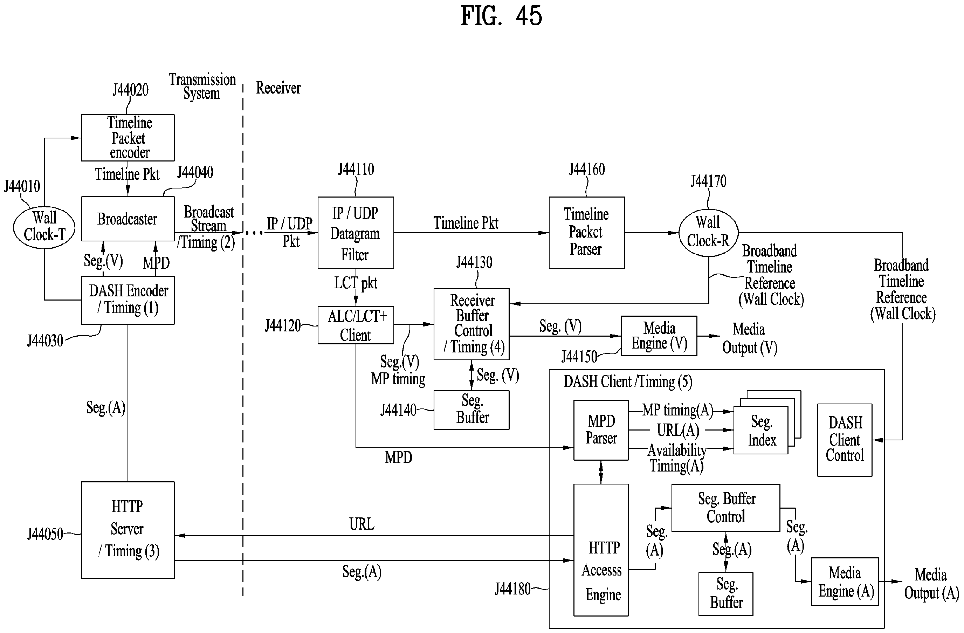

FIG. 45 is a diagram illustrating an operation of a broadcast system when MPD is used both in a broadband and broadcast according to an embodiment of the present invention.

According to an embodiment of the present invention, the broadcast system may include a transmission system and a receiver.

The transmission system (transmitter) may include a wall clock-T J44010, a timeline packet encoder J44020, a DASH encoder J44030, a broadcaster J44040, and/or an external HTTP server J44050.

The receiver may include an IP/UDP datagram filter J44110, an ALC/LCT+ client J44120, a receiver buffer control J44130, a Seg. buffer J44140, a media engine J44150, a timeline packet parser J44160, a wall clock-R J44170, and/or a DASH client J44180.

The wall clock-T J44010 may process and provide information on reference time of the broadcast transmitter.

The timeline packet encoder J44020 may generate a timeline packet including information on synchronization of media or synchronization of reference time between the broadcast system and the broadcast receiver.

The DASH encoder J44030 may encode a segment including broadcast data according to information on the reference time of the broadcast transmitter. The DASH encoder J44030 may encode MPD including data and/or description information on media (broadcast service, broadcast content, and/or broadcast events) according to the information on reference time of the broadcast transmitter.

The broadcaster J44040 may transmit a broadcast stream including a timeline packet, a segment, and/or MPD.

The external HTTP server J44050 may process a response to a request for MPD or process a response to a request for data on media such as a segment. The external HTTP server J44050 may be positioned inside or outside the broadcast transmitter. The external HTTP server J44050 may receive a request for a specific segment (e.g., Seg.(A)) from the DASH client. The request may include location information (e.g., URL information) of a specific segment. The external HTTP server J44050 may receive the corresponding segment from the DASH encoder and transmit the segment to the DASH client.

The IP/UDP datagram filter J44110 may filter an IP packet or IP/UDP datagram separated from a broadcast signal. The IP/UDP datagram filter J44110 may filter a timeline packet and a packet (an application layer transmission protocol packet or an LCT packet) including data on media.

The ALC/LCT+ client J44120 may extract MPD from the received packet. The ALC/LCT+ client J44120 may extract a segment (e.g., Seg.(V)) including the data on media.

The receiver buffer control J44130 may control an operation of a segment buffer in the receiver. The receiver buffer control J44130 may receive a segment transmitted to an application layer transmission protocol packet. When buffering is required, the receiver buffer control J44130 may transmit a corresponding segment to the segment buffer. The receiver buffer control J44130 may receive broadband timeline reference (wall clock) and receiver timing information on a segment. The receiver buffer control J44130 may transmit a segment to a media engine and so on according to wall clock and timing of the segment and perform control to consume the corresponding segment.

The Seg. buffer J44140 may buffer the segment.

The media engine J44150 may decode the segment and present media corresponding to the segment.

The timeline packet parser J44160 may parse the timeline packet.

The wall clock-R J44170 may perform processing to maintain synchronization between reference time of the receiver and reference time of the system using information in the timeline packet.

The DASH client J44180 may include an MPD parser, an HTTP access engine, a Seg. buffer control, a Seg. buffer, a Seg. Index, a DASH client control, and/or a media engine. The DASH client J44180 may process the MPD and a segment according to the MPD or receive and process the segment. The MPD parser may parse the MPD. The MPD parser may extract timing information (e.g., PTS) in an existing broadcast system about a segment (A), URL information of the segment, and/or available timing information of the segment from the MPD. The HTTP access engine may communicate a server through HTTP and request or receive required data. The Seg. buffer control may control the Seg. buffer. The Seg. Buffer may buffer the segment. The Seg. Index may manage and process an index of the segment so as to sequentially process segments. Information on the index of the segment may be included in the MPD. The Seg. Index may acquire information on timing of the segment and perform processing to decode the segment according to timing. The DASH client control may control the DASH client. The DASH client control may control the DASH client to operate according to the reference time of the broadcast system. The media engine may decode the segment to generate media.

According to the present invention, a segment Seg.(V) for transmitting video data and a segment Seg.(A) for transmitting audio data may be transmitted using different transmission methods and processed via different processing procedures to configure a portion of one media.

According to an embodiment of the present invention, segments may be input in a broadcast stream immediately upon being encoded by the broadcast transmitter. The segments may be used by an external server immediately upon being encoded by the broadcast transmitter. During a transmission procedure to the receiver from the transmitter, constant delay may occur. Constant delay between wall clock (reference time) between the transmitter and the receiver may occur. The segment may be immediately transmitted to the DASH client from the internal server.

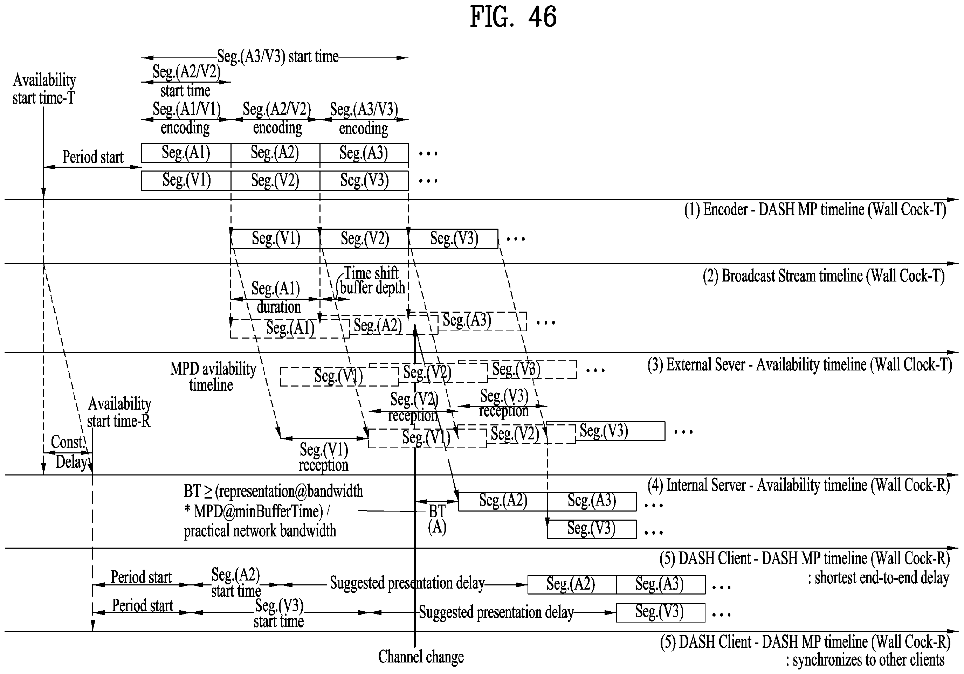

FIG. 46 is a timing diagram of processing of a segment in a broadcast system according to another embodiment of the present invention.

The drawing illustrates respective timelines at Timing (1), Timing (2), Timing (3), Timing (4), and Timing (5) indicated by each device of FIG. 45 and timing of a segment in a corresponding timeline.

A segment A1 may transmit data of audio 1.

A segment V 1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 3 may be a timeline in an external server.

A timeline 4 may be a timeline in an internal server of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period.

In the timeline 2, when encoding of each segment is terminated, the transmitter may transmit the corresponding segment. Here, segments including video data may be transmitted through a broadcast network. That is, the segment V1, the segment V2, and the segment V3 may be transmitted through the broadcast network.

In the timeline 3, the segment A1, the segment A2, and the segment A3 for transmitting audio data corresponding to segments for transmitting video data may present available time in an external server.

The drawing illustrates an availability timeline indicating available time of a segment described by MPD in the timeline 4. Actual duration time of a segment and time of each segment according to a time shift buffer depth may be combined to be set to a length of the corresponding segment.

In the timeline 4, time in which each segment is actually received may have constant delay based on transmission time.

With reference to the timeline 5, at a time point in which channel change occurs, the segment A2, the segment A3, and the segment V3 may be available and suggested presentation delay for presentation of the segment A2, the segment A3, and the segment V3 may be set in consideration of synchronization time between the above segments and the processing result of another client. The receiver may add time periods indicated by period start information, start time information of each of the segment A2, the segment A3, and the segment V3, and suggested presentation delay information to determine time for presentation of the segment A2, the segment A3, and the segment V3 after a period is started. Time for presentation of content may be varied according to receivers but a time difference for presentation of content between receivers may be deleted using the suggested presentation delay.

When the MPD is used both in a broadband and broadcast, the receiver may first receive a segment transmitted over a broadband network before a segment transmitted on a broadcast channel.

An existing DASH availability timeline (for an external server) may not be used for segments transmitted in a broadcast stream (in an internal server). The segment availability time in an internal server may be affected by channel change time. In addition, segment reception time needs to be considered and the receiver may measure the segment availability time in consideration of the segment reception time. In the aforementioned embodiment, when constant delay varies according to receiver, it may be difficult to accurately synchronize the DASH presentation time using the suggested presentation delay information.

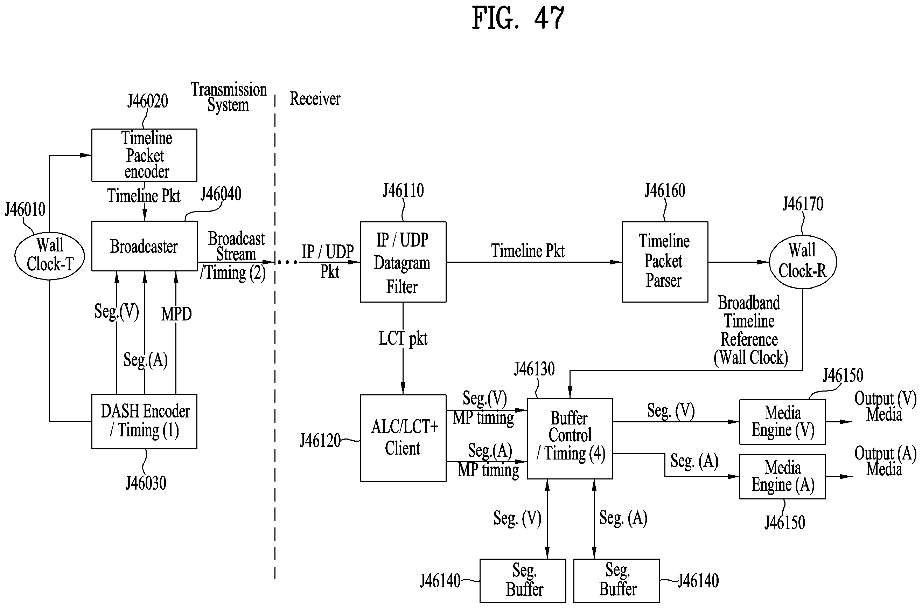

FIG. 47 is a diagram illustrating a broadcast system when MPD is used only in a broadband according to another embodiment of the present invention.

According to an embodiment of the present invention, the broadcast system may include a transmission system and a receiver.

The transmission system (transmitter) may include a wall clock-T J46010, a timeline packet encoder J46020, a DASH encoder J46030, and/or a broadcaster J46040.

The receiver may include an IP/UDP datagram filter J46110, an ALC/LCT+ client J46120, a receiver buffer control J46130, a Seg. buffer J46140, a media engine J46150, a timeline packet parser J46160, and/or a wall clock-R J46170.

The wall clock-T J46010 may process and provide information on reference time of a broadcast transmitter.

The timeline packet encoder J46020 may generate a timeline packet including information on synchronization of media or synchronization of reference time between the broadcast system and the broadcast receiver.

The DASH encoder J46030 may encode a segment including broadcast data according to information on the reference time of the broadcast transmitter. The DASH encoder J46030 may encode MPD including description information and/or data on media (broadcast services, broadcast content, and/or broadcast events) according to information on the reference time of the broadcast transmitter.

The broadcaster J46040 may transmit a broadcast stream including a timeline packet, a segment, and/or MPD.

The IP/UDP datagram filter J46110 may filter an IP packet or IP/UDP datagram separated from the broadcast signal. The IP/UDP datagram filter J46110 may filter a timeline packet and a packet (application layer transmission protocol packet or LCT packet) including data on media.

The ALC/LCT+ client J46120 may extract a segment (e.g., Seg.(V) and Seg.(A)) including data on media. The ALC/LCT+ client J46120 may extract information (e.g., timing information used in MPEG2 TS) for existing timing instead of the MPD. The information for timing may be included in each segment.

The receiver buffer control J46130 may control an operation of a Seg. Buffer in the receiver. The receiver buffer control J46130 may receive a segment transmitted in the application layer transmission protocol packet. When buffering is required, the receiver buffer control J46130 may transmit the corresponding segment to the Seg. Buffer. The receiver buffer control J46130 may receive broadband timeline reference (wall clock) and receive timing information on the segment. The receiver buffer control J46130 may transmit the segment to the media engine and so on according to timing of the segment and wall clock and perform control so as to consume the corresponding segment.

The Seg. buffer J46140 may buffer a segment.

The media engine J46150 may decode the segment and present media corresponding to the segment.

The timeline packet parser J46160 may parse a timeline packet.

The wall clock-R J46170 may perform processing so as to maintain synchronization of reference time between the receiver and the system using information in the timeline packet.

According to an embodiment of the present invention, segments may be input in a broadcast stream immediately upon being encoded by the broadcast transmitter. The wall clock may be transmitted to the receiver from the transmitter in the form of broadcast timeline reference. During a transmission procedure to the receiver from the transmitter, constant delay may occur. Constant delay of wall clock (reference time) between the transmitter and the receiver may occur.

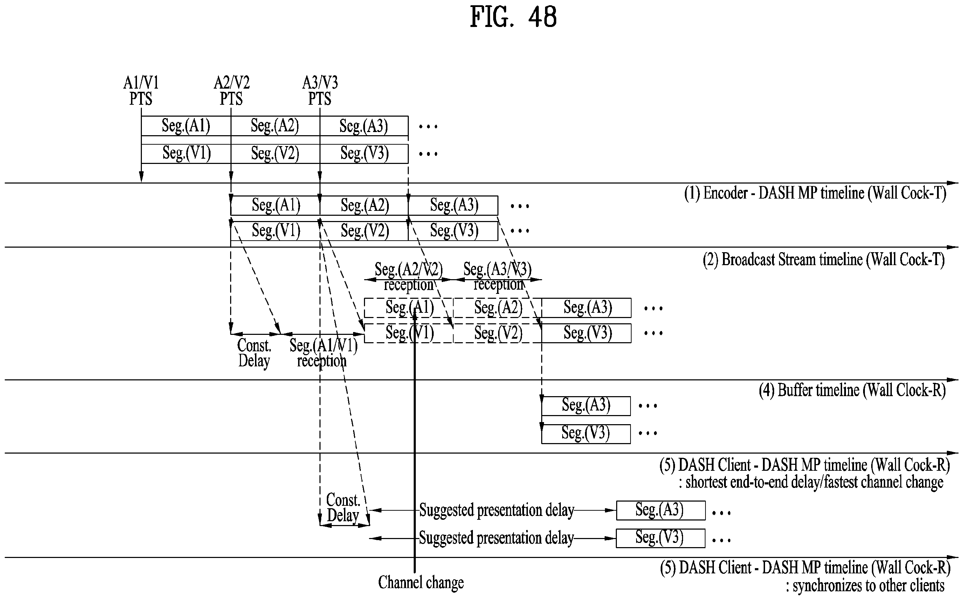

FIG. 48 is a diagram illustrating timing of processing of a segment in a broadcast system according to another embodiment of the present invention.

The drawing illustrates respective timelines at Timing (1), Timing (2), Timing (4), and Timing (5) indicated by each device of FIG. 47 and timing of a segment in a corresponding timeline.

A segment A1 may transmit data of audio 1.

A segment V1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 4 may be a timeline applied to a buffer of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period. Each segment may include PTS.

In the timeline 2, when encoding of each segment is terminated, the transmitter may transmit the corresponding segment.

With reference to the timeline 4, constant delay and time required for receiving each segment elapse and, then, each segment may be available.

With reference to the timeline 5, at a time point at which channel change occurs, some data of the segment A2 and the segment V2 may not be received. After a time point at which channel change occurs, both the segment A3 and the segment V3 may be received. In consideration of time for synchronization of synchronization time between the above segments and the processing result of another client, suggested presentation delay for presentation of the segment A3 and the segment V3 may be set.

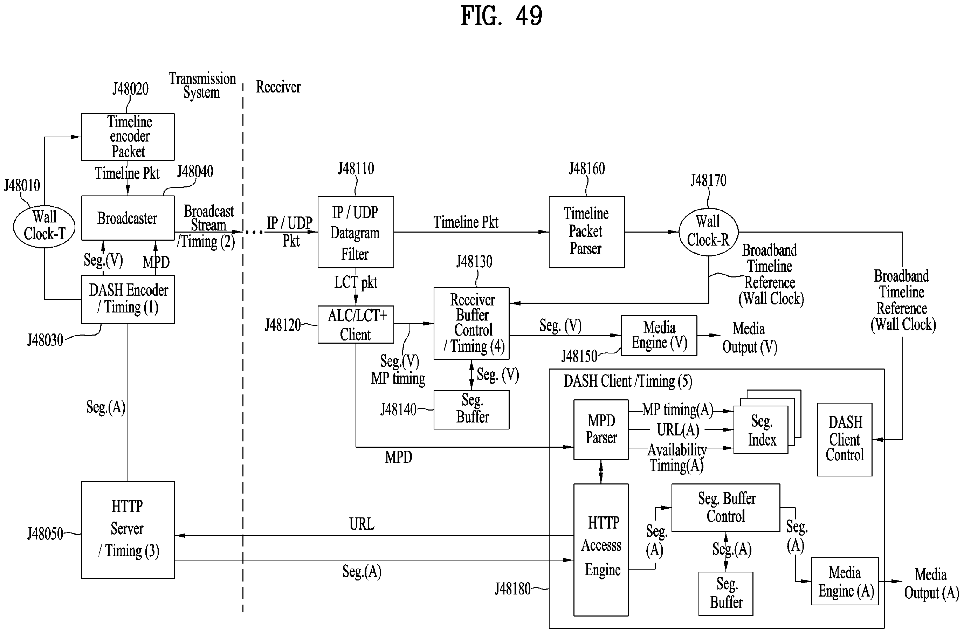

FIG. 49 is a diagram illustrating a broadcast system when MPD is used only in a broadband according to another embodiment of the present invention.

According to an embodiment of the present invention, the broadcast system may include a transmission system and a receiver.

The transmission system (transmitter) may include a wall clock-T J48010, a timeline packet encoder J48020, a DASH encoder J48030, a broadcaster J48040, and/or an HTTP server J48050.

The receiver may include an IP/UDP datagram filter J48110, an ALC/LCT+ client J48120, a receiver buffer control J48130, a Seg. buffer J48140, a media engine J48150, a timeline packet parser J48160, a wall clock-R J48170, and/or a DASH client J48180.

The wall clock-R J48170 may process and provide information on reference time of a broadcast transmitter.

The timeline packet encoder J48020 may generate a timeline packet including information for synchronization of media or synchronization of reference time between the broadcast system and the broadcast receiver.

The DASH encoder J48030 may encode a segment including data according to information on reference time of the broadcast transmitter. The DASH encoder J44030 may encode MPD including data and/or description information on media (broadcast services, broadcast content, and/or broadcast events) according to information on the reference time of the broadcast transmitter.

The broadcaster J48040 may transmit a broadcast stream including a timeline packet, a segment, and/or MPD.

The HTTP server J48050 may process a response to a request for MPD or process a response to a request for data on media such as a segment. The HTTP server J48050 may be positioned inside or outside the broadcast transmitter. The HTTP server J48050 may receive a request for a specific segment (e.g., Seg.(A)) from the DASH client. The request may include location information (e.g., URL information) of a specific segment. The HTTP server J48050 may receive a corresponding segment from the DASH encoder and transmit the segment to the DASH client.

The IP/UDP datagram filter J48110 may filter an IP packet or IP/UDP datagram separated from a broadcast signal. The IP/UDP datagram filter J48110 may filter a timeline packet and a packet (an application layer transmission protocol packet or an LCT packet) including data on media.

The ALC/LCT+ client J48120 may extract MPD from the received packet. The ALC/LCT+ client J48120 may extract a segment (e.g., Seg.(V)) including data on media. The ALC/LCT+ client J48120 may extract information (e.g., timing related information used in transmission of MPEG2-TS) related to timing used in an existing broadcast system. In addition, information related to timing used in an existing broadcast system may be included in the Segment V.

The receiver buffer control J48130 may control an operation of the segment buffer in the receiver. The receiver buffer control J48130 may receive a segment transmitted in the application layer transmission protocol packet. When buffering is required, the receiver buffer control J48130 may transmit a corresponding segment to the segment buffer. The receiver buffer control J48130 may receive broadband timeline reference (wall clock) and receive timing information on the segment. The receiver buffer control J48130 may transmit a segment to a media engine and so on according to timing of the segment and wall clock and perform control so as to consume the corresponding segment.

The Seg. buffer J48140 may buffer the segment.

The media engine J48150 may decode the segment and present media corresponding to the segment.

The timeline packet parser J48160 may parse a timeline packet.

The wall clock-R J48170 may perform processing synchronization of reference time between the receiver and the system using information in the timeline packet.

The DASH client J48180 may include an MPD parser, an HTTP access engine, a Seg. buffer control, a Seg. buffer, a Seg. Index, a DASH client control, and/or a media engine. The DASH client J44180 may process MPD and make a request for a segment according to the MPD or receive and process the segment. The MPD parser may parse the MPD. The MPD parser may extract timing information (e.g., PTS) in an existing broadcast system about the segment A, URL information of the segment, and/or available timing information of the segment from the MPD. The HTTP access engine may communicate with the server and request or receive data through HTTP. The Seg. buffer control may control a segment buffer. The Seg. Buffer may buffer a segment. The Seg. Index may manage and process an index of the segment so as to sequentially process the segment. Information on an index of the segment may be included in the MPD. The Seg. Index may acquire information on timing of the segment and perform processing so as to decode the segment according to timing. The DASH client control may control the DASH client. The DASH client control may control the DASH client to operate according to the reference time of the broadcast system. The media engine may decode the segment to generate media.

According to the present invention, a segment Seg.(V) for transmitting video data and a segment Seg.(A) for transmitting audio data may be transmitted using different transmission methods and processed via different processing procedures to configure a portion of one media.

According to an embodiment of the present invention, segments may be input in a broadcast stream immediately upon being encoded by the broadcast transmitter. The transmitter may transmit the wall clock to the receiver in the form of a broadcast timeline reference. During a transmission procedure from the transmitter to the receiver, constant delay may occur. Constant delay between wall clock (reference time) between the transmitter and the receiver may occur.

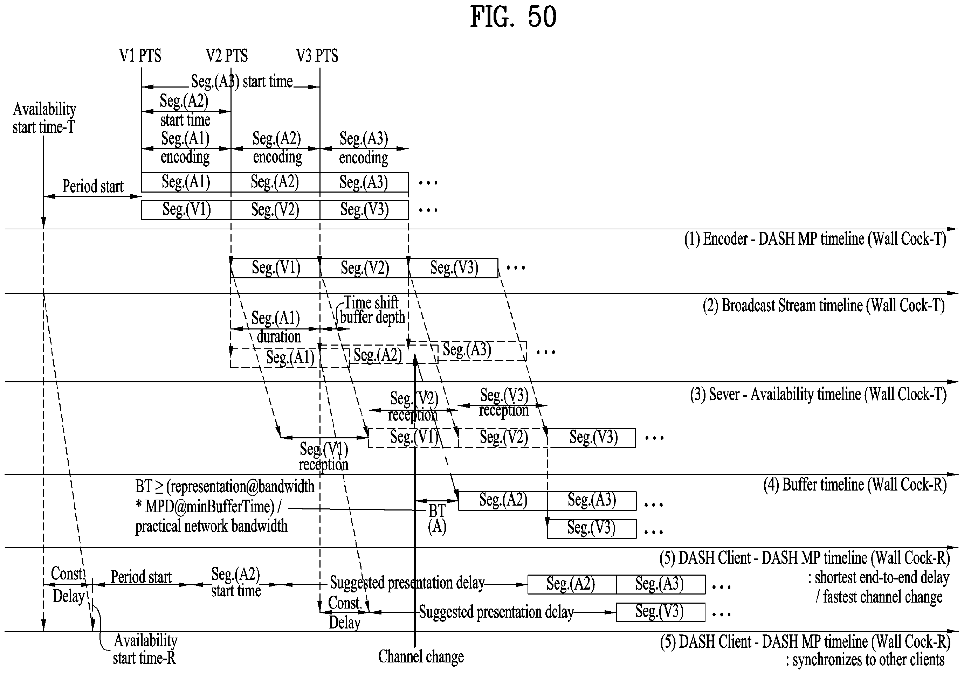

FIG. 50 is a diagram illustrating timing of processing of a segment in a broadcast system according to another embodiment of the present invention.

The drawing illustrates respective timelines at Timing (1), Timing (2), Timing (3), Timing (4), and Timing (5) indicated by each device of FIG. 49 and timing of a segment in a corresponding timeline.

A segment A1 may transmit data of audio 1.

A segment V1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 3 may be a timeline in a server.

A timeline 4 may be a timeline in an internal buffer of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period. A segment including each video datum may include presentation timestamp (PTS) information.

In the timeline 2, when encoding of each segment is terminated, the transmitter may transmit the corresponding segment. Here, segments including video data may be transmitted through a broadcast network. That is, the segment V1, the segment V2, and the segment V3 may be transmitted through the broadcast network.

In the timeline 3, the segment A1, the segment A2, and the segment A3 for transmitting audio data corresponding to segments for transmitting video data may present available time by an external server. A time shift buffer depth may be added to duration time of segments included in audio data to recognize a period in which the corresponding segment is available.

With reference to the timeline 4, constant delay and time required for receiving each segment elapse and, then, each segment may be available.

With reference to the timeline 5, at a time point at which channel change occurs, the receiver may not receive the segment V1 and may not receive some data included in the segment V2. The receiver may completely receive the segment V3 after the time point at which channel change occurs. The receiver may receive the segment A2 using MPD. Each segment may be available and suggested presentation delay for presentation of the segment A2, the segment A3, and the segment V3 may be set in consideration of synchronization time between the above segments and the processing result of another client. The receiver may add time periods indicated by period start information, start time information of each of the segment A2 and the segment A3, and/or suggested presentation delay information to determine time for presentation of the segment A2 and the segment A3 after a period is started. Time for presentation of content may be varied according to receivers but a time difference for presentation of content between receivers may be deleted using the suggested presentation delay.

When the MPD is used only in a broadband, a wall clock may be required in order to process an availability timeline of content transmitted in a broadband. In this case, 'broadband timeline reference' may be synchronized with a value of the wall clock.

The MPD may include media presentation time clock information in order to signal presentation time of media. In order to use the media presentation time clock information as 'broadcast timeline reference', an additional module or device for conversion between the wall clock and the media presentation time clock information may be required. According to an embodiment of the present invention, 'MPD@suggestedPresentationDelay' information may be transmitted along with PTS or PTS may be set to have a value obtained by considering 'suggested presentation delay'.

For synchronization between media (broadcast services, content, and/or events) transmitted in each of a broadcast network and a broadband network, the DASH media presentation timeline may be used for broadcast and broadband. For example, a broadcast stream and a broadband stream may be aligned with each other using 'MPD@suggestedPresentationDelay'. A client may be permitted to access a segment prior to signaled availability start time using 'SegmentBase@availabilityTimeOffset'. Anchor information of presentation time may be added to MPD. The anchor information may be represented by 'MPD@anchorPresentationTime'. The receiver may measure presentation time of start of a segment from a value of the anchor. For example, the receiver may measure start of a segment according to 'MPD@anchorPresentationTime' + 'Period@start' + 'Segment@presentationTimeOffset/Segment@timescale'

Delay with different lengths may occur in a broadband network and a broadcast network. In this case, the receiver may request data (segment or content) transmitted in a broadband prior to time at which the corresponding data is actually consumed. Accordingly, when broadcast data transmitted is received, the broadcast data and broadband data may be consumed together. To this end, 'SegmentBase@availabilityTimeOffset' as information for setting constant offset with respect to a segment transmitted in a broadband may be added to MPD.

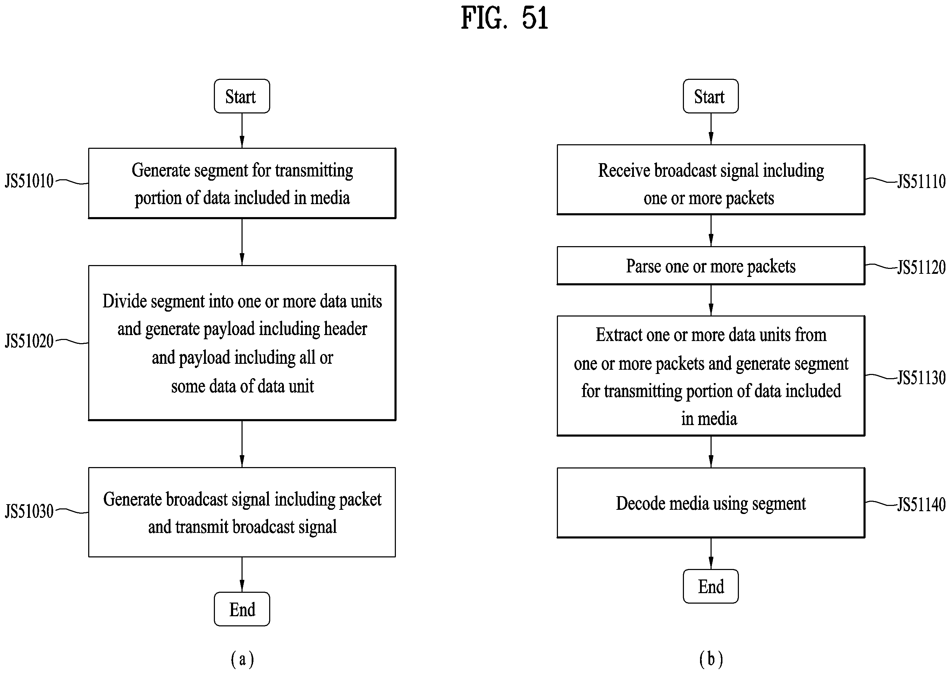

FIG. 51 is a flowchart illustrating a sequence for transmitting and processing a broadcast signal and a sequence for receiving and processing a broadcast signal according to an embodiment of the present invention.

Referring to FIG. 51(a), a transmitter may generate a segment for transmitting a portion of data included in media (JS51010).

The transmitter may divide the segment into one or more data units and generate a packet including a header and a payload including all or some data of the data unit (JS51020).

The transmitter may generate a broadcast signal including the packet and transmit the broadcast signal (JS51030).

During the above procedure, the transmitter may perform processing in such a way that the header includes a transport object identifier (TOI) element and the TOI element includes a segment identification element for identification of the segment included in data for transmission of the payload and a data unit identification element for identification of the data unit.

Referring to FIG. 51(b), the receiver may receive a broadcast signal including one or more packets (JS51110).

The receiver may parse the one or more packets (JS51120). Here, the packet may include a header and a payload including all or some data of the data unit.

The receiver may extract one or more data units from the one or more packets to generate a segment for transmission of some of data included in media (JS51130).

The receiver may decode media using the segment (JS51140).

Here, the header may include a transport object identifier (TOI) and the TOI element may include a segment identification element for identification of the segment including data transmitted in the payload and a data unit identification element for identification of the data unit.

The one or more data processing operations aforementioned in the specification may be added to the aforementioned transmission and/or reception processing procedure of a broadcast signal according to an embodiment of the present invention. Alternatively, some processing procedures may be omitted from the procedures described with reference to the drawings.

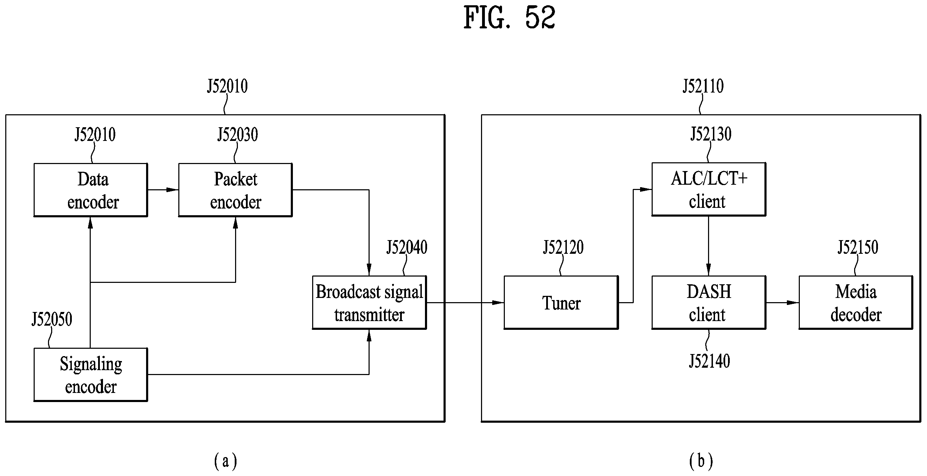

FIG. 52 is a diagram illustrating a transmitter and a receiver according to an embodiment of the present invention.

Referring to FIG. 52(a), a transmitter J52010 may include a data encoder J52020, a packet encoder J52030, a broadcast signal transmitter J52040, and/or a signaling encoder J52050.

The data encoder J52020 may generate a segment for transmitting some of data included in media.

The packet encoder J52030 may divide the segment into one or more data units and generate a packet including a header and a payload including all or some data of the data unit.

The broadcast signal transmitter J52040 may generate a broadcast signal including the packet and transmit the broadcast signal.

Here, the header may include a transport object identifier (TOI) element and the TOI element may include a segment identification element for identification of the segment including data transmitted in the payload and a data unit identification element for identification of the data unit.

The signaling encoder J52050 may generate signaling information. The signaling encoder J52050 may transmit the generated signaling information to one or more devices included in the transmitter.

Any one or more devices among the aforementioned devices described in the specification may be added to the transmitter illustrated in the drawing.

Referring to FIG. 52(b), a receiver J52110 may include a tuner J52120, an ALC/LCT+ client J52130, a DASH client J52140, and/or a media decoder J52150.

The tuner J52120 may receive a broadcast signal including one or more packets.

The ALC/LCT+ client J52130 may parse the one or more packets. Here, the packet may include a header and a payload including all or some data of the data unit.

The DASH client J52140 may extract one or more data units from the one or more packets and generate a segment for transmitting some of the data included in media.

The media decoder J52150 may decode media using the segment.

Here, the header may include a transport object identifier (TOI) element and the TOI element may include a segment identification element for identification of the segment including data transmitted in the payload and a data unit identification element for identification of the data unit.

Any one or more devices among the aforementioned devices described in the specification may be added to the receiver illustrated in the drawing.

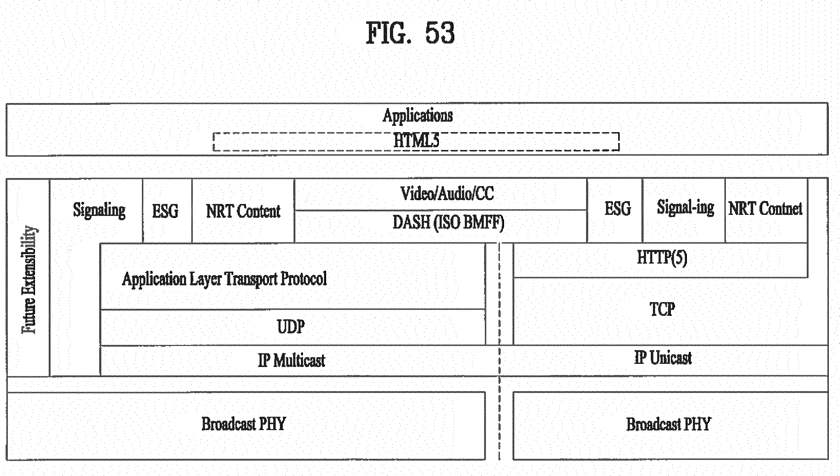

FIG. 53 is a diagram illustrating a ROUTE protocol stack according to an embodiment of the present invention.

A broadcast service of a next-generation broadcast system for supporting IP-based hybrid broadcast may include video data, audio data, caption data, signaling data, electronic service guide (ESG) data, and/or NRT content data.

Video data, audio data, caption data, and so on may be encapsulated in the form of an ISO base media file (hereinafter, ISO BMFF). For example, the data encapsulated in the form of an ISO BMFF may have a form of a segment of moving picture expert group (MPEG)-dynamic adaptive streaming over HTTP (DASH) or a media processing unit (MPU) of MPEG media transport (MMT). Then, the data encapsulated in the form of an ISO BMFF may be transmitted in the same way in a broadcast network and the Internet or differently transmitted according to attributes of each transmission network.

In the case of a broadcast network, signaling data, ESG data, NRT content data, and/or data encapsulated in the form of an ISO BMFF may be encapsulated to an application layer transport protocol packet for supporting real-time object transmission. For example, the data encapsulated in the form of an ISO BMFF may be encapsulated to a transport packet, etc. of real-time object delivery over unidirectional transport (ROUTE) and/or MMT.

The ROUTE may be a protocol for transmitting files through an IP multicast networks. The ROUTE protocol may use asynchronous layered coding (ALC) and layered coding transport (LCT), as base protocols designed for massively scalable multicast distribution, and other well known Internet standards. The ROUTE may be an enhanced version or functional alternative formed by adding additional features to FLUTE.

The ROUTE may transmit signaling messages, electronic service guide (ESG) messages, and NRT content. The ROUTE may be very appropriate to transmit streaming media, in particular, MPEG-DASH media segment files. Compared with FLUTE, the ROUTE may provide lower end-to-end latency through a delivery chain.

The ROUTE protocol may be generic transport application for providing transmission of an arbitrary type of object. The ROUTE protocol may support rich presentation including scene descriptions, media objects, and DRM related information. The ROUTE may be very appropriate to transmit media content in real time and may provide many features.

For example, the ROUTE may provide separate delivery and access for different media components (e.g.

language tracks, subtitles, and alternative video views). The ROUTE may enable transmission in different transport sessions or different ROUTE sessions to support layered coding. The ROUTE may support flexible FEC protection including multistage. The ROUTE may provide an easy MPEG-DASH combination. The MPEG-DASH combination may enable synergy between broadcast and broadband delivery modes of DASH. The ROUTE may provide rapid access to media during joining in a ROUTE session and/or a transport session. The ROUTE may provide high extensibility via concentration on transport concept. In addition, the ROUTE may provide compatibility with existing IETF protocols and also provide compatibility with use of IETF-endorsed extension mechanisms.

The ROUTE protocol may be divided into two main components. A first component is a source protocol for transport of objects or flows/combination of objects. A second component is a repair protocol for flexibly protecting delivery objects transmitted through a source protocol or bundles of delivery objects.

The source protocol may be self-contained for the repair protocol. That is, source protocol may be used without the ROUTE repair protocol. The repair protocol may be used for specific development scenarios, specific geographic areas, or a specific service, for mobile reception.

The source protocol may be supported by FLUTE as well as extension defined in the 3GPP TS 26.346. The source protocol may also use some theories of FCAST defined n the RFC 6968. For example, object metadata and object content may be transmitted together to a compound object.

In addition, a basic FLUTE protocol, specific optimizations and limits for enabling optimized support for real-time transport of media data may be added to the ROUTE protocol. The source ROUTE protocol may provide real-time transport of object-based media data. The source ROUTE protocol may provide flexible packetization for enabling media-aware packetization as well as transport aware packetization of delivery objects. The source ROUTE protocol may be self-contained for files and/or delivery objects. That is, the delivery object may be a part of a file or a group of files.

A receiver recovers delivery objects and transmits the delivery objects to an application and, thus, the delivery objects may be a core component of the ROUTE protocol. The delivery object may be self-contained for the application and related to application-aware specific attributes, metadata, and timing-aware information. In some cases, the attributes may be provided in-band along with objects. In other cases, data may be transmitted in out-of-band via a static or dynamic fashion.

The delivery object may include a full file accompanied by "FDT Instance" or a portion of the file. The delivery object may include HTTP Entity (HTTP entity header and HTTP entity body. In addition, the delivery object may include a package of delivery objects.

The delivery object may be a full file accompanied by FDT Instance or byte ranges of a file. The delivery object may be transmitted via timed or non-timed delivery. When the delivery object is transmitted via timed delivery, specific real-time limits and buffer limits may be applied and specific extension headers may be used. The dynamic and static metadata may be used to describe delivery object attributes. The delivery object may be transmitted through specific data structures such as ISO BMFF structures. In this case, media-aware packetization or general packetization may be applied.

Delivery format may explicitly indicate formats used to transmit information to an application.

The ROUTE repair protocol may be based on FEC and may function as an additional layer between transport layer (e.g., UDP) and object delivery layer protocols. The FEC may reuse FEC framework definition defined in RFC 6363. However, the FEC is different in that delivery objects transmitted in the source protocol are protected. Each FEC source block may include a portion of the delivery object. The delivery object may be a single delivery object (similar to FLUTE) or multiple delivery objects. The multiple delivery objects may be bundled prior to FEC protection. The ROUTE FEC may be similar to an FEC scheme defined in the RFC 5052. The ROUTE FEC may include content of the RFC 5052. The FEC scheme may define FEC encoding and decoding. The FEC scheme may define procedures used to identify protocol fields and a packet payload data in the content of the FEC scheme.

All packets in the ROUTE may be LCT packets defined in the RFC 5651. Source and repair packets may be differentiated at least one ROUTE session, a LCT transport session, and/or a PSI bit. Different ROUTE sessions may be transmitted in different IP/UDP port combinations. Different LCT transport sessions may have different TSI values in an LCT header. When the source and repair packets are transmitted through the same LCT transport session, the source and repair packets may be differentiated by a PSI bit in the LCT. This mode of operation is mostly suitable for FLUTE compatible deployments.

The ROUTE may define a source protocol including packet formats, sending behavior, and receiving behavior. The ROUTE may define the repair protocol. The ROUTE may define metadata for transport session establishment and metadata for object flow delivery. In addition, the ROUTE may define recommendations for MPEG-DASH configuration and mapping of the ROUTE for sufficient and high-quality linear TV broadcast services.

A range of the ROUTE protocol may be reliable transport of a delivery object and related metadata using LCT packets. Objects may be formed to be used in an application through delivery object cache. Implementation of cache may be changed according to applications.

The ROUTE protocol may concentrate on format of LCT packets for transmitting delivery objects. The ROUTE protocol may concentrate on reliable transmission of a delivery object using the repair protocol based on FEC. The ROUTE protocol may concentrate on definition and transmission of object metadata for enabling an interface function between delivery object cache and applications along with delivery objects. The ROUTE protocol may concentrate on a ROUTE session and LCT session for establishing reception of objects and metadata thereof. In addition, the ROUTE protocol may concentrate on normative aspects, formats, and semantics auxiliary information transmitted together with packets for optimization of performance for specific applications. For example, real-time transmission may be exemplified.

In addition, the ROUTE protocol may provide mappings recommended of DASH media presentation formats specific to ROUTE delivery as well as DASH formats suitable for delivery. The key issue is based on that the ROUTE is used and thus DASH media formats are used without changes. The architectural design may enable converged unicast/broadcast services.

In an operation of a transmitter of the ROUTE protocol, a ROUTE session for transmitting LCT packets may be established. The source protocol may include at least one LCT session and each LCT session may transmit related objects along with metadata. The metadata may be statically transmitted in LCT session instance description (LSID) and may be dynamically transmitted as LCT extension headers in a compound object or packet headers in an entity mode. Packets may be transmitted through ALC using a specific FEC scheme for along flexible fragmentation of an object at arbitrary byte boundaries. In addition, delivery objects may be FEC-protected separately or in the form of bundles. In some cases, the bundle type object may be encoded and only repair packets may be transmitted. In the form of a combination of source packets, recover of delivery object bundles may be allowed. At least one repair flows may be generated and each repair flow may have different properties. For example, each repair flow may have different latency requirements and have different protection requirements.

Dynamic metadata (DMD) may be metadata for dynamically generating descriptions corresponding to FDT in a client. The DMD may be transmitted through an entity-header in an entity mode and transmitted through an LCT header in other modes for transport.

The ROUTE protocol may support different protection and delivery schemes for source data. The ROUTE protocol may support all existing usage examples for NRT delivery so as to be effectively used in a backward-compatibility mode.

The ROUTE session may be related to an IP address/port combination. Typically, all packets of the ROUTE session may be received by joining in the session and the application protocol may employ additional processing.

Each ROUTE session may include at least one LCT transport session. LCT transport sessions may be a subset of the ROUTE session. For media delivery, one LCT transport session may typically transmit one media component (e.g. DASH representation). From a broadcast DASH point of view, the ROUTE session may be considered as a compound of the LCT transport session for transmitting at least one media component as at least one component of DASH media presentation. In each LCT transport session, at least one related object may be transmitted. For example, objects may be DASH segments related to one representation. Along with each object, metadata properties may be transmitted such that objects are used in applications. Applications may include DASH Media Presentations, HTML-5 Presentations, or other object-consuming applications but is not limited thereto.

The ROUTE sessions may be bounded or unbounded from the temporal perspective. The ROUTE session may include at least one LCT transport session. Each transport session may be uniquely identified by a unique transport session identifier (TSI) in an LCT header.

Prior to joining in the ROUTE session, the receiver needs to acquire ROUTE session description. The ROUTE session description may include information on at least one sender IP address, information on address and port number of a session, information regarding that a session is a ROUTE session, information regarding that all packets are LCT packets, and/or other information items required to join in and consume a session at an IP/UDP level.

The session description may include any information on data rates used for a ROUTE session and duration of the ROUTE session but is not limited thereto.

The session description may have a form of a session description protocol (SDP) defined in the RFC 4566 or have a form of XML metadata defined in the RFC 3023. The session description may be transmitted through a session announcement protocol using a proprietary session control protocol positioned in a web page with scheduling information. In addition, the session description may be transmitted via e-mail or other out-of-band methods.

Transport sessions may not be described in the ROUTE session description and may be described in LCT session instance description (LSID). Transport sessions (i.e., LCT transport sessions or LCT sessions) may include at least one of source flows and repair flows. The source flows may transmit source data. The repair flows may transmit repair data.

At least one LCT transport session included in one ROUTE session may be described by LCT session instance description (LSID). In particular, the LSID may define a target transmitted in each LCT transport session included in the ROUTE session. Each transport session may be uniquely identified by a transport session identifier (TSI) in an LCT header.

The LSID may describe at least one transport session transmitted in the ROUTE session. The LSID may be transmitted through the same ROUTE session including LCT transport sessions and transmitted through an external element of the ROUTE session. For example, the LSID may be transmitted in unicast or other ROUTE sessions. In the former case, the LSID may be transmitted through an LCT transport session determined according to TSI=0 or transmitted through a delivery object determined according to TOI=0. For an object transmitted through the transport session determined according to TSI=0, an entity mode may be used. When these objects are not transmitted through an entity mode, the LSID needs to be recovered prior to acquisition of an extended FDT for the received object.

The Internet media type of the LSID may be application/xml+route+lsid.

The LSID may refer to other at least one data fragment. An objected referred to in the LSID may be transmitted through a transport session determined according to TSI=0 but needs to have a different TOI value from the LSID. In addition, the LSID may be transmitted through a separate LCT session but not TSI=0.

The LSID element may include version attribute, validity attribute, and/or expiration attribute. The LSID element may be appropriately updated using version attribute as well as validity attribute and expiration attribute. For example, specific transport sessions may expire when some time elapses or a new session is started.

The version attribute may indicate a version of the LSID element. The version may be increased one by one when descriptor is updated. The received LSID element with a highest version number may indicate a currently valid version.

The validity attribute may indicate a date and/or time when the LSID element is valid. The validity attribute may or may not exist. When the validity attribute does not exist, the receiver may estimate that the LSID element version is immediately valid.

The expiration attribute may indicate a date and/or time in which the LSID element expires. The expiration attribute may or may not exist. When the expiration attribute does not exist, the receiver may estimate that the LSID element is valid or estimate that the LSID element is valid until the receiver receives a new LSID element with a related expiration value.

The LSID element may include at least one TransportSession element. The TransportSession element may include information on at least one LCT transport session. Each TransportSession element may include tsi attribute, SourceFlow element, and/or RepairFlow element.

The Tsi attribute may explicitly indicate a transport session identifier. Session identifiers may not have a value of 0. The SourceFlow element may include information on source flow transmitted through a transport session. The RepairFlow element may include information on repair flow transmitted through a transport session.

Then, data encapsulated in an application layer transport protocol packet may be packetized via an IP/UDP method. The data packetized via the IP/UDP method may be referred to as IP/UDP datagram and the IP/UDP datagram may be transmitted in a broadcast signal.

In the case of the Internet, the data encapsulated in the form of ISO BMFF may be transmitted to a side of the receiver based on a streaming scheme. For example, the streaming scheme may include MPEG-DASH.

The signaling data may be transmitted using the following method.

In the case of a broadcast network, signaling data may be transmitted through a specific data pipe (hereinafter, DP), and so on of a transport frame (or frame) transmitted in a physical layer of a broadcast network and a next-generation broadcast transmission system according to attributes of signaling. For example, the singling may have an encapsulated form in a bitstream or IP/UDP datagram.

In the case of the Internet, the signaling data may be returned and transmitted in response to a request of the receiver.

ESG data and NRT content data may be transmitted using the following method.

In the case of the broadcast network, the ESG data and the NRT content data may be encapsulated in an application layer transport protocol packet. Then, the data encapsulated in the application layer transport protocol packet may be transmitted in the same way as the above description.

In the case of the Internet, the ESG data and the NRT content data may be returned and transmitted in response to a request of the receiver.

A physical layer (broadcast PHY and broadband PHY) of a broadcast signal transmitting apparatus according to an embodiment of the present invention may be the structure illustrated in FIG. 1. In addition, a physical layer of a broadcast signal receiving apparatus may be the structure illustrated in FIG. 8.

The signaling data and the IP/UDP datagram may be transmitted through a specific data pipe (hereinafter, DP) of a transport frame (or frame) transmitted in a physical layer. For example, an input format block 1000 may receive signaling data and IP/UDP datagram and demultiplex each of the signaling data and the IP/UDP datagram to at least one DP. An output processor 9300 may perform an opposite operation to the input format block 1000.

Hereinafter, embodiments of the present invention will be described in terms of the case in which the aforementioned data encapsulated in the form of an ISO BMFF is encapsulated in a transport packet of ROUTE.

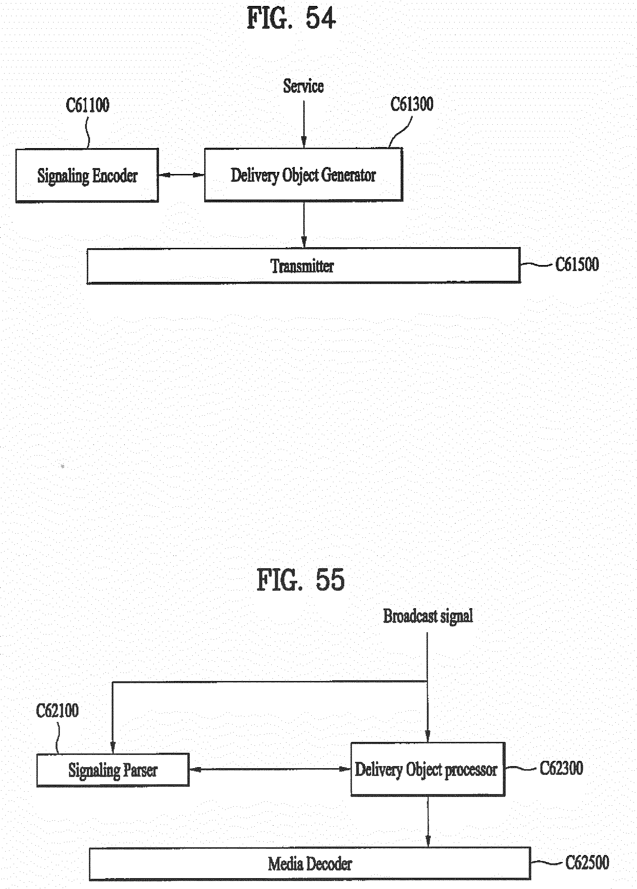

FIG. 54 is a diagram illustrating a structure of a broadcast signal transmitting apparatus according to an embodiment of the present invention.

A broadcast signaling transmitting apparatus according to another embodiment of the present invention may include a delivery object generator C61300, a signaling encoder C61100, and/or a transmitter C61500.

The delivery object generator C61300 may be included in at least one content component of a service and may generate at least one individually recovered delivery object.

For example, a delivery object generator may divide at least one content component included in a service to generate at least one delivery object.

The service may be media content including at least one contiguous media content period. The service may be one of one broadcast program, information added to a broadcast program, and/or independent information. The service may include at least one content component.

The content component may be one continuous component of the media content with an assigned media component type that can be encoded individually into a media stream. In addition, the media component type may include at least one of video, audio, and/or text.

The delivery object may be one of a file, a part of the file, a group of the file, a hyper text transfer protocol (HTTP) entity, and a group of the HTTP entity. The part of the file may be a byte range of file. The HTTP entity may include a HTTP entity header and/or a HTTP entity body.

Each delivery object may be recovered individually.

The signaling encoder C61100 may generate signaling information for providing discovery and acquisition of the service and the at least one content component.

The signaling information may include first information on a transport session for transmitting the at least one content component of the service and at least one delivery object transmitted through the transport session.

The signaling information may further include second information including description of DASH media presentation corresponding to the service.

The signaling information may include at least one of the first information and/or the second information.

For example, the signaling information (or the first information) may include at least one of offset information indicating a position of a first byte of a payload of a transport protocol packet for transmitting the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information of the delivery object.

The offset information may indicate offset (a temporal position or a spatial position) of a payload of a packet that is currently transmitted in an object (or delivery object).

The timestamp information may include timing information related to data included in a payload of a transport protocol packet. In addition, the timestamp information may include timing information related to the delivery object. For example, the timestamp information may include information on a time point at which a first byte of data included in a payload is decoded and/or presentation time information of the data.

In addition, the signaling information (or the second information) may include at least one of segment URL information indicating a uniform resource locator (URL) for access to the segment, representation ID information for identifying the representation, and transaction information indicating whether to join in a transport session for transmitting the representation.

The segment URL information may include at least one of representation ID for identifying the representation and a segment number for identifying a number of the segment.

The transaction information may include at least one of start transaction indicating participation in the transport session and stop transaction indicating termination of the transport session.

The transmitter C61500 may transmit the at least one delivery object and the signaling information through a unidirectional channel.

Hereinafter, the signaling information will be described in more detail.

Services may be transmitted using three functions layers. For example, the layers may include a physical layer, a delivery layer, and/or a service management layer.

The physical layer may provide mechanism for transmitting at least one of signaling, service announcement, and/or an IP packet to a broadcast physical layer and/or a broadband physical layer.

The delivery layer may provide functionality for transmitting an object and/or an object flow. This may be realized through the aforementioned real-time object delivery over unidirectional transport (ROUTE) protocol and/or HTTP protocol. The ROUTE protocol may be operated through UDP/IP multicast o the broadcast physical layer. The HTTP protocol may be operated through UDP/IP unicast on the broadband physical layer.

The service management layer may provide mechanism for transmitting any type of service (e.g., linear TV service or HTML5 application service) through a delivery layer and/or a physical layer.

The signaling information (e.g., service signaling) may provide service discovery and description information. The signaling information may include bootstrapping signaling information (fast information table (FIT)) and/or service layer signaling information (service layer signaling (SLS)). The signaling information may include information required to discover or acquire at least one user service.

The FIT may enable the receiver to build a basic service list and bootstrap discovery of service layer signaling of each service. In some embodiments, the FIT may also be represented by a service list table (SLT). The FIT (or SLT) may be transmitted through link layer signaling. The FIT (or SLT) may be transmitted in each physical layer frame for rapid acquisition. In some embodiments, the FIT (or SLT) may be transmitted through at least one of a PLP for transmitting a physical layer frame and signaling and/or a PLP allocated for each broadcaster. Hereinafter, embodiments of the present invention will be described in terms of the FIT.

The SLS may enable the receiver to discover and access at least one service and/or at least one content component. When being transmitting through broadcast, the SLS may be transmitted in at least one LCT transport session included in a ROUTE session by ROUTE/UDP/IP. In this case, the SLS may be transmitted at a suitable carousel rate for supporting rapid channel join and switching. When being transmitted through broadband, the SLS may be transmitted by HTTP(S)/TCP/IP.

A transport session according to another embodiment of the present invention may include at least one of real-time object delivery over unidirectional transport (ROUTE) session, layered coding transport (LCT) transport session (or LCT session), and/or MPEG media transport protocol (MMTP) session.

A transport protocol packet according to another embodiment of the present invention may include at least one of a ROUTE packet (ALC/LCT extension packet, ALC/LCT+ packet, ALC/LCT packet, or LCT packet) and/or an MMTP packet.

Representation of MPEG-DASH may be concept corresponding to an LCT transport session (or LCT session) in a ROUTE protocol and may be mapped to TSI. In addition, representation of MPEG-DASH may be concept corresponding to MMTP packet flow in an MMT protocol and may be mapped to asset identifier (asset ID or asset_id).

A segment of MPEG-DASH may be concept corresponding to a file in a ROUTE protocol (or delivery object) in a ROUTE protocol and may be mapped to TOI. In addition, the segment of MPEG-DASH may be concept corresponding to MPU in an MMT protocol and may be mapped to information (or MPU identifier) included in mmpu box.

A relationship between the ROUTE/LCT session and the MMTP session for transmitting at least one content component of a service will now be described.

For broadcast delivery of a linear service without app-based enhancement, a content component of a service may be transmitted through 1) at least one ROUTE/LCT session and/or 2) at least one MMTP session.

For broadcast delivery of a linear service with app-based enhancement, a content component of a service may be transmitted through only 1) at least one ROUTE/LCT session. Alternatively, a content component of a service may be transmitted through 2) at least one ROUTE/LCT session and/or at least one MMPT session.

For broadcast delivery of an app-based service, a content component of a service may be transmitted through at least one ROUTE/LCT session.

Each ROUTE session may include at least one LCT session. Each LCT session may include an entire or portion of each content component included in a service.

In transmission of streaming services, the LCT session may transmit a separate component of a user service such as audio, video, and/or closed caption stream. The streaming media may be formatted in at least one DASH segment by MPEG-DASH.

Each MMTP session may include at least one MMTP packet flow. Each MMTP packet flow may transmit an MPEG media transport (MMT) signaling message. In addition, each MMTP packet flow may include an entire or portion of each content component included in a service.

The MMTP packet flow may transmit at least one content component formatted in at least one MPU by MMT signaling message and/or MMT.

For the delivery of NRT User Services or system metadata, an LCT session may carry at least one file-based content item. The at least one file-based content item may include continuous (time-based) or discrete (non-time-based) media components of an NRT service. In addition, the at least one file-based content item may include service signaling and/or electronic service guide (ESG) fragments.

A broadcast stream is the abstraction for an RF channel, which is defined in terms of a carrier frequency centered within a specified bandwidth. The RF channel may be defined by the pair [geographic area, frequency]. The geographic area and frequency information may be defined and/or maintained by administrative authority along with a broadcast stream ID (BSID). A physical layer pipe (PLP) corresponds to a portion of the RF channel.

Each PLP has certain modulation and coding parameters. It is identified by a PLP identifier (PLPID), which is unique within the broadcast stream it belongs to.

Each service is identified by two forms of service identifier: a compact form that is used in the SLT and is unique only within the broadcast area; and a globally unique form that is used in the SLS and the ESG.

A ROUTE session may be identified by a source IP address, destination IP address, and/or destination port number. An LCT session may be identified by a transport session identifier (TSI) which is unique within the scope of the parent ROUTE session.

A service-based transport session instance description (S-TSID) may include in properties common to at least one LCT session and/or certain properties unique to at least one individual LCT session. The S-TSID may be an ROUTE signaling structure or a part of the service layer signaling.

Each LCT session is carried over a single physical layer pipe (PLP). Different LCT sessions in one ROUTE session may be included in different PLPs or included in the same PLP.

The properties described in the S-TSID may include the TSI value and PLPID for each LCT session, descriptors for at least one delivery object or file and/or at least one application layer FEC parameter.

A MMTP session may be identified by a source IP address, a destination IP address, and/or destination port number. A MMTP packet flow may be identified by a packet id which is unique within the scope of the parent MMTP session.

The S-TSID may include information on properties common to each MMTP packet flow and certain properties of at least one individual MMTP packet flow.

At least one property of each MMTP session may be transmitted through an MMT signaling message transmitted in the MMTP session.

Each MMTP packet flow may be transmitted through one PLP. Different MMTP packet flows in one MMTP session may be included in different PLPs or included in the same PLP.

At least one property described in the MMT signaling message may include packet_id and/or a PLPID for each MMTP packet flow.

Hereinafter, link layer signaling (LLS) and service layer signaling (SLS) will be described.

The LLS may indicate signaling information that is directly transmitted as a payload of at least one link layer packet or content of determined channels. For example, the LLS may include FIT.

Upon first receiving a broadcast signal, the receiver may first analyze the FIT. The FIT may provide rapid channel scan, channel name, and/or channel number so as to build a list of all services receivable by the receiver. The FIT may provide bootstrap information such that the receiver discovers SLS for each service. The bootstrap information may include TSI for an LCT session for transmitting a destination IP address, a destination port, and/or SLS.

The SLS for each service may describe at least one feature of a list of at least one component included in a service, a place for acquisition of at least one component, and/or a service such as receiver capabilities required for meaningful presentation of service.

In the ROUTE/DASH system, the SLS may include user service bundle description (USBD), service-based transport session instance description (S-TSID), and/or DASH media presentation description (MPD).

Hereinafter, an example of use of LLS for bootstrapping for acquisition of SLS and an example of use of SLS for acquisition of at least one service component transmitted through at least one ROUTE/LCT transport session will be described.

First, a receiver may acquire FIT (or SLT). For example, FIT (or SLT) may be transmitted through a physical layer frame in a predetermined frequency band identified by a predetermined broadcast stream ID (BSID). In some embodiments, the FIT (or SLT) may be transmitted through at least one of a PLP for transmitting a physical layer frame and signaling and/or a PLP allocated to each broadcaster.

Each service may include at least one SLS bootstrapping information item. For example, each service may be identified by Service_id. In addition, the SLS bootstrapping information may include PLPID, source IP address, destination IP address, destination port number, and/or TSI.

Then, the receiver may acquire at least one SLS fragment. The SLS fragment may be transmitted through an IP/UDP/LCT session and PLP. For example, the SLS fragment may include a USBD/USD fragment, a S-TSID fragment, and/or a MPD fragment. The USBD/USD fragment, the S-TSID fragment, and/or the MPD fragment may be information related to one service.

The USBD/USD fragment may describe at least one service level feature. In addition, the USBD/USD fragment may URI reference information on at least one S-TSID fragment and/or URI reference information on at least one MPD fragment.

The S-TSID fragment may include component acquisition information related to one service. In addition, the S-TSID fragment may provide mapping between DASH representation discovery in the MPD and TSI corresponding to a component of a service. In addition, the S-TSID fragment may include component acquisition information in the form of TSI and a related DASH representation identifier, and/or a PLPID for transmitting at least one DASH segment related to the DASH representation.

The receiver may collect at least one audio/video component from a service based on PLPID and/or TSI. In addition, the receiver may start buffering of at least one DASH media segment.

Then, the receiver may perform an appropriate decoding process.

Hereinafter, link layer signaling (LLS) will be described in detail.

The LLS may operate at an IP level or less. The receiver may preferentially acquire LLS to IP level signaling (e.g., service layer signaling). Accordingly, the link layer signaling may be acquired prior to session establishment. In some embodiments, the LLS may be transmitted above IP/UDP as well as at an IP level or less.

One of objectives of the LLS may be effective transmission of necessary information for rapid channel scan and/or service acquisition. The LLS may include binding information between SLS and at least one PLP. The LLS may include signaling information related to emergency alert.

The LLS may include FIT. The FIT may include information on each service in a broadcast stream so as to provide rapid channel scan and/or service acquisition.

For example, the FIT may include information useful to the user and for presentation of a service list for supporting service selection through a channel number and/or up/down zapping.

In addition, the FIT may include information indicating a position of service layer signaling of a service transmitted through broadcast and/or broadband.

Hereinafter, service layer signaling (SLS) will be described in detail.

The SLS may include information for discovery and/or access of at least one service and/or at least content component. The SLS may include a set of XML-encoded metadata fragments transmitted through a predetermined LCT session. The LCT session may be acquired based on bootstrap information included in the FIT. The SLS may be defined per service level. In addition, the SLS may include features and/or access information of a service. For example, the SLS may include information related to a list of at least one content component, a method of acquiring at least one content component, and/or receiver capabilities required for meaningful presentation of a service.

In a ROUTE/DASH system, in order to transmit a linear service, the SLS may include user service bundle description (USBD), service-level transport session instance description (S-TSID), and/or DASH media presentation description (MPD). At least one SLS fragment may be transmitted through a predetermined LCT transport session having a TSI value.

The SLS may be applied to a linear-based service and/or an application-based service.

Hereinafter, USBD will be described in detail.

The USBD may include service identification information, device capabilities information, a service, and/or information referring to at least one other SLS required for access to at least one component, and/or metadata required to determine a reception mode of at least on service component by a receiver. For example, the reception mode may include broadcast and/or broadband.

The USBD may a top level or entry point SLS fragment. The USBD may include USBD defined n the 3GPP MBMS.

The USBD may include at least one userServiceDescription element. The userServiceDescription element may be a single instance of one service.

The userServiceDescription element may include serviceId attribute, serviceId attribute, fullMPDUri attribute, sTSIDUri attribute, name element, serviceLanguage attribute, capabilityCode attribute, and/or deliveryMethod attribute.

The serviceId attribute may be a globally unique identifier of a service.

The serviceId attribute may be reference information corresponding to a service entry present in LLS (FIT). A value of the serviceId attribute may be equal to serviceId allocated to an entry.

The fullMPDUri attribute may indicate reference information on an MPD fragment including at least one description of at least one content component included in a service transmitted through broadcast and/or broadband.

The sTSIDUri attribute may indicate reference information on S-TSID for providing at least one access related parameter of a transport session for transmitting at least one content item of a service.

The name element may indicate a service name. The name element may include lang attribute. The lang attribute may indicate a language of a service name.

The serviceLanguage attribute may indicate at least one at least one available language of a service.

The capabilityCode attribute may include at least one capability information item required to generate meaningful presentation of service content.

The deliveryMethod attribute may be a container including transport related information related to at least one content item of a service through access of a broadcast and/or broadband mode. The deliveryMethod attribute may include broadcastAppService attribute and/or unicastAppService attribute.

The broadcastAppService attribute may indicate DASH representation may indicate DASH Representation transmitted in multiplexed or non-multiplexed form through broadcast. The DASH Representation delivered over broadcast, in multiplexed or non-multiplexed form, containing the corresponding media component(s) belonging to the service, across all Periods of the affiliated Media Presentation.

The broadcastAppService attribute may include at least one basePattern attribute.

The basePattern attribute may indicate a character pattern for use by the ATSC receiver to match against any portion of the segment URL used by the DASH client to request media segments of a parent representation under its containing period. The match may refer to transmission of a corresponding requested media segment through broadcast.

The unicastAppService attribute may indicate DASH representation transmitted in multiplexed or non-multiplexed form through broadband. The DASH representation is delivered over broadband, in multiplexed or non-multiplexed form, containing the constituent media content component(s) belonging to the service, across all Periods of the affiliated Media Presentation.

The unicastAppService attribute may include at least one basePattern attribute.

The basePattern attribute may indicate a character pattern for use by the receiver to match against any portion of the Segment URL used by the DASH client to request Media Segments of a parent Representation under its containing Period. The match may indicate transmission of a corresponding requested mediate segment through broadcast.

Hereinafter, S-TSID will be described in detail.

The S-TSID may be an SLS metadata fragment including at least one LCT session included in at least one ROUTE session and ROUTE and overall transport session description information on at least one MMTP session. In some embodiments, the S-TSID may not include a ROUTE session or an MMTP session. At least one media content component included in a service may be transmitted through a ROUTE session and/or an MMTP session.

In addition, the S-TSID may include file metadata and/or description of a delivery object and/or object flow transmitted in at least one LCT session included in a service. The S-TSID may include additional information on payload formats and/or at least one content component transmitted in at least one LCT session.

Each instance of the S-TSID fragment may be referred by sTSIDUri attribute of userServiceDescription element in a USBD fragment.

Hereinafter, attribute and/or elements included in the S-TSID will be described.

The S-TSID may include serviceId attribute, at least one RS element, and/or at least one MS element.

The serviceId attribute may be information referring to a corresponding service element present in LLS (e.g., FIT). The serviceId attribute may be information referring to a service having a corresponding service_id value present in the FIT. When at least one MMTP session is used for broadcast transmission between linear services without using USD and/or ROUTE session, the serviceId attribute may be present.

The RS element may indicate a ROUTE session.

The MS element may indicate an MMTP session.

The RS element may include bsid attribute, sIpAddr attribute, dIpAddr attribute, dport attribute, PLPID attribute, and/or at least one LS element.

The bsid attribute may be an identifier of a broadcast stream. At least one content component of the broadcastAppService attribute may be transmitted in a broadcast stream. When the bsid attribute is not present, a current stream may be a default broadcast stream. At least one PLP of a default broadcast stream may transmit at least one SLS fragment of a service.

The sIpAddr attribute may indicate a source IP address. For example, a default value of the sIpAddr attribute may indicate a source IP address of a current ROUTE session.

The dIpAddr attribute may indicate a destination IP address. For example, a default value of the dIpAddr attribute may indicate a destination IP address of a current ROUTE session.

The dport attribute may indicate a destination port. For example, a default value of the dport attribute may indicate a destination port of a current ROUTE session.

The PLPID attribute may indicate a physical layer pipe ID of a ROUTE session. For example, the PLPID attribute may indicate a current physical layer pipe.

The LS element may indicate an LCT session.

The LS element may include tsi attribute, PLPID attribute, bw attribute, startTime attribute, endTime attribute, SrcFlow element, and/or RprFlow element.

The tsi attribute may indicate a TSI value.

The PLPID attribute may indicate a value of PLP ID.

The bw attribute may indicate a maximum bandwidth.

The startTime attribute may indicate a start time.

The endTime attribute may indicate an end time.

The SrcFlow element may indicate a source flow. For example, the source flow may transmit source data. In addition, the source flow may transmit at least one delivery object.

The RprFlow element may indicate repair flow. For example, the repair flow may transmit repair data. The repair flow may transmit data for flexibly protecting at least one delivery object transmitted through source flow.

The MS element may include versionNumber element, bsid element, sIpAddr element, dIpAddr element, dport element, packetId element, PLPID element, bw element, startTime element, and/or endTime element.

The versionNumber element may indicate a version number of an MMTP protocol used in an MMTP session.

The bsid element may be an identifier of a broadcast stream. At least one content component may be transmitted in a broadcast stream. When the bsid attribute is not present, a current stream may be a default broadcast stream. At least one PLP of a default broadcast stream may transmit at least one SLS fragment of a service.

The sIpAddr element may indicate a source IP address.

The dIpAddr element may indicate a destination IP address.

The dport element may indicate a destination port.

The packetId element may indicate an MMTP packet_id for transmitting at least one MMT signaling message of an MMTP session.

The PLPID element may indicate a physical layer pipe ID of an MMTP session.

The bw element may indicate a maximum bandwidth.

The startTime element may indicate a start time of an MMTP session.

The endTime element may indicate an end time of an MMTP session.

Hereinafter, the MPD will be described in detail.

A streaming content signaling component of an SLS may correspond to an MPD fragment. The MPD may be related to a linear service for transmission of a DASH segment such as streaming content. The MPD may be used to support app-based services. At least one related content component may be DASH-formatted. The MPD may be used to control playout of at least one content component. The MPD may include at least one resource identifier of at least one separate media component of a linear/streaming service. For example, the resource identifier may include a segment URL. In addition, the MPD may include content of at least identified resource in media presentation.

The media presentation description (MPD) may be an SLS metadata fragment including formalized description of DASH media presentation. For example, the DASH media presentation may correspond to a linear service of a duration given by a broadcaster. For example, the linear service may be a set of a single TV program or a set of at least one continuous linear TV program maintained at an interval of 6 hours. Content of the MPD may provide a resource identifier of a segment and context of resources identified in media presentation.

At least one representation transmitted in MPD may be transmitted through broadcast. In the case of a hybrid service, the MPD may describe at least one representation transmitted through broadband. The MPD may include at least one additional representation for supporting service continuity during handoff to broadcast from broadcast due to broadcast signal degradation. For example, broadcast signal degradation may occur while driving below a mountain or through a tunnel.

Hereinafter, app-based enhancement signaling included in the SLS will be described in detail.

The app-based enhancement signaling may be related to transmission of at least one app-based enhancement component. For example, the app-based enhancement component may include an application logic file, an NRT media file, an on-demand content component, and/or a notification stream. Needless to say, the application may search for NRT data via broadband connection.

Hereinafter, an MMT signaling message included in SLS of MMTP will be described in detail.

When at least one MMTP session is used to transmit a streaming service, at least one MMT signaling message may be transmitted by the MMTP. Each MMTP session may transmit at least one MMT signaling message and at least one component. In addition, at least one packet for transmitting at least one MMT signaling message may be signaled by an MS element present in an S-TSID fragment.

According to another embodiment of the present invention, first information of signaling information may include S-TSID and second information may include MPD.

A broadcast signal transmitting apparatus according to an embodiment of the present invention may have all the aforementioned functions of the broadcast signal transmitting apparatus and/or transmitter. A detailed description of the signaling information may include all the above description. The signaling information may include all contents of a header of an LCT packet and header extension of an LCT packet.

FIG. 55 is a diagram illustrating a structure of a broadcast signal receiving apparatus according to an embodiment of the present invention.

Referring to the drawing, a broadcast signal receiving apparatus according to another embodiment of the present invention may include a signaling parser C62100, a delivery object processor C62300, and/or a media decoder C62500.

The signaling parser C62100 may extract signaling information for providing discovery and acquisition of at least one content component of a service.

The signaling information may include LLS for bootstrapping SLS acquisition and/or SLS for acquisition of at least one service component transmitted through at least one ROUTE/LCT transport session.

First, the signaling parser C62100 may acquire FIT (or SLT). For example, the FIT (or SLT) may be transmitted through a physical layer frame in a determined frequency band identified by a predetermined broadcast stream ID (BSID). In some embodiments, the FIT (or SLT) may be transmitted through at least one of PLP for transmitting a physical layer frame and signaling and/or PLP allocated for each broadcaster.

Each service may include at least one SLS bootstrapping information item. For example, each service may be identified by Service_id. In addition, the SLS bootstrapping information may include PLPID, source IP address, destination IP address, destination port number, and/or TSI.

Then, the signaling parser C62100 may acquire at least one SLS fragment. The SLS fragment may be transmitted through an IP/UDP/LCT session and PLP. For example, the SLS fragment may include a USBD/USD fragment, an S-TSID fragment, and/or an MPD fragment. The USBD/USD fragment, the S-TSID fragment, and/or the MPD fragment may be information related to one service.

The USBD/USD fragment may describe at least one service level feature. In addition, the USBD/USD fragment may include URI reference information on at least one S-TSID fragment and/or URI reference information on at least one MPD fragment.

The S-TSID fragment may include component acquisition information related to one service. The S-TSID fragment may provide mapping DASH representation discovered in the MPD and a service component. In addition, S-TSID fragment may include component acquisition information in the form of TSI and related DASH Representation identifier and/or PLPID for transmitting at least one DASH segment related to DASH representation.

The signaling information may include information for describing at least one delivery object (or at least one object flow).

The delivery object may include a file, a part of the file, a group of the file, hyper text transfer protocol (HTTP) entity, and/or a group of the HTTP entity. The delivery object may be included in at least one content component of the service and may be recovered individually.

The signaling information may include first information on a transport session for transmitting the at least one content component of the service and at least one delivery object transmitted through the transport session. For example, the first information may be S-TSID.

The first information may provide mapping between DASH representation discovery in the MPD and TSI corresponding to a service component. In addition, the S-TSID fragment may include component acquisition information in the form of TSI and related DASH representation identifier.

The first information may further include at least one of offset information indicating a position of a first byte of a payload of a transport protocol packet for transmitting the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information on the delivery object.

The signaling information may further include second information including description of DASH media presentation corresponding to the service.

For example, the second information may be media presentation description (MPD). The second information may include at least one of segment URL information, representation ID information, and/or transaction information.

The segment URL information may indicate a uniform resource locator (URL) for access to the segment.

The representation ID information may identify the representation.

The transaction information may indicate whether to participate in a transport session for transmitting the representation.

The signaling information may include at least one of the first information and/or the second information. The signaling information may include all contents of a header of an LCT packet and a header extension of the LCT packet. In addition, a detailed description of the signaling information may include all the above description.

According to an embodiment of the present invention, the signaling parser C62100 may acquire session description.

In order to participate in a session (e.g. at least one of ROUTE session, MMTP session, and/or LCT transport session), the signaling parser C62100 may acquire session description. The session description may have one form of session description protocol (SDP), XML metadata, HTTP/MIME headers, and/or session announcement protocol (SAP). Hereinafter, embodiments of the present invention will be described in terms of the case in which signaling information (or SLS) includes session description. The signaling information may be identified by a pair of (source IP address and transport session identifier). In addition, the receiver may acquire destination IP addresses and each port related to the signaling information.

The delivery object processor C62300 may recover eat least one delivery object based on the signaling information.

The delivery object processor C62300 may receive at least one audio/video component from a service based on the PLPID and/or the TSI. In addition, the delivery object processor C62300 may start buffering with respect to at least one DASH media segment. In addition, the delivery object processor C62300 may join and/or terminate at least one of a ROUTE session, an MMTP session, and/or an LCT transport session.

Hereinafter, a procedure of recovering a delivery object by the delivery object processor C62300 will be described.

First, the delivery object processor C62300 may participate in at least one session (or channel) in order to receive at least one transport protocol packet (ALC/LCT packet, ALC/LCT+ packet, ROUTE packet, and/or MMTP packet) related to the signaling information. Hereinafter, the transport protocol packet will be simply represented by a packet.

Then, the delivery object processor C62300 may receive at least one packet.

Then, the delivery object processor C62300 may appropriately filter at least one packet. For example, the delivery object processor C62300 may parse a packet header and check whether the packet header is an effective header. When the packet header is not effective, the packet (or payload) may be discarded without being additionally processed. The delivery object processor C62300 may check whether at least one packet is matched with a TSI value. When at least one packet is not matched, the packets may be discarded.

For example, the delivery object processor C62300 may check whether TSI attribute and CodePoint attribute indicate an effective operation point in the signaling information. That is, the signaling information may include a matching entry of a TSI value provided by a packet header. In addition, with respect to a corresponding TSI, the signaling information may include CodePoint attribute. A value of the CodePoint attribute may be equal to a value of the CodePoint field in a header of a packet.

The delivery object processor C62300 may check whether TSI transmitted at a sender IP address and/or a header is matched with at least one of (sender IP address and TSI) pairs received in the signaling information (or session description). One of the (sender IP address and TSI) pairs may indicate an LCT transport session that a receiver currently participates in. When the TSI is not matched, the packets may be discarded without being further processed. Subsequent operations may be performed within a range of a (sender IP address, TSI) session of the received packet.

Then, the delivery object processor C62300 may use packet authentication. When packet authentication is used, the delivery object processor C62300 may check authenticity of a packet. When immediate checking is possible and the packet authentication fails, the delivery object processor C62300 may discard the packet.

Then, the delivery object processor C62300 may perform processing and operations according to a CCI field that follows multiple rate congestion control building block.

Then, during reception of the packets, the delivery object processor C62300 may demultiplex at least one packet based on the TOI. The delivery object processor C62300 may store appropriate packet information items in an appropriate space for recovering a corresponding delivery object.

When one or more objects are transmitted through an LCT transport session, the delivery object processor C62300 may check whether TOI in a packet header is effective. When the TOI is not effective, the packet may be discarded without being further processed.

Then, the delivery object processor C62300 may process the remaining portion of the packet (or payload). For example, the delivery object processor C62300 may appropriately interpret other packet headers. The delivery object processor C62300 may use at least one encoding symbol present in FEC payload ID (or source FEC payload ID) and/or payload in order to recover a corresponding delivery object.

For example, the delivery object processor C62300 may determine a delivery object related to a received ROUTE packet payload based on the signaling information and TOI transmitted in a packet header.

Then, the delivery object processor C62300 may recover at least one delivery object. For example, the delivery object processor C62300 may recover at least one delivery object from the ROUTE session and each LCT transport session included in the ROUTE session.

Then, the recovered delivery object may be transmitted to an appropriate handler for additional processing.

When a complete set of at least one packet payload of a delivery object related to a given TOI value and signaling information (or metadata) on the delivery object are recovered, the delivery object may be transmitted to an application. For example, the delivery object may be transmitted to the media decoder C62500. The signaling information (or metadata) may be dependent upon an applied delivery mode.

The delivery object processor C62300 may repeatedly perform a procedure of receiving at least one packet related to the signaling information.

At least one of the aforementioned operations of the delivery object processor C62300 may be performed by another component of the receiver.

The media decoder C62500 may decode the at least one delivery object. The media decoder C62500 may perform an appropriate decoding process. For example, the media decoder C62500 may decode at least one access unit and/or render the at least decoded access unit based on the signaling information (e.g., timing information, information required for decoding, and/or information required for rendering).

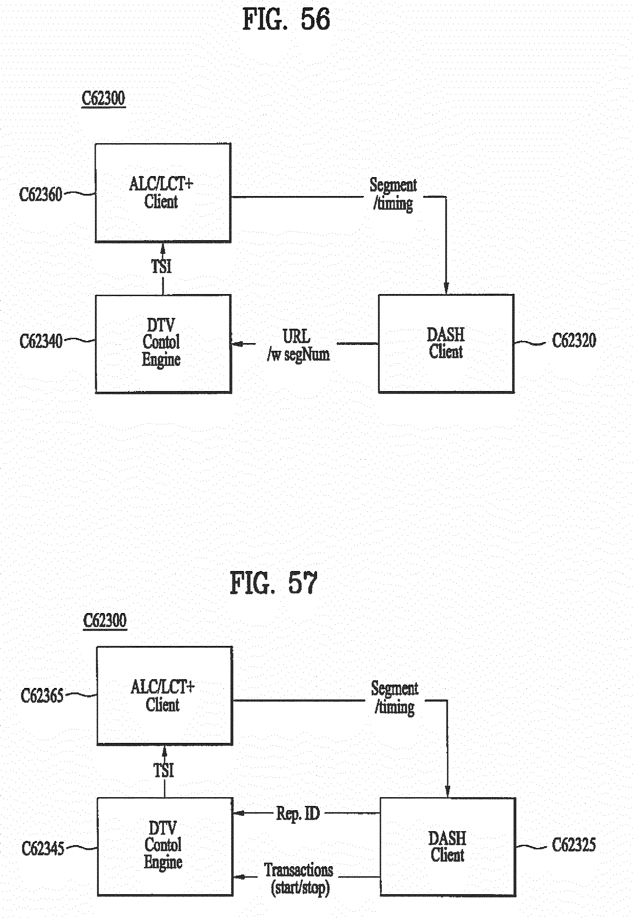

FIG. 56 is a diagram illustrating a structure of a delivery object processor according to an embodiment of the present invention.

Hereinafter, a procedure of joining and/or terminating at least one session among a ROUTE session, an MMTP session, and/or an LCT transport session by the delivery object processor C62300 will be described in detail. Hereinafter, embodiments of the present invention will be described in terms of an LCT transport session.

First, a procedure of joining and/or terminating at least one LCT transport session based on segment URL information including a segment number by the delivery object processor C62300 will be described.

According to an embodiment of the present invention, the delivery object processor C62300 may include at least one of a DASH client C62320, a DTV control engine C62340, and/or an ALC/LCT+ client C62360.

The DASH client C62320 may determine representation to be present and request a segment related to the delivery object.

The DASH client C62320 may perform a series of operations for processing data related to MPEG-DASH. The DASH client C62320 may request a segment based on the MPD and acquire the segment. A basic description of the DASH client C62320 may include all the above description.

First, the DASH client C62320 may acquire at least one of MPD and/or MPD URL. The MPD may be formalized description of media presentation for providing a streaming service. The MPD URL may indicate a place for acquisition of the MPD. For example, the DASH client C62320 may receive at least one of MPD and/or MPD URL from the DTV control engine C62340. The DASH client C62320 may request MPD to an HTTP server or receive the MPD in response thereto based on the MPD URL. The DASH client C62320 may receive MPD through another path.

Then, the DASH client C62320 may parse the MPD. The DASH client C62320 may select at least one adaption set based on the MPD.

Then, in the selected adaptation set, the DASH client C62320 may select one representation. The DASH client C62320 may select representation in consideration of a bandwidth, decoding capability of the receiver, and/or rendering capability of the receiver. Then, the DASH client C62320 may generate a segment list indicating a list of at least one segment accessible to each representation at actual client-local time measured as wall-clock time. In some embodiments, the segment list may be included in the MPD.

For example, the segment may include at least one of an initialization segment, a media segment, and/or an index segment. The segment list may include at least one segment URL information item. The segment URL information may indicate a uniform resource locator (URL) accessible to a segment. The segment URL information may include at least one of initialization segment URL, a media segment URL, and/or an index segment URL. The initialization segment URL may indicate a URL accessible to the initialization segment. The media segment URL may indicate a URL accessible to the media segment. The index segment URL may indicate a URL accessible to the index segment.

Then, the DASH client C62320 may select a segment according to an MPD timeline. The DASH client C62320 may select a segment based on a segment list and/or MPD timeline in the selected representation. When one delivery object is one segment, the DASH client C62320 may select a segment corresponding to a delivery object to be requested. When one delivery object is a portion of one segment, the DASH client C62320 may select a segment to which the delivery object to be requested belongs.

Then, the DASH client C62320 may request one of at least one segment, all segments, byte ranges of segments, and/or at least one delivery object to access a service (or content). The DASH client C62320 may request at least one segment and/or delivery object of representation selected based on the generated segment list.

For example, the DASH client C62320 may transmit segment list and/or segment URL information to the DTV control engine C62340.

The segment URL information may include at least one identifier. For example, the segment URL information may include at least one of a representation ID for identifying representation including a corresponding segment and/or a segment number for identifying a number of a corresponding segment. For example, the segment URL information may have the form www.example.com/SomeMovie_w720_h480_b500k_V_n00278.m4v. Here, "n00278" may indicate a segment number.

The DTV control engine C62340 may map the representation of the signaling information and the transport session identifier (TSI) of the content component.

Simply, the DTV control engine C62340 may determine TSI and/or TOI of the requested segment and/or delivery object based on the signaling information. Each ROUTE session may include at least one LCT transport session. One LCT transport session may transmit one media content component (e.g. DASH representation). Each video component and/or audio component may be matched with represented of MPEG-DASH. Accordingly, the TSI may be matched with the LCT transport session.

The signaling information (or S-TSID fragment) may include component acquisition information related to one service. The signaling information (or S-TSID fragment) may provide mapping between DASH representation discovery in MPD and TSI corresponding to a service component. The signaling information (or S-TSID fragment) may include component acquisition information in the form of TSI and related DASH representation identifier, and/or at least one DASH segment related to DASH representation.

For example, the signaling information may include mapping information for mapping the transport session to a transport session identifier (TSI) and mapping the delivery object to the TOI. The mapping information (or ContentInfo) may include information mapped to an application service transmitted in an LCT transport session. The mapping information may include adaptation set parameters of DASH media representation for selection of an LCT transport session for rendering and/or representation ID of DASH content. The signaling information (or S-TSID fragment) may include a TSI field indicating an LCT transport session.

First, the DTV control engine C62340 may determine TSI corresponding to a segment and/or a delivery object requested based on signaling information and/or segment URL information.

Then, the DTV control engine C62340 may determine TOI corresponding to a segment and/or a delivery object requested based on signaling information and/or segment URL information.

In each LCT transport session, at least one related object divided into at least one delivery object may be transmitted. An object may be a DASH segment related to one representation.

Accordingly, when one delivery object is one segment, TOI may be matched with the segment. When one delivery object is a portion of one segment, TOI may be matched with a delivery object that belongs to the segment. When one delivery object is a portion of one segment, the TOI may be matched with an appropriate delivery object that belongs to the segment based on an MPD timeline.

The ALC/LCT+ client C62360 may recover at least one delivery object from the transport session based on the TSI. The ALC/LCT+ client C62360 may include the aforementioned FLUTE+ client and/or an ALC/LCT+ client.

First, the ALC/LCT+ client C62360 may join a session based on the TSI. For example, the session may be an LCT transport session.

The ALC/LCT+ client C62360 may check whether at least one packet is matched with a TSI value. When the packet is not matched, the packets may be discarded. For example, the ALC/LCT+ client C62360 may check whether TSI transmitted at a sender IP address and/or a header is matched with one of received (sender IP address and TSI) pairs in signaling information (or session description). One of the (sender IP address and TSI) pairs may indicate an LCT transport session in which the receiver currently participates (is supposed to participate). When the packet is not matched, the packets may be discarded without being further processed. Subsequent operations may be performed within a range of a (sender IP address, TSI) session of a received packet.

The ALC/LCT+ client C62360 may check whether TSI attribute and/or CodePoint attribute indicates an effective operation point in signaling information. That is, the signaling information may include a matching entry of a TSI value provided in a packet header. In addition, with respect to a corresponding TSI, the signaling information may include CodePoint attribute. A value of the CodePoint attribute may be equal to a value of the CodePoint field in a header of a packet.

Then, the ALC/LCT+ client C62360 may receive, filter, and/or process a packet based on the TSI and/or the TOI.

When one or more delivery objects are transmitted through an LCT transport session, the ALC/LCT+ client C62360 may check whether TOI present in a packet header is effective. When the TOI is not effective, the packet may be discarded without being futher processed.

The ALC/LCT+ client C62360 may collect packets having TOI matched with a requested delivery object.

During reception of packets, the ALC/LCT+ client C62360 may demultiplex at least one packet based on the TOI. The ALC/LCT+ client C62360 may store appropriate packet information items in an appropriate place in order to recover a corresponding delivery object.

Then, the ALC/LCT+ client C62360 may recover at least one delivery object.

The ALC/LCT+ client C62360 may recover at least one delivery object from each LCT transport session included in the ROUTE session and/or the ROUTE session.

For example, the ALC/LCT+ client C62360 may start recovery from a packet including data of a first portion of the delivery object based on the TOI.

The ALC/LCT+ client C62360 may process the remaining portions of a packet (or payload). For example, the ALC/LCT+ client C62360 may appropriately interpret other packet headers. The ALC/LCT+ client C62360 may use an FEC payload ID (or source FEC Payload ID) in order to determine offset information and use at least one encoding symbol present in a payload in order to recover a corresponding delivery object.

For example, the ALC/LCT+ client C62360 may determine a delivery object related to a payload of a received packet (or ROUTE packet) based on signaling information and/or TOI transmitted in a header of a packet.

Then, the recovered segment and/or delivery object may be transmitted to an appropriate handler for additional processing.

For example, at least one recovered delivery object may be transmitted to the DASH client C62320 along with timing information. The timing information may include at least one of decoding time information and/or presentation time information related to a delivery object.

When signaling information (or metadata) of a complete set of at least one packet payload of a delivery object related to a given TOI value and a delivery object of the complete set is recovered, the delivery object may be transmitted to an application. For example, the delivery object may be transmitted to a media decoder (not shown). The signaling information (or metadata) may be dependent upon an applied delivery mode.

Hereinafter, a representation switching operation will be described.

The receiver may switch representation based on information updated during currently proceeding media presentation.

Representation switching may be the same as tuning in or seeking to "new" representation (hereinafter, second representation) from a specific time point of presentation at "existing" representation (hereinafter, first representation).

When a switching request is once made, the receiver may discover a stream access point (SAP) with respect to each media stream in second representation at a close ideal presentation time after a current presentation time. The SAP may indicate a position in which presentation of a media stream in representation is enabled. Presentation of the first representation up to SAP in the second representation may enable seamless switching.

The representation and the second representation may be included in one service, may have the same media type, and may be media content components that are replaceable with each other.

For example, one service may include one video component and/or two audio components. Each audio component may be matched with each representation. Each audio component may include a Korean audio component and/or an English audio component. In this case, the receiver may change audio components included in the same service at a specific time to an English audio component from a Korean audio component. For example, the receiver may participate in an LCT transport session for transmitting a Korean audio component and receive and decode a related component. Then, the receiver may terminate an LCT transport session for transmitting a Korean audio component at a specific time, participate in an LCT transport session for transmitting an English audio component, and receive and decode a related object.

When segment URL information related to the first representation and segment URL information related to the second representation are different, the DASH client C62320 may determine second representation to be present.

For example, when representation is switched, the DASH client C62320 may select second representation from the first representation.

Then, the DASH client C62320 may select a segment and/or a delivery object related to the second representation according to an MPD timeline.

Then, the DASH client C62320 may transmit a segment list and/or segment URL information related to the second representation to the DTV control engine C62340.

For example, the DASH client C62320 may transmit another segment URL information item including another segment number of the same type of replaceable media content component to the DTV control engine C62340.

A detailed description of the DASH client C62320 is the same as the above description.

The DTV control engine C62340 may map the second representation of the signaling information to the TSI of the content component.

For example, the DTV control engine C62340 may determine TSI and/or TOI of a segment and/or delivery object based on segment list and/or segment URL information related to the second representation.

The representation may include the first representation and the second representation, and the ALC/LCT+ client C62360 may switch representation to the second representation from the first representation at a predetermined time point.

For example, the ALC/LCT+ client C62360 may join a session related to the second representation based on the TSI. The ALC/LCT+ client C62360 may terminate a session related to the first representation. In some embodiments, the ALC/LCT+ client C62360 may join a session related to the second representation after terminating a session related to the first representation or join the session related to the second representation before terminating the session related to the first representation.

When representation is switched, the DASH client C62320, a detailed description of the DTV control engine C62340, and/or the ALC/LCT+ client C62360 is the same as the above description. In addition, at least one of the aforementioned operations of the delivery object processor C62300 may be performed by another component of the receiver.

FIG. 57 is a diagram illustrating a structure of a delivery object processor according to an embodiment of the present invention.

A procedure of joining and/or terminating at least one session among a ROUTE session, an MMTP session, and/or an LCT transport session by the delivery object processor C62300 will be described in detail. In addition, embodiments of the present invention will be described in terms of an LCT transport session.

Hereinafter, a procedure of joining and/or terminating at least one LCT transport session based on representation ID information and/or transaction information by the delivery object processor C62300 will be described.

According to an embodiment of the present invention, the delivery object processor C62300 may include a DASH client C62325, a DTV control engine C62345, and/or an ALC/LCT+ client C62365.

A detailed description of basic operations of components with the same term as the aforementioned components among components included in the delivery object processor C62300 is the same as the above description. Hereinafter, the components will be described in terms of a difference.

The DASH client C62325 may determine representation to be present and request a segment related to the delivery object.

First, the DASH client C62325 may acquire at least one of MPD and/or MPD URL.

Then, the DASH client C62325 may parse MPD. The DASH client C62320 may select at least one adaptation set based on MPD (or second information).

Then, in the selected adaptation set, the DASH client C62325 may select one representation based on the MPD (or second information).

The MPD (or second information) may include at least one of representation ID information for identifying the representation and transaction information indicating whether to join a transport session for transmitting the representation. The transaction information may include start transaction indicating participation in the transport session and stop transaction indicating termination of the transport session.

For example, the transaction information may include start transaction and/or stop transaction. When first joining a session, start transaction may indicate participation in a session related to the first representation. When representation is switched, the start transaction may terminate a session related to the first representation and indicate participation in a session related to the second representation. When a current session is terminated, the stop transaction may indicate termination of a session related to the first representation.

When first joining a session, the DASH client C62325 may transmit representation ID information for identifying the selected first representation and/or transaction information indicating "Start Transaction" to the DTV control engine C62345.

Then, the DASH client C62325 may request at least one segment and/or delivery object of the selected representation based on the representation ID information and/or the transaction information.

The DTV control engine C62345 may map the representation of the signaling information and a transport session identifier (TSI) of the content component.

For example, the DTV control engine C62345 may determine a TSI for identifying a transport session based on the representation ID information and determine whether to participate in the transport session based on the transaction information.

For example, the DTV control engine C62345 may determine TSI for identifying a transport session based on the representation ID information and transmit the TSI to the ALC/LCT+ client C62365.

The ALC/LCT+ client C62365 may recover at least one delivery object from the transport session based on the TSI.

For example, the ALC/LCT+ client C62365 may join a transport session based on the TSI. For example, the transport session may be an LCT transport session. Then, the ALC/LCT+ client C62365 may receive, filter, and/or process a packet. Then, the ALC/LCT+ client C62365 may recover at least one segment and/or delivery object.

Then, the recovered segment and/or delivery object may be transmitted to an appropriate handler for additional processing.

For example, the restored at least one segment and/or delivery object may be transmitted to the DASH client C62325 along with timing information. The timing information may include at least one of decoding time information and/or presentation time information related to the delivery object.

Hereinafter, a representation switching operation will be described.

When the representation ID information for identifying the first representation and the representation ID information for identifying the second representation are different, the DASH client C62325 may determine the second representation to be present.

For example, when representation is switched, the DASH client C62325 may select second representation different from the first representation.

Then, the DASH client C62325 may transmit representation ID information for identifying the second representation and/or transaction information indicating "Start Transaction" to the DTV control engine C62345. For example, the DASH client C62325 may transmit another representation ID information on the same type of replaceable media content component and/or transaction information indicating "Start Transaction" to the DTV control engine C62345.

The DASH client C62325 may transmit representation ID information for identifying the first representation and/or transaction information indicating "Stop Transaction" to the DTV control engine C62345.

The DTV control engine C62345 may map the DTV control engine to the second representation of the signaling information and the TSI of the content component.

For example, the DTV control engine C62345 may determine TSI base on the representation ID information and indicate whether to join a session based on the transaction information. The DTV control engine C62345 may control driving of all processes of the receiver. For example, the DTV control engine C62345 may control the ALC/LCT+ client C62365 based on the transaction information.

For example, the DTV control engine C62345 may determine TSI related to the first representation based on the representation ID information for identifying the first representation. In addition, the DTV control engine C62345 may determine TSI related to the second representation based on the representation ID information for identifying the second representation.

The representation may include the first representation and the second representation and the ALC/LCT+ client C62365 may switch representation to the second representation from the first representation at a predetermined time point.

For example, the ALC/LCT+ client C62365 may join a session related to the second representation based on the TSI. The ALC/LCT+ client C62365 may terminate a session related to the first representation.

In some embodiments, the ALC/LCT+ client C62365 may join a session related to the second representation after terminating a session related to the first representation and join the session related to the second representation before terminating the session related to the first representation.

When representation is switched, a detailed description of the DASH client C62325, the DTV control engine C62345, and/or the ALC/LCT+ client C62365 is the same as the above description. At least one of the aforementioned operations of the delivery object processor C62300 may be performed by another component of the receiver.

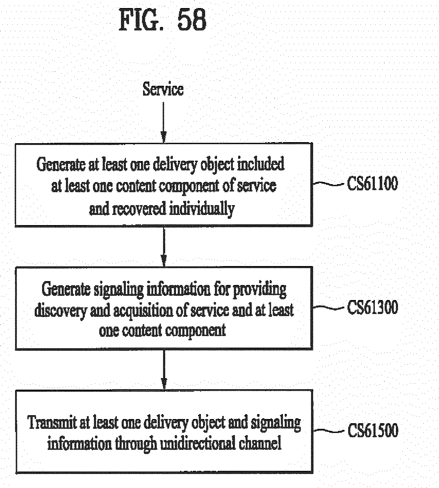

FIG. 58 is a flowchart of a broadcast signal transmitting method according to an embodiment of the present invention.

Referring to the drawing, a transmitter (or a broadcast signal transmitting apparatus) may generate at least one individually recovered delivery object included in at least one content component of a service using a delivery object generator (SC61100).

For example, the delivery object generator object generator may divide at least one content component included in a service to generate at least one delivery object.

A service may be one media content period or a contiguous sequence of media content periods. In addition, a service may be one broadcast program, additional information added to a broadcast program, and/or independent information. The service may include at least one content component.

The content component may be one continuous component of the media content with an assigned media component type that can be encoded individually into a media stream. In addition, the media component type may include at least one of video, audio, and/or text.

The delivery object may be one of a part of the file, a group of the file, hyper text transfer protocol (HTTP) entity, and a group of HTTP entity. A portion of the file may be a file in a byte range. The HTTP entity may include an HTTP entity header and/or an HTTP entity body.

The transmitter may generate signaling information for providing discovery and acquisition of the service and the at least one content component using a signaling encoder (CS61300).

The signaling information may include first information on a transport session for transmitting the at least one content component of the service and at least one delivery object transmitted through the transport session.

The signaling information may further include second information including description of DASH media presentation corresponding to the service.

The signaling information may include at least one of first information and/or second information.

For example, the signaling information(or the first information) may include at least one of offset information indicating a position of a first byte of a payload of a transport protocol packet for transmitting the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information of the delivery object.

The offset information may indicate offset (a temporal position or a spatial position) of a payload of a packet that is currently transmitted in an object (or delivery object).

The timestamp information may include timing information related to data included in a payload of a transport protocol packet. In addition, the timestamp information may include timing information related to the delivery object. For example, the timestamp information may include information on a time point at which a first byte of data included in a payload is decoded and/or presentation time information of the data.

In addition, the signaling information (or the second information) may include at least one of segment URL information indicating a uniform resource locator (URL) for access to the segment, representation ID information for identifying the representation, and transaction information indicating whether to join in a transport session for transmitting the representation.

The segment URL information may include at least one of representation ID for identifying the representation and a segment number for identifying a number of the segment.

The transaction information may include at least one of start transaction indicating participation in the transport session and stop transaction indicating termination of the transport session.

In addition, the transmitter may transmit the at least one delivery object and the signaling information through an unidirectional channel using a transmitter (CS61500).

A broadcast signal transmitting method according to another embodiment of the present invention may include all the aforementioned functions of the broadcast signal transmitting apparatus. A detailed description of the signaling information may include all the above description.

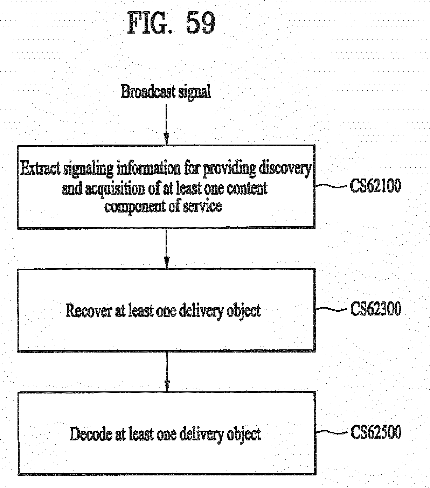

FIG. 59 is a flowchart of a broadcast signal receiving method according to an embodiment of the present invention.

Referring to the drawing, the receiver (or the broadcast signal receiving apparatus) may extract signaling information for providing discovery and acquisition of at least one content component of a service using a signaling parser (CS62100).

The signaling information may include first information on a transport session for transmitting the at least one content component of the service and at least one delivery object transmitted through the transport session.

The first information may further include at least one of offset information indicating a position of a first byte of a payload of a transport protocol packet for transmitting the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information on the delivery object.

The signaling information may further include second information including description of DASH media presentation corresponding to the service.

For example, the second information may be media presentation description (MPD). The second information may include at least one of segment URL information, representation ID information, and/or transaction information.

The segment URL information may indicate a uniform resource locator (URL) for access to the segment. The segment URL information may include at least one of representation ID for identifying the representation and a segment number for identifying a number of the segment.

The representation ID information may identify the representation.

The transaction information may indicate whether to participate in a transport session for transmitting the representation. The transaction information may include at least one of start transaction indicating participation in the transport session and stop transaction indicating termination of the transport session.

The signaling information may include at least one of the first information and/or the second information. The signaling information may include all contents of a header of an LCT packet and a header extension of the LCT packet. In addition, a detailed description of the signaling information may include all the above description.

The receiver may recover at least one delivery object based on the signaling information using a delivery object processor (CS62300).

The delivery object may be included in at least one content component of the service and may be recovered individually.

The receiver may decode the at least one delivery object using a media decoder (CS62500).

The broadcast signal receiving method according to an embodiment of the present invention may include all the aforementioned functions of the broadcast signal receiving apparatus. A detailed description of the signaling information may include all the above description.

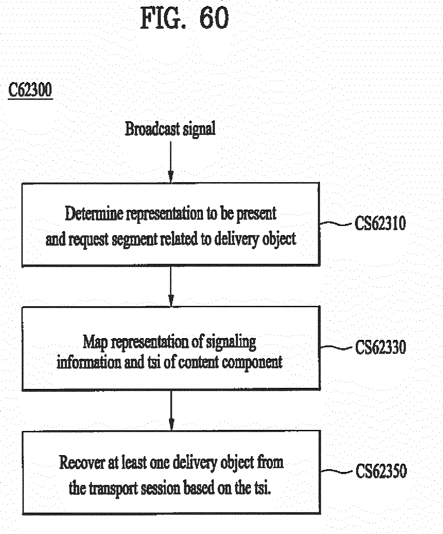

FIG. 60 is a flowchart of recovery of a delivery object according to an embodiment of the present invention.

Hereinafter, a procedure of recovering at least one delivery object by a receiver (or broadcast signal receiving apparatus) will be described briefly.

The receiver may determine representation to be present using a DASH client and request a segment related to the delivery object (CS62310).

Then, the receiver may map the representation of the signaling information and a transport session identifier (TSI) of the content component using the DTV control engine (CS62330).

Then, the receiver may recover at least one delivery object from the transport session based on the TSI using the ALC/LCT+ client (CS62350).

In addition, the receiver may switch representation based on the segment URL information.

The representation may include the first representation and the second representation.

When segment URL information related to the first representation and segment URL information related to the second representation are different, the receiver may determine second representation to be present using the DASH client.

Then, the receiver may map the second representation of the signaling information and TSI of the content component using the DTV control engine.

Then, the receiver may switch representation to the second representation from the first representation at a predetermined time point using the ALC/LCT+ client.

The receiver may switch representation based on the representation ID information.

When representation ID information for identifying the first representation and representation ID information for identifying the second representation are different, the receiver may determine second representation to be pre sent using the DASH client.

Then, the receiver may map the second representation of the signaling information and the TSI of the content component using the DTV control engine.

Then, the receiver may switch representation to the second representation from the first representation at a predetermined time point using the ALC/LCT+ client.

The method of recovering delivery object according to another embodiment of the present invention may include all the aforementioned functions of the broadcast signal transmitting apparatus. A detailed description of the signaling information may include all the above description.

A module, a processor, a device, or a unit may be processors for execution of consecutive procedures stored in a memory (or storage unit). Each operation described in the aforementioned embodiments may be performed by hardware/processors. Each module/block/units described in the aforementioned embodiments may be executed as code. The code may be written in a storage medium readable by a processor and, accordingly, readable by a processor provided by an apparatus.

A method invention according to the present invention may be embodied in the form of a program command to be executed through various computer elements and recorded in a computer readable medium.

The computer readable medium may include a program command, a data file, a data configuration, and so on alone or in combination thereof. The program command stored in the medium may be particularly designed and configured for the present invention or may be well known or used by one of the ordinary skill in the art of computer software. Examples of the computer readable medium may include magnetic media such as a hard disk, a floppy disk, and a magnetic tape, optical media such as CD-ROM and DVD, magneto-optical media such as floptical disks, and a hardware device that is particularly configured to store and execute a program command such as a read only memory (ROM), a random access memory (RAM), and a flash memory. Examples of the program command may include a high-level language code to be executed by a computer using an interpreter or the like as well as a machine code generated by a compiler. The hardware device may be configured to operate as one or more software modules in order to perform the operation according to the present invention and vice versa.

It will be apparent to those skilled in the art that various modifications and variations can be made in the present invention without departing from the spirit or scope of the inventions. Thus, it is intended that the present invention cover the modifications and variations of this invention provided they come within the scope of the appended claims and their equivalents.

Accordingly, it will be apparent to those skilled in the art that various modifications and variations can be made in the present invention within the scope of the appended claims and their equivalents.

In addition, throughout this specification, both device and method inventions have been described. As necessary, the description of the device and method inventions may be applied supplementarily.

[Mode for Invention]

Various embodiments have been described in the best mode for carrying out the invention.

[Industrial Applicability]

The present invention may be used in all fields related to broadcasting.

**Claims**

1. A broadcast signal receiving apparatus comprising:

   a signaling parser configured to extract signaling information for providing discovery and acquisition of at least one content component of a service;
   a delivery object processor configured to recover at least one delivery object based on the signaling information; and
   a media decoder configured to decode the at least one delivery object.

2. The broadcast signal receiving apparatus according to claim 1, wherein:

   the signaling information comprises at least one of first information on a transport session for transmitting the at least one content component of the service and at least one delivery object transmitted through the transport session, and second information comprising description of DASH media presentation corresponding to the service;
   the delivery object is included in the at least one content component of the service and is recovered individually; and
   the delivery object is one of a file, a part of the file, a group of the file, hyper text transfer protocol (HTTP) entity, and a group of the HTTP entity.

3. The broadcast signal receiving apparatus according to claim 2, wherein the delivery object processor further comprises:

a DASH client configured to determine representation to be present and to request a segment related to the delivery object;

a DTV control engine configured to map the representation of the signaling information and a transport session identifier (TSI) of the content component; and

a ALC/LCT+ client configured to recover at least one delivery object from the transport session based on the TSI.

**4.** The broadcast signal receiving apparatus according to claim 3, wherein the second information comprises segment uniform resource locator (URL) information indicating URL for access to the segment.

**5.** The broadcast signal receiving apparatus according to claim 4, wherein the segment URL information comprises at least one of representation ID for identifying the Representation and a segment number for identifying a number of the segment.

**6.** The broadcast signal receiving apparatus according to claim 5, wherein:

the representation comprises first representation and second representation; and
the ALC/LCT+ client switches representation to second representation from first representation at a predetermined time point.

**7.** The broadcast signal receiving apparatus according to claim 6, wherein: when segment URL information related to the first representation a segment URL information related to the second representation are different,
the DASH client determines second representation to be present; and
the DTV control engine maps the second representation of the signaling information and the TSI of the content component.

**8.** The broadcast signal receiving apparatus according to claim 3, wherein the second information comprises at least one of representation ID for identifying the representation and transaction information indicating whether to join a transport session for transmitting the representation.

**9.** The broadcast signal receiving apparatus according to claim 8, wherein the transaction information comprises at least one of start transaction indicating participation in the transport session and stop transaction indicating termination of the transport session.

**10.** The broadcast signal receiving apparatus according to claim 9, wherein:

representation comprises first representation and second representation; and
the ALC/LCT+ client switches representation to second representation from first representation at a predetermined time point.

**11.** The broadcast signal receiving apparatus according to claim 10, wherein: when the representation ID information for identifying the first representation and the representation ID information for identifying the second representation,
the DASH client determines second representation to be present; and
the DTV control engine maps the second representation of the signaling information and the TSI of the content component.

**12.** A broadcast signal transmitting apparatus comprising:

a delivery object generator configured to generate at least one delivery object included in at least one content component of a service;
a signaling encoder configured to generate signaling information for providing discovery and acquisition of the service and the at least one content component; and
a transmitter configured to transmit the at least one delivery object and the signaling information through a unidirectional channel.

**13.** The broadcast signal transmitting apparatus according to claim 12, wherein: the signaling information comprises at least one of first information on a transport session for transmitting the at least one content component of the service and at least one delivery object transmitted through the transport session, and second information comprising description of DASH media presentation corresponding to the service;

the delivery object is recovered individually; and
the delivery object is one of a file, a part of the file, a group of the file, hyper text transfer protocol (HTTP) entity, and a group of the HTTP entity.

14. The broadcast signal transmitting apparatus according to claim 13, wherein the second information comprises at least one of segment uniform resource locator (URL) information indicating URL for access to the segment, representation ID information for identifying the representation, and transaction information indicating whether to join a transport session for transmitting the representation.

15. The broadcast signal transmitting apparatus according to claim 14, wherein the segment URL information comprises at least one of representation ID for identifying the representation and a segment number for identifying a number of the segment.

FIG. 1

EP 3 148 196 A1

# FIG. 2

(a) Single Input Stream (TS/IP/GS) → [CRC Encoder] → [BB Frame Slicer] → [BB Frame Header Insertion] (2000) → [Stuffing Insertion] → [BB Frame Scrambler] (2010) →

Mode adaptation | Stream adaptation

(b) Management Information → [Physical Layer Signaling Generation] (2020) → PLS1 → [PLS Scrambler] → | PLS2 → [PLS Scrambler] (2030) →

BICM

EP 3 148 196 A1

## FIG. 3

EP 3 148 196 A1

# FIG. 4

## FIG. 5

# FIG. 6

BICM

DP 0

DP n

PLS1

PLS1

Delay Compensation — 7000

Cell Mapper — 7010

Assembly of PLS cells

Assembly of EAS cells

Assembly of FIC cells

Assembly of Base DP cells

Assembly of Normal DP cells

EAS, FIC, Section

Frequency Interleaver — 7020

OFDM Generation

- - - MIMO path

## FIG. 7

Frame Structure → 

8000 Pilot and Reserved Tone Insertion → 8010 2D-eSFN Encoding → 8020 IFFT → 8030 PAPR Reduction → 8040 Guard Interval Insertion → 8050 Preamble Insertion → 8060 Other system insertion → 8070 DAC → Tx ant. 1

Pilot and Reserved Tone Insertion → 2D-eSFN Encoding → IFFT → PAPR Reduction → Guard Interval Insertion → Preamble Insertion → Other system insertion → DAC → Tx ant. 2 (Advanced profile)

# FIG. 8

Rx ant. 1 Signal → Rx Signal input → **Synchronization & Demodulation** (9000) → Rx 1 path / Rx m path → **Frame Parsing** (9010) → Data Pipe 0 / Data Pipe n → **Demapping & Decoding (Bit-deinterleaving)** (9020) → **Output Processor** (9030) → Ts, IP or GS output streams

Rx ant. m Signal

**Signaling Decoding** (9040)

Physical Layer Signaling (PLS)

# FIG. 9

(a) Super-frame

$T_{SF}$

1 Super-frame = 8 FRUs

(b)

| FRU #0 | FRU #1 | FRU #2 | FRU #3 | FRU #4 | FRU #5 | FRU #6 | FRU #7 |

1 FRU = 1 ~ 4 Frames

(c)

| Base profile | Handheld profile | FEF |

(d)

| Preamble | FSS #0 | FSS #1 | FSS #2 | FSS #3 | Normal data symbol #0 | ••• | Normal data symbol #$N_{Normal}$-1 | FSS |

1 ~ 4 FSSs

$N_{Normal}$: number of normal data symbols

## FIG. 10

| frame (n-1) | frame (n) | frame (n+1) |
|---|---|---|

11010    11020

| Preamble | PLS1 | PLS2 | DP(n) |
|---|---|---|---|

11000

| signaling PLS1 | PLS2 static signaling | PLS2 dynamic signaling |
|---|---|---|

## FIG. 11

| Content | Bits |
|---|---|
| PHY_PROFILE | 3 |
| FFT_SIZE | 2 |
| GI_FRACTION | 3 |
| EAC_FLAG | 1 |
| PILOT_MODE | 1 |
| PAPR_FLAG | 1 |
| FRU_CONFIGURE | 3 |
| RESERVED | 7 |

# FIG. 12

| Content | Bits |
|---|---|
| PREAMBLE_DATA | 20 |
| NUM_FRAME_FRU | 2 |
| PAYLOAD_TYPE | 3 |
| NUM_FSS | 2 |
| SYSTEM_VERSION | 8 |
| CELL_ID | 16 |
| NETWORK_ID | 16 |
| SYSTEM_ID | 16 |
| for i = 0:3 | |
|       FRU_PHY_PROFILE | 3 |
|       FRU_FRAME_LENGTH | 2 |
|       FRU_GI_FRACTION | 3 |
|       RESERVED | 4 |
| end | |
| PLS2_FEC_TYPE | 2 |
| PLS2_MOD | 3 |
| PLS2_SIZE_CELL | 15 |
| PLS2_STAT_SIZE_BIT | 14 |
| PLS2_SYN_SIZE_BIT | 14 |
| PLS2_REP_FLAG | 1 |
| PLS2_REP_SIZE_CELL | 15 |
| PLS2_NEXT_FEC_TYPE | 2 |
| PLS2_NEXT_MODE | 3 |
| PLS2_NEXT_REP_FLAG | 1 |
| PLS2_NEXT_REP_SIZE_CELL | 15 |
| PLS2_NEXT_REP_STAT_SIZE_BIT | 14 |
| PLS2_NEXT_REP_DYN_SIZE_BIT | 14 |
| PLS2_AP_MODE | 2 |
| PLS2_AP_SIZE_CELL | 15 |
| PLS2_NEXT_AP_MODE | 2 |
| PLS2_NEXT_AP_SIZE_CELL | 15 |
| RESERVED | 32 |
| CRC 32 | 32 |

# FIG. 13

| Content | Bits |
|---|---|
| FIC_FLAG | 1 |
| AUX_FLAG | 1 |
| NUM_DP | 6 |
| for i = 1 : NUM_DP | |
|     DP_ID | 6 |
|     DP_TYPE | 3 |
|     DP_GROUP_ID | 8 |
|     BASE_DP_ID | 6 |
|     DP_FEC_TYPE | 2 |
|     DP_COD | 4 |
|     DP_MOD | 4 |
|     DP_SSD_FLAG | 1 |
|     if PHY_PROFILE = '010' | |
|         DP_MIMO | 3 |
|     end | |
|     DP_TI_TYPE | 1 |
|     DP_TI_LENGTH | 2 |
|     DP_TI_BYPASS | 1 |
|     DP_FRAME_INTERVAL | 2 |
|     DP_FIRST_FRAME_IDX | 5 |
|     DP_NUM_BLOCK_MAX | 10 |
|     DP_PAYLOAD_TYPE | 2 |
|     DP_INBAND_MODE | 2 |
|     DP_PROTOCOL_TYPE | 2 |
|     DP_CRC_MODE | 2 |
| | |
|     if DP_PAYLOAD_TYPE == TS('00') | |
|         DNP_MODE | 2 |
|         ISSY_MODE | 2 |
|         HC_MODE_TS | 2 |
|         if HC_MODE_TS == '01' or '10' | |
|             PID | 13 |
|         end | |
|     if DP_PAYLOAD_TYPE == IP('01') | |
|         HC_MODE_IP | 2 |
|     end | |
|     RESERVED | 8 |
| end | |
| if FIC_FLAG == 1 | |
|     FIC_VERSION | 8 |
|     FIC_LENGTH_BYTE | 13 |
|     RESERVED | 8 |
| end | |
| if AUX_FLAG == 1 | |
|     NUM_AUX | 4 |
|     AUX_CONFIG_RFU | 8 |
|     for - 1 : NUM_AUX | |
|         AUX_STREAM_TYPE | 4 |
|         AUX_PRIVATE_CONF | 28 |
|     end | |
| end | |

# FIG. 14

| Content | | Bit |
|---|---|---|
| FRAME_INDEX | | 5 |
| PLS_CHANGE_COUNTER | | 4 |
| FIC_CHANGE_COUNTER | | 4 |
| RESERVED | | 16 |
| for i = 1: NUM_DP | | |
| | DP_ID | 6 |
| | DP_START | 15 (or13) |
| | DP_NUM_BLOCK | 10 |
| end | RESERVED | 8 |
| EAC_FLAG | | 1 |
| EAS_WAKE_UP_VERSION_NUM | | 8 |
| if EAC_FLAG = 1 | | |
| | EAC_LENGTH_BYTE | 12 |
| else | | |
| | EAC_COUNTER | 12 |
| end | | |
| for i=1:NUM_AUX | | |
| | AUX_PRIVATE_DYN | 48 |
| end | | |
| CRC 32 | | 32 |

# FIG. 15

| Preamble | PLS1 | PLS2 | EAC | FIC | DPs | Auxiliary streams | Dummy |
|---|---|---|---|---|---|---|---|

# FIG. 16

# FIG. 17

## FIG. 18

(a)

(b)

# FIG. 19

$$N_{ldpc} \text{ bits}$$

$$N_{bch} \text{bits} \, (=K_{ldpc} \text{bits})$$

$$K_{bch} \text{bits}$$

| BBFRAME | BCH Parity | LDPC Parity |
|---------|------------|-------------|

# FIG. 20

# FIG. 21

(a)                                   (b)

EP 3 148 196 A1

# FIG. 22

Virtual XFECBLOCKs

$N_{xBLOCK\_TI}(0,0) = 3$

$N_{xBLOCK\_TI}(1,0) = 6$

$N_{xBLOCK\_TI}(2,0) = 5$

$N_c = 7$

$N_r = 30$

FIG. 23

$N_{xBLOCK\_TI}(2,0) = 5$

$N_{xBLOCK\_TI}(1,0) = 6$

$N_{xBLOCK\_TI}(0,0) = 3$

# FIG. 24

| | 0 | 1 | 2 |
|---|---|---|---|
| 0 | 0 | 0 | 22 |
| 1 | 3 | 11 | 25 |
| 2 | 5 | 14 | 27 |
| 3 | 7 | 16 | 29 |
| 4 | 10 | 18 | 1 |
| 5 | 12 | 21 | 3 |
| 6 | 14 | 23 | 6 |
| 7 | 17 | 25 | 8 |
| 8 | 19 | 28 | 10 |
| 9 | 21 | 2 | 13 |
| 10 | 24 | 4 | 15 |
| 11 | 26 | 6 | 17 |
| 12 | 28 | 9 | 20 |
| 13 | 0 | 11 | 22 |
| 14 | 2 | 13 | 24 |
| 15 | 5 | 16 | 27 |
| 16 | 7 | 18 | 29 |
| 17 | 9 | 20 | 1 |
| 18 | 12 | 23 | 3 |
| 19 | 14 | 25 | 5 |
| 20 | 16 | 27 | 8 |
| 21 | 19 | 1 | 10 |
| 22 | 21 | 4 | 12 |
| 23 | 23 | 6 | 15 |
| 24 | 26 | 8 | 17 |
| 25 | 28 | 11 | 19 |
| 26 | 0 | 13 | 22 |
| 27 | 2 | 15 | 24 |
| 28 | 4 | 18 | 26 |
| 29 | 7 | 20 | 29 |

$N_{xBLOCK\_TI}(0,0) = 3$

| | 0 | 1 | 2 | 3 | 4 | 5 |
|---|---|---|---|---|---|---|
| 0 | 0 | 5 | 9 | 14 | 20 | 24 |
| 1 | 1 | 6 | 10 | 16 | 21 | 25 |
| 2 | 3 | 7 | 11 | 17 | 22 | 27 |
| 3 | 4 | 8 | 12 | 18 | 23 | 28 |
| 4 | 5 | 9 | 14 | 19 | 25 | 29 |
| 5 | 6 | 10 | 15 | 20 | 26 | 1 |
| 6 | 7 | 12 | 16 | 21 | 27 | 2 |
| 7 | 8 | 13 | 17 | 23 | 28 | 3 |
| 8 | 10 | 14 | 18 | 24 | 29 | 4 |
| 9 | 11 | 15 | 19 | 25 | 0 | 5 |
| 10 | 12 | 16 | 21 | 26 | 1 | 6 |
| 11 | 13 | 17 | 22 | 27 | 2 | 8 |
| 12 | 14 | 19 | 23 | 28 | 3 | 9 |
| 13 | 15 | 20 | 24 | 0 | 4 | 10 |
| 14 | 17 | 21 | 25 | 1 | 6 | 11 |
| 15 | 18 | 22 | 26 | 2 | 7 | 12 |
| 16 | 19 | 23 | 28 | 4 | 8 | 13 |
| 17 | 20 | 24 | 29 | 5 | 9 | 15 |
| 18 | 21 | 26 | 0 | 6 | 10 | 16 |
| 19 | 22 | 27 | 2 | 7 | 11 | 17 |
| 20 | 24 | 28 | 3 | 8 | 13 | 18 |
| 21 | 25 | 29 | 4 | 9 | 14 | 19 |
| 22 | 26 | 0 | 5 | 11 | 15 | 20 |
| 23 | 27 | 1 | 6 | 12 | 16 | 22 |
| 24 | 28 | 2 | 7 | 13 | 17 | 23 |
| 25 | 29 | 3 | 9 | 14 | 18 | 24 |
| 26 | 0 | 4 | 10 | 15 | 20 | 25 |
| 27 | 1 | 5 | 11 | 16 | 21 | 26 |
| 28 | 2 | 7 | 12 | 18 | 22 | 27 |
| 29 | 3 | 8 | 13 | 19 | 23 | 29 |

$N_{xBLOCK\_TI}(1,0) = 6$

| | 0 | 1 | 2 | 3 | 4 |
|---|---|---|---|---|---|
| 0 | 0 | 10 | 23 | 6 | 17 |
| 1 | 1 | 12 | 24 | 7 | 18 |
| 2 | 3 | 14 | 25 | 8 | 20 |
| 3 | 5 | 15 | 26 | 9 | 22 |
| 4 | 6 | 16 | 28 | 11 | 23 |
| 5 | 7 | 17 | 0 | 13 | 24 |
| 6 | 8 | 19 | 2 | 14 | 25 |
| 7 | 10 | 21 | 4 | 15 | 27 |
| 8 | 12 | 22 | 5 | 16 | 29 |
| 9 | 13 | 23 | 6 | 18 | 1 |
| 10 | 14 | 24 | 7 | 20 | 3 |
| 11 | 15 | 26 | 9 | 21 | 4 |
| 12 | 17 | 28 | 11 | 22 | 5 |
| 13 | 19 | 29 | 12 | 23 | 6 |
| 14 | 20 | 0 | 13 | 25 | 8 |
| 15 | 21 | 2 | 14 | 27 | 10 |
| 16 | 22 | 3 | 16 | 28 | 11 |
| 17 | 24 | 4 | 18 | 29 | 12 |
| 18 | 26 | 5 | 19 | 1 | 13 |
| 19 | 27 | 7 | 20 | 2 | 15 |
| 20 | 28 | 9 | 21 | 3 | 17 |
| 21 | 29 | 10 | 23 | 4 | 18 |
| 22 | 0 | 11 | 25 | 6 | 19 |
| 23 | 1 | 12 | 26 | 8 | 20 |
| 24 | 2 | 14 | 27 | 9 | 22 |
| 25 | 3 | 16 | 28 | 10 | 24 |
| 26 | 5 | 17 | 0 | 11 | 25 |
| 27 | 7 | 18 | 1 | 13 | 26 |
| 28 | 8 | 19 | 2 | 15 | 27 |
| 29 | 9 | 21 | 4 | 16 | 29 |

$N_{xBLOCK\_TI}(2,0) = 5$

EP 3 148 196 A1

FIG. 25

FIG. 26

# FIG. 27

EP 3 148 196 A1

# FIG. 28

EP 3 148 196 A1

# FIG. 29

EP 3 148 196 A1

# FIG. 30

# FIG. 31

EP 3 148 196 A1

FIG. 32

## FIG. 33

**FIG. 34**

# FIG. 35

Protocol
(FLUTE or
ALC / LCT+)     TSI

FLUTE ⟶ ┌─────────────┐ ⟶ Generic File
         │  ALC / LCT +  │
         │    Client     │
ALC / LCT + ⟶ └─────────────┘ ⟶ ISO BMFF Object

( a )

Protocol
(FLUTE)     TSI

FLUTE ⟶ ┌───────────┐ ⟶ Generic File
         │ ALC / LCT + │
         │   Client    │
ALC / LCT + ⟶ └───────────┘ ⟶ ISO BMFF Object

( b )

Protocol
(ISO BMFF)     TSI

FLUTE ⟶ ┌───────────┐ ⟶ Generic File
         │ ALC / LCT + │
         │   Client    │
ALC / LCT + ⟶ └───────────┘ ⟶ ISO BMFF Object

( c )

EP 3 148 196 A1

# FIG. 36

ISO BMFF file

| ftyp | moov | moof | mdat |
|------|------|------|------|

Chunk#1     Chunk#2   Chunk#3   Chunk#4

ISO BMFF file

| ftyp | moov | moof | mdat |
|------|------|------|------|

Chunk#1     Chunk#2     Chunk#3

# FIG. 37

One Video Track

| Segment #1 | Segment #N |

Segment #1(ISO BMFF file)

| ftyp | moov | moof | mdat |

| ES#1 | ES#2 | ES#3 | ES#4 | ES#5 |

Segment #1

| ALC/LCT + H | ES#1 | ALC/LCT + H | ES#2 | ALC/LCT + H | ES#5 |
TSI=1 TOI=1     TSI=1 TOI=1     TSI=1 TOI=1

Segment #N

| ALC/LCT + H | ES#M | ALC/LCT + H | ES#M+1 | ALC/LCT + H | ES#M+K |
TSI=1 TOI=N     TSI=1 TOI=N     TSI=1 TOI=N

# FIG. 38

One Video Track

| Segment #1 | | Segment #N |

Segment #1(ISO BMFF file)

| ftyp | moov | moof | mdat |

| Chunk #1 | Chunk #2 | Chunk #3 |

| ES#1 | ES#2 | ES#3 | ES#4 | ES#5 |

**Segment #1**

Chunk #1
| ALC/LCT + H | ES#1 |
TSI=1  TOI=1

Chunk #2
| ALC/LCT + H | ES#2 |
TSI=1  TOI=2

Chunk #3
| ALC/LCT + H | ES#5 |
TSI=1  TOI=3

**Segment #N**

| ALC/LCT + H | ES#M |
TSI=1  TOI=H

| ALC/LCT + H | ES#M+K |
TSI=1  TOI=X

EP 3 148 196 A1

# FIG. 39

| Segment #1(ISO BMFF file) | | | |
|---|---|---|---|
| ftyp | moov | moof | mdat |

Cannot be processed without moov

Cannot be processed without moof

# FIG. 40

One Video Track

| Segment #1 | Segment #2 |
|---|---|

| Chunk #1 | | Chunk #1 | | Chunk #1 | Chunk #1 | |
|---|---|---|---|---|---|---|
| ES#1 | | ES#3 | | ES#4 | ES#5 | |

**Segment #2** (Broadcaster side)

| ALC/LCT + H | ES#5 |
|---|---|

TSI=1 TOI=5
Offset =1000

| ALC/LCT + H | ES#4 |
|---|---|

TSI=1 TOI=4
Offset =0

**Segment #2** (Receiver side)

| ALC/LCT + H | ES#5 |
|---|---|

TSI=1 TOI=5
Offset =1000

| ALC/LCT + H | ES#4 |
|---|---|

**Segment #1** (Broadcaster side)

| ALC/LCT + H | ES#3 |
|---|---|

TSI=1 TOI=3
Offset =1000

| ALC/LCT + H | ES#2 |
|---|---|

TSI=1 TOI=2
Offset =200

| ALC/LCT + H | ES#1 |
|---|---|

TSI=1 TOI=1
Offset =0

**Segment #1** (Receiver side)

| ALC/LCT + H | ES#3 |
|---|---|

| ALC/LCT + H | ES#2 |
|---|---|

TSI=1 TOI=2
Offset =200

| ALC/LCT + H | ES#1 |
|---|---|

TSI=1 TOI=1
Offset =0

Broadcaster side                    Receiver side

# FIG. 41

ALC/LCT Header

| V (4) | C (2) | PSI (2) | S (1) | O (2) | H (1) | Priority (2) | A (1) | B (1) | HDR_LEN (8) | Codepoint (8) |
|---|---|---|---|---|---|---|---|---|---|---|

Congestion Control Information (e.g., time slot index, sequence numbers)
(32 * (C+1))

Transport Session identifier (= one track)
(32*S + 16*H)

Transport Object identifier (= one ISO BMFF object) (32*O + 16*H)
(32*S + 16*H)

ISOBMFF File ID          Chunk ID

Header Extension

EXT_FTI, EXT_SCT, etc,

EXT_OBJ_OFFSET

EXT_OBJ_PTS

EXT_OBJ_LOCATION

FEC Payload ID

Encoding Symbols

PSI

| X (1) | Y (1) |
|---|---|

# FIG. 42

One Video Track

| Segment #1 | Segment #2 | | Segment #N |

Segment #1(ISO BMFF file)

| ftyp | moov | moof | mdat |

| Chunk #1 | Chunk #2 | Chunk #3 |

| ES#1 | ES#2 | ES#3 | ES#4 | ES#5 |

| ES#1 | ES#2 | ES#3 | ES#4 | ES#5 |

Segment #1

| ALC/LCT + H | ES#1 | ALC/LCT + H | ES#2 | ALC/LCT + H | ES#3 | ALC/LCT + H | ES#4 | ALC/LCT + H | ES#5 |

PRIORITY=HIGHEST
TSI=1 TOI=1,1
OFFSET = 0
PTS=X
LOCATION=xxxx

PRIORITY=HIGHER
TSI=1 TOI=1,2
OFFSET = 100

PRIORITY=HIGHEER
TSI=1 TOI=1,2
OFFSET = 200

PRIORITY=LOW
TSI=1 TOI=1,3
OFFSET = 400

PRIORITY=LOW
TSI=1 TOI=1,3
OFFSET = 800

Segment #2

| ALC/LCT + H | ES#1 | ALC/LCT + H | ES#2 | ALC/LCT + H | ES#3 |

PRIORITY=HIGHEST
TSI=1 TOI=2,1
OFFSET = 0
PTS=X+1
LOCATION=yyyyy

PRIORITY=HIGHER
TSI=1 TOI=2,2
OFFSET = 100

PRIORITY=MEDIUM
TSI=1 TOI=2,3
OFFSET = 400

# FIG. 43

Transmission System | Receiver

J42020 — NTP Server

J42010 — Wall Clock-T

J42040 — Broadcast Transmitter

NTP Pkt

Broadcast Stream /Timing (2)

Seg.(A/V) — MPD

DASH Encoder / Timing (1)

J42030

J42050 — External HTTP Server / Timing (3)

IP / UDP Pkt

J42110 — IP / UDP Datagram Filter

NTP Pkt

J42150 — NTP Client

J42160 — Wall Clock-R

LCT pkt

J42120 — FLUTE+ Client

HTTP entity

Internal HTTP Server / Timing (4)

J42120

URL

Seg. (A/V)

DASH Client /Timing (5)

MPD — MPD Parser

MPD

MP timing(A/V)

URL(A/V)

Availability Timing(A/V)

Seg. Index

DASH Client Control

J42130 — HTTP Accesss Engine

Seg. (A/V)

Seg. Buffer Control

Seg.(V)

Seg. (V)

Seg. (A)

Seg. Buffer

Seg. (A)

Media Engine (A) — Media Output (A)

Seg. Buffer

Media Engine (V) — Media Output (V)

EP 3 148 196 A1

106

# FIG. 44

EP 3 148 196 A1

# FIG. 45

EP 3 148 196 A1

# FIG. 46

(1) Encoder - DASH MP timeline (Wall Clock-T)

(2) Broadcast Stream timeline (Wall Clock-T)

(3) External Sever - Availability timeline (Wall Clock-T)

(4) Internal Server - Availability timeline (Wall Clock-R)

(5) DASH Client - DASH MP timeline (Wall Clock-R)
: shortest end-to-end delay

(5) DASH Client - DASH MP timeline (Wall Clock-R)
: synchronizes to other clients

Availability start time-T

Period start

Seg.(A1/V1) start time
Seg.(A2/V2) start time
Seg.(A3/V3) start time

encoding

Seg.(A1) Seg.(A2) Seg.(A3)
Seg.(V1) Seg.(V2) Seg.(V3)

Seg.(A1) duration

Time shift buffer depth

Seg.(A1) Seg.(A2) Seg.(A3)
Seg.(V1) Seg.(V2) Seg.(V3)

MPD availability timeline

BT ≥ (representation@bandwidth * MPD@minBufferTime) / practical network bandwidth

BT (A)

Seg.(V1) reception
Seg.(V2) reception
Seg.(V3) reception

Seg.(A1) Seg.(A2) Seg.(A3)
Seg.(V1) Seg.(V2) Seg.(V3)

Availability start time-R

Const. Delay

Channel change

Period start
Seg.(A2) start time
Suggested presentation delay

Period start
Seg.(V3) start time
Suggested presentation delay

Seg.(A2) Seg.(A3)
Seg.(V3)

# FIG. 47

# FIG. 48

A1/V1 PTS
A2/V2 PTS
A3/V3 PTS

Seg.(A1) | Seg.(A2) | Seg.(A3) · · ·
Seg.(V1) | Seg.(V2) | Seg.(V3) · · ·

(1) Encoder - DASH MP timeline (Wall Cock-T)

Seg.(A1) | Seg.(A2) | Seg.(A3) · · ·
Seg.(V1) | Seg.(V2) | Seg.(V3) · · ·

(2) Broadcast Stream timeline (Wall Cock-T)

Seg.(A2/V2) reception
Seg.(A3/V3) reception

Seg.(A1) | Seg.(A2) | Seg.(A3) · · ·
Seg.(V1) | Seg.(V2) | Seg.(V3) · · ·

Const. Delay

Seg.(A1/V1) reception

(4) Buffer timeline (Wall Clock-R)

Seg.(A3) · · ·
Seg.(V3) · · ·

(5) DASH Client - DASH MP timeline (Wall Cock-R)
: shortest end-to-end delay/fastest channel change

Const. Delay

Suggested presentation delay → Seg.(A3) · · ·
Suggested presentation delay → Seg.(V3) · · ·

Channel change

(5) DASH Client - DASH MP timeline (Wall Cock-R)
: synchronizes to other clients

EP 3 148 196 A1

# FIG. 49

EP 3 148 196 A1

# FIG. 50

EP 3 148 196 A1

# FIG. 51

**(a)**

Start

↓

Generate segment for transmitting
portion of data included in media — JS51010

↓

Divide segment into one or more data units
and generate payload including header
and payload including all or
some data of data unit — JS51020

↓

Generate broadcast signal including packet
and transmit broadcast signal — JS51030

↓

End

**(b)**

Start

↓

Receive broadcast signal including
one or more packets — JS51110

↓

Parse one or more packets — JS51120

↓

Extract one or more data units from
one or more packets and generate segment
for transmitting portion of data included
in media — JS51130

↓

Decode media using segment — JS51140

↓

End

EP 3 148 196 A1

# FIG. 52

(a)                                                (b)

EP 3 148 196 A1

# FIG. 53

| | | | | | | |
|---|---|---|---|---|---|---|
| **Applications** | | | | | | |
| | | | HTML5 | | | |

<table>
<tr><td rowspan="7">Future Extensibility</td><td>Signaling</td><td>ESG</td><td>NRT Content</td><td colspan="2">Video/Audio/CC</td><td>ESG</td><td>Signal-ing</td><td>NRT Contnet</td></tr>
<tr><td></td><td></td><td></td><td colspan="2">DASH (ISO BMFF)</td><td colspan="3" rowspan="2">HTTP(5)</td></tr>
<tr><td colspan="2">Application Layer Transport Protocol</td><td></td><td></td></tr>
<tr><td colspan="4">UDP</td><td></td><td colspan="3">TCP</td></tr>
<tr><td colspan="4">IP Multicast</td><td></td><td colspan="3">IP Unicast</td></tr>
<tr><td colspan="4">Broadcast PHY</td><td></td><td colspan="3">Broadcast PHY</td></tr>
</table>

# FIG. 54

Service

C61100

C61300

Signaling Encoder → Delivery Object Generator

Transmitter — C61500

# FIG. 55

Broadcast signal

C62100

Signaling Parser ← → Delivery Object processor — C62300

Media Decoder — C62500

## FIG. 56

## FIG. 57

# FIG. 58

Service

↓

Generate at least one delivery object included at least one content component of service and recovered individually — CS61100

↓

Generate signaling information for providing discovery and acquisition of service and at least one content component — CS61300

↓

Transmit at least one delivery object and signaling information through unidirectional channel — CS61500

# FIG. 59

Broadcast signal

↓

| Extract signaling information for providing discovery and acquisition of at least one content component of service | — CS62100 |

↓

| Recover at least one delivery object | — CS62300 |

↓

| Decode at least one delivery object | — CS62500 |

# FIG. 60

C62300

Broadcast signal

↓

| Determine representation to be present and request segment related to delivery object | CS62310 |

↓

| Map representation of signaling information and tsi of content component | CS62330 |

↓

| Recover at least one delivery object from the transport session based on the tsi. | CS62350 |

# EP 3 148 196 A1

## INTERNATIONAL SEARCH REPORT

| | International application No. |
|---|---|
| | **PCT/KR2015/005085** |

**A. CLASSIFICATION OF SUBJECT MATTER**

*H04N 21/234(2011.01)i, H04N 21/236(2011.01)i*

According to International Patent Classification (IPC) or to both national classification and IPC

**B. FIELDS SEARCHED**

Minimum documentation searched (classification system followed by classification symbols)
H04N 21/234; H04N 7/015; G06F 15/16; H04H 20/30; H04N 7/08; G10L 19/008; G10L 19/20; H04N 21/236

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: broadband, broadcast, signaling parser, delivery object processor, media decoder, DASH, Segment URL, unidirectional channel(unidirectional channel)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2010-0081714 A (LG ELECTRONICS INC.) 15 July 2010 See paragraphs [0147]-[0187]; claims 9, 14; and figures 13-15. | 1,12 |
| A | | 2-11,13-15 |
| Y | KR 10-2008-0084756 A (LG ELECTRONICS INC.) 19 September 2008 See paragraphs [0056]-[0068]; claim 15; and figures 1-2. | 1,12 |
| A | US 2013-0103849 A1 (QUALCOM INCORPORATED) 25 April 2013 See paragraphs [0067]-[0081]; claims 16-23; and figure 3. | 1-15 |
| A | KR 10-2008-0005063 A (SAMSUNG ELECTRONICS CO., LTD.) 10 January 2008 See paragraphs [0109]-[0120]; claims 25-31; and figure 15. | 1-15 |
| A | WO 2013-042902 A1 (LG ELECTRONICS INC.) 28 March 2013 See paragraphs [0713]-[0718]; claims 1-5; and figure 36. | 1-15 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 AUGUST 2015 (30.08.2015) | **31 AUGUST 2015 (31.08.2015)** |

| Name and mailing address of the ISA/**KR** | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

**122**

INTERNATIONAL SEARCH REPORT
Information on patent family members

International application No.

**PCT/KR2015/005085**

| Patent document cited in search report | Publication date | Patent family member | Publication date |
|---|---|---|---|
| KR 10-2010-0081714 A | 15/07/2010 | NONE | |
| KR 10-2008-0084756 A | 19/09/2008 | CN 101636917 A | 27/01/2010 |
| | | CN 101636917 B | 24/07/2013 |
| | | CN 101636918 A | 27/01/2010 |
| | | CN 101636919 A | 27/01/2010 |
| | | CN 101636919 B | 30/10/2013 |
| | | EP 2130304 A1 | 09/12/2009 |
| | | EP 2137824 A1 | 30/12/2009 |
| | | EP 2137825 A1 | 30/12/2009 |
| | | JP 04851598 B2 | 11/01/2012 |
| | | JP 05161893 B2 | 13/03/2013 |
| | | JP 2010-521703 A | 24/06/2010 |
| | | JP 2010-521866 A | 24/06/2010 |
| | | JP 2010-521867 A | 24/06/2010 |
| | | KR 10-1100214 B1 | 28/12/2011 |
| | | KR 10-2008-0084757 A | 19/09/2008 |
| | | US 2010-0087938 A1 | 08/04/2010 |
| | | US 2010-0106271 A1 | 29/04/2010 |
| | | US 2010-0111319 A1 | 06/05/2010 |
| | | US 2014-0222440 A1 | 07/08/2014 |
| | | US 8712060 B2 | 29/04/2014 |
| | | US 8725279 B2 | 13/05/2014 |
| | | WO 2008-114982 A1 | 25/09/2008 |
| | | WO 2008-114984 A1 | 25/09/2008 |
| | | WO 2008-114985 A1 | 25/09/2008 |
| US 2013-0103849 A1 | 25/04/2013 | CN 103814562 A | 21/05/2014 |
| | | EP 2759113 A2 | 30/07/2014 |
| | | JP 2015-501090 A | 08/01/2015 |
| | | KR 10-2014-0063862 A | 27/05/2014 |
| | | WO 2013-044025 A2 | 28/03/2013 |
| | | WO 2013-044025 A3 | 27/06/2013 |
| KR 10-2008-0005063 A | 10/01/2008 | CN 101416444 A | 22/04/2009 |
| | | CN 101416444 B | 07/09/2011 |
| | | EP 2039068 A1 | 25/03/2009 |
| | | EP 2039068 A4 | 15/06/2011 |
| | | JP 05266214 B2 | 21/08/2013 |
| | | JP 2009-543427 A | 03/12/2009 |
| | | MY 151577 A | 13/06/2014 |
| | | US 2008-0008175 A1 | 10/01/2008 |
| | | US 8374176 B2 | 12/02/2013 |
| | | WO 2008-004826 A1 | 10/01/2008 |
| WO 2013-042902 A1 | 28/03/2013 | CA 2843583 A1 | 28/03/2013 |
| | | CN 103733637 A | 16/04/2014 |
| | | KR 10-2014-0064761 A | 28/05/2014 |
| | | US 2014-0250479 A1 | 04/09/2014 |

Form PCT/ISA/210 (patent family annex) (July 2009)